# EUROPEAN PATENT APPLICATION

(11) **EP 3 270 037 A1**
(43) Date of publication of application: **17.01.2018**
(21) Application number: 16761733.1
(22) Date of filing: 08.03.2016
(51) Int. Cl.: F21S 2/00, F21V 3/00, F21V 3/04, F21V 9/08, F21V 9/16, G02F 1/1333, G02F 1/13357, F21Y 115/10

(54) **LIGHTING DEVICE, DISPLAY DEVICE, AND TELEVISION RECEIVING DEVICE**

(30) Priority: 09.03.2015 JP 2015046060; 17.03.2015 JP 2015053207; 01.04.2015 JP 2015074899; 03.04.2015 JP 2015076774; 24.09.2015 JP 2015186869
(71) Applicant: Sharp Kabushiki Kaisha, Sakai City, Osaka 590-8522 (JP)
(72) Inventor: KAMADA, Kentaro, Osaka 590-8522 (JP); GOTOU, Akira, Osaka 590-8522 (JP); MATSUI, Keitaro, Osaka 590-8522 (JP); HARADA, Masanobu, Osaka 590-8522 (JP); SHIMIZU, Takaharu, Osaka 590-8522 (JP)
(74) Representative: Müller Hoffmann & Partner
(86) International application number: PCT/JP2016/057072
(87) International publication number: WO 2016/143765

(57) **Abstract**

A lighting device 12 includes a light source 17, a light guide plate 19, a reflection member 20, a wavelength converting member 150, and a complementary color member 22. The light source 17 is configured to emit primary light rays in a predefined wavelength range. The light guide plate 19 includes a light entering surface 19c through which the primary light rays enter, a light exiting surface 19a through which the primary light rays exit, and an opposite surface 19b disposed on a side opposite from the light exiting surface 19a. The reflection member 20 is disposed to cover the opposite surface 19b. The wavelength converting member 150 contains phosphors configured to emit secondary light rays in a wavelength range different from the wavelength range when excited by the primary light rays. The wavelength converting member 150 is configured to pass some of the primary light rays. The complementary color member 22 is disposed to cover a space formed between the light source 17 and a light entering end 190 at least from a light exiting surface 19a side or cover the light entering end 190 at least from an opposite surface 19b side. The complementary color member 22 exhibits a color that makes a complementary color pair with a reference color exhibited by the primary color rays.

## Description

### TECHNICAL FIELD

The present invention relates to a lighting device, a display device, and a television device.

### BACKGROUND ART

A liquid crystal display device includes a liquid crystal panel and a lighting device (a backlight unit) for supplying light to the liquid crystal panel. An edge light type backlight unit (or a side light type backlight unit) has been known for such a backlight unit. In such a backlight unit, light emitting diodes (LEDs) are disposed along an end surface of a light guide plate. Such a backlight unit is disposed behind the liquid crystal panel to supply planar light to the back surface of the liquid crystal panel.

Recently, a lighting device including a wavelength converting member as an optical member that covers a light guide plate is present (e.g., Patent Document 1). The wavelength converting member is a phosphor sheet containing quantum dot phosphors. In such a lighting device, some of primary light rays emitted by LEDs (e.g., blue light rays) which reach the phosphor sheet excite the quantum dot phosphors in the phosphor sheet and the rest of the light rays pass through the phosphor sheet. When the quantum dot phosphors are excited by the primary light rays, the quantum dot phosphors emit secondary light rays with wavelengths different from those of the primary light rays (e.g., green light rays and red light rays). The secondary light rays exiting from the phosphor sheet are mixed with the primary light rays that pass through the film, resulting in emission of white light from the phosphor sheet.

An edge light type lighting device described in Patent Document 2 is present. The lighting device includes a wavelength converting member that is a phosphor tube including quantum dot phosphors dispersed in a resin and sealed in a tubular container made of glass. Such a lighting device has a configuration in which the phosphor tube is disposed between LEDs and an end surface (a light entering surface) of a light guide plate to which light enters. The phosphor tube is configured to convert primary light emitted by the LEDs (e.g., blue light) into secondary light (green light and red light) and to direct the secondary light to the light entering surface of the light guide plate.

A liquid crystal display device described in Patent Document 3 includes a liquid crystal panel and a direct type backlight unit configured to irradiate the liquid crystal panel with light. The direct type backlight unit includes a light source, a chassis, and a light reflection sheet. The chassis holds the light source therein. The light reflection sheet is configured to reflect light from the light source. The light reflection sheet includes a sheet bottom and sheet slopes. The sheet bottom extends along a front surface of a bottom plate of the chassis. The sheet slopes extend from edges of the sheet bottom at an angle of the sheet bottom. The light reflection sheet includes boundary portions along boundaries between the sheet bottom and the sheet slopes including the boundaries. The boundary portions have light reflectivity higher than that of adjacent portions adjacent to the boundary portions and away from the boundaries. The boundaries are cranked in a plan view.

### RELATED ART DOCUMENT

### Patent Document

Patent Document 1: Japanese Translation of PCT international Application Publication No. 2013-544018
Patent Document 2: Japanese Unexamined Patent Publication No. 2014-225379
Patent Document 3: Japanese Patent Publication No. 5292476

### DISCLOSURE OF THE PRESENT INVENTION

### Problem to be Solved by the Invention

In the edge light type lighting device using the phosphor sheet, an intensity of light is the highest around the LEDs. When primary light rays are directed to an end of the phosphor sheet near the LEDs, a large number of the primary light rays without the wavelength conversion exit from the end. For example, if a space is provided between the LEDs and the end surface (the light entering surface) of the light guide plate opposed to the LEDs, some of the light rays emitted by the LEDs (the primary light) do not enter the light guide plate and travel toward the end of the phosphor sheet through the space. A rate of such rays of the primary light is higher. If the end of the reflection sheet placed under the light guide plate is arranged near the LEDs, the light emitted by the LEDs (the primary light) may enter the light guide plate but some of the light rays may be reflected by the end of the reflection sheet to rise. The rays of the light pass through the light guide plate and travel to the end of the phosphor sheet. A rate of such rays of the primary light is higher. Namely, when the primary light is directed to the end of the phosphor sheet, light tinted with a color of the primary light (e.g., blue light) may be emitted from an end of the lighting device rather than a center portion.

In the edge light type lighting device including the phosphor tube, some of the light rays emitted by the LEDs (the primary light) do not pass through the quantum dot phosphors and pass only a wall of the tubular container which surrounds the quantum dot phosphors. The phosphor tube includes an elongated transparent portion on the front side of the lighting device and an elongated transparent portion on the rear side of the lighting device. The elongated portions include only the wall of the tubular container and do not include the quantum dot phosphors in the light emitting direction of the LEDs (the light axis direction). If the primary light is directed to the portion of the phosphor tube on the front side not including the quantum dot phosphors, the primary light rays are less likely to be converted to light rays with other wavelengths by the phosphor tube and the primary light rays exit through the end near the light entering surface of the light guide plate. If the primary light rays are directed to the portion of the phosphor tube on the rear side not including the quantum dot phosphors, the primary light rays are less likely to be converted to light rays with other wavelengths by the phosphor tube and are reflected by the end of the reflection sheet to rise. The primary light passes through the light guide plate and exits from the end near the light entering surface of the light guide plate without the conversion. In the edge light type lighting device including the phosphor tube, when the light without the wavelength conversion by the phosphor tube passing through the phosphor tube is directed to the end of the light guide plate, planar light exiting from an end of the lighting device is tinted a color of the primary light rays (e.g., blue light rays) more than light exiting from a center portion of the lighting device.

If the phosphor sheet described in the Patent Document 1 (a remote phosphor film) is used in the edge light type backlight device, the following problem may occur. The edge light type backlight includes a light source and a light guide plate that is configured to direct the light from the light source. The light guide plate includes a light entering end surface, a non-light-entering end surface, and a light exiting plate surface. The light from the light source directly enters the light entering end surface but the light from the light source do not directly enter the non-light-entering end surface. The light exits through the light exiting plate surface. Some of the light rays exiting through the light exiting plate surface of the light guide plate are not converted to light rays with other wavelengths. Such light rays may not be included in light exiting from a display backlight unit. Such light rays may be retroreflected and returned to the light guide plate and included in the light exiting from the display backlight unit. The number of reflection tends to be smaller in the peripheral portion of the display backlight unit than the center portion of the display backlight unit and thus the number of times that the retroreflected rays of light pass through the remote phosphor film. Namely, the retroreflected rays of light are less likely to be converted to light rays with other wavelengths. Furthermore, some of light rays traveling through the light guide plate may not exit through the light exiting plate surface and may exit through the non-light-exiting end surface of peripheral end surface of the light guide plate. Therefore, a color of light exiting from peripheral portion of the edge light type backlight unit tends to be different from a color of light exiting from a center portion of the backlight unit.

Furthermore, not only in the direct type backlight unit described in Patent Document 3 but also in the edge light type backlight unit, a gap is more likely to be present between components of the backlight unit in the peripheral portion. Therefore, light may leak through the gap. In a configuration including a light source configured to emit a single color of light and an optical member including a wavelength converting sheet, a large number of light rays in the single color of the light source may be included in the light leaking through the gap between the components in the peripheral portion. The optical member is configured to exert optical effects on the light from the light source. The wavelength converting sheet is configured to convert the light rays from the light source to light rays with other wavelengths. According to the configuration, in the peripheral portion of the backlight unit, the light tinted with a color similar to the single color of the light source may be observed.

One object of the present invention is to provide a technology for reducing unevenness in color in an edge light type lighting device including a wavelength converting member, especially, reducing unevenness in color caused by exiting light more tinted with primary light from a light source in an end than in a center portion.

### First Means for Solving the Problem

A lighting device according to the present invention includes a light source, a light guide plate, a wavelength converting member, and a complementary color member. The light source is configured to emit primary light rays in a predefined wavelength range. The light guide plate includes a light entering surface, a light exiting surface, and an opposite surface. The primary light rays enter the light guide plate through the light entering surface and exit through the light exiting surface. The opposite surface is on a side opposite from the light exiting surface. The wavelength converting member contains phosphors that are configured to emit secondary light rays in a wavelength range different from the wavelength range of the primary light rays when excited by the primary light rays. The wavelength converting member is configured to pass some of the primary light rays. The complementary color member is disposed to cover a space between the light source and a light entering end of the light guide plate that includes the light entering surface at least from a light exiting surface side or the light entering end at least from an opposite surface side. The complementary color member exhibits a color that makes a complementary color pair with a reference color that is exhibited by the primary light rays. Because the lighting device have such a configuration, color unevenness such that an end is tinted a color of the primary light rays from the light source more than a center portion can be reduced.

The following configurations are preferable embodiments of the first means.

The lighting device may further include a frame that is held against a peripheral portion of the light guide plate including the light entering end from the light exiting surface side to cover the light source and the light entering end from the light entering surface side. The complementary color portion may be disposed on a surface of the frame facing the light entering surface.

In the lighting device, the complementary color member may be formed across the space between the light source and the light entering end.

In the lighting device, the frame may be white in color.

The lighting device may further include a reflection member that is disposed to cover the opposite surface and configured to reflect light rays including the primary light rays. The complementary color member may be disposed at least on an end of the reflection member on a light source side.

In the lighting device, the reflection member may include a reflection body and a reflection extended portion. The reflection body may overlap the opposite surface. The reflection extended portion may extend from the reflection body to the light source side and project outer than the opposite surface. The complementary color member may be disposed over an entire area of the reflection extended portion and an end of the reflection bod on the light source side.

In the lighting device, the reflection member may be white in color.

In the lighting device, the light guide plate may include a light source non-opposed surface that is not opposed to the light source. The lighting device may further include an opposed member that is opposed to the light source non-opposed surface. The lighting device may further include a second complementary color member that is disposed to cover a second space formed between the opposed member and a light source non-opposed end of the light guide plate including the light source non-opposed surface at least from the light exiting surface side or to cover the light source non-opposed end at least from the opposite surface side. The second complementary color member may exhibit a color that makes a complementary color pair with a reference color that is exhibited by the primary light rays.

In the lighting device, the light source non-opposed surface may include an opposite-side light source non-opposed surface on a side opposite from the light entering surface.

In the lighting device, the primary light rays from the light source may be blue light rays. The wavelength converting member may contain at least one of green phosphors, red phosphors, and yellow phosphors. The green phosphors may be configured to emit green light rays as the secondary light rays when excited by the blue light rays, which are the primary light rays. The red phosphors may be configured to emit red light rays as the secondary light rays when excited by the blue light, which are the primary light rays. The yellow phosphors may be configured to emit yellow light rays as the secondary light rays when excited by the blue light rays, which are the primary light rays. The complementary color member may exhibit yellow.

In the lighting device, the wavelength converting member may be disposed to cover the light exiting surface. In the lighting device, the primary light rays emitted by the light source may enter the light guide plate through the light entering surface and transmit through the light guide plate. The primary light rays may be reflected by the reflection member while transmitting through the light guide plate. The primary light rays may exit the light guide plate through the light exiting surface. The light rays that have exited through the light exiting surface may converted to light rays with other wavelengths by the phosphors contained in the wavelength converting member. The wavelength converting member may emit secondary light rays obtained through the wavelength conversion. Some of the light rays that have exited through the light exiting surface pass through the wavelength converting member without the wavelength conversion. If a gap is created between an end of the light guide plate including the light entering surface and the reflection member, the light rays passing through the gap may be reflected by the reflection member. The reflected light rays may exit toward the wavelength converting member without totally reflected by the light exiting surface. Furthermore, some of the light rays emitted by the light source may travel toward the wavelength converting member without entering the light guide plate through the light entering surface. In any of the above cases, the light rays passing through an edge portion of the wavelength converting member closer to the light source tends to include a higher percentage of the light rays that are not the light rays with other wavelengths obtained through the wavelength conversion by the phosphors. Therefore, a color of the light rays that have passed through the edge portion of the wavelength converting member may be different from a color of the light rays that have passed through a center portion of the wavelength converting member. The complementary color member may be disposed over the light source and the end of the light guide plate including the light entering surface at least one of the light exiting surface side and the opposite plate surface side. The complementary color member may exhibit the color that makes the complementary color pair with the color of the light rays from the light source. According to the configuration, the light rays from the light source may be reduced by the complementary color member to a certain extent and become whitish. Even if leak of light occur, the color of the primary light rays included in the leak is faded to make an overall color of the leak of light whitish. Therefore, a difference in color between the light rays that have passed through the end portion of the wavelength converting member closer to the light source and the light rays that have passed through the center portion of the wavelength converting member is less likely to occur. Namely, the color unevenness can be reduced.

In the lighting device, the wavelength converting member may include a wavelength converting portion and an elongated holding portion. The wavelength converting portion may contain the phosphors. The holding portion may surround and hold the wavelength converting portion. The holding portion may have light transmissivity. The wavelength converting member may be disposed between the light source and the light entering surface.

### Second Means for Solving the Problem

A lighting device according to the present invention includes, as a different embodiment, a light source, a light guide plate, a plate surface wavelength converting member, an end surface wavelength converting member, and an end surface reflection member. The light guide plate includes a light entering end surface, a non-light-entering end surface, and a light exiting plate surface. Light rays from the light source enter the light guide plate through the light entering end surface and exit the light guide plate through the light exiting plate surface. The light entering end surface is at least one of peripheral surfaces of the light guide plate. The light rays from the light source do not directly enter the light guide plate through the non-light-entering surface. The non-light-entering end surface is one of the peripheral surfaces of the light guide plate excluding the light entering end surface. The light exiting plate surface is one of the plate surfaces. The plate surface wavelength converting member overlaps the light exiting plate surface of the light guide plate. The plate surface wavelength converting member contains phosphors that are configured to convert the light rays from the light source to light rays with other wavelengths. The end surface wavelength converting member overlaps at least a portion of the non-light-entering end surface of the light guide plate. The end surface wavelength converting member contains phosphors that are configured to convert the light rays from the light source to light rays with other wavelengths. The end surface reflection member is disposed on a side opposite from a non-light-entering end surface side relative to the end surface wavelength converting member to overlap the end surface wavelength converting member. The end surface reflection member is configured to reflect light rays that have passed through the end surface wavelength converting member.

According to the configuration, the light rays emitted by the light source enter the light guide plate through the light entering end surface of the peripheral surfaces, transmit through the light guide plate, and exit the light guide plate through the light exiting plate surface. The light rays that have exited through the light exiting plate surface are converted to the light rays with other wavelengths by the phosphors contained in the plate surface wavelength converting member that is placed over the light exit plate surface. Some of the light rays that have exited the light guide plate through the light exiting plate surface may not be converted to the light rays with other wavelengths by the plate surface wavelength converting member and included in emitting light from the lighting device. The light rays may be retroreflected and returned to the light guide plate and then included in the emitting light from the lighting device. The number of times of reflection tends to be smaller in the peripheral portion of the lighting device in comparison to the center portion of the lighting device. Therefore, the retroreflected light rays pass through the plate surface wavelength converting member for the smaller number of times and thus the retroreflected light rays are less likely to be converted to light rays with other wavelengths. Some of the light rays transmitting through the light guide plate do not exit the light guide plate through the light exiting plate surface. Some of the light rays may exit the light guide plate through the non-light-entering end surface of the peripheral surfaces of the light guide plate.

The end surface wavelength converting member is placed over at least one of the non-light-entering surface of the light guide plate. Therefore, the light rays in the peripheral portion of the light guide plate and exiting the light guide plate through the non-light-entering end surface are converted to the light rays with other wavelengths by the phosphors in the end surface wavelength converting member. Furthermore, the light rays that have passed through the end surface wavelength converting member are reflected by the end surface reflection member that is disposed on the side opposite from the non-light-entering end surface side relative to the end surface wavelength converting member. The light rays are returned to the end surface wavelength converting member and enter the light guide plate through the non-light-entering end surface and exit the light guide plate through the light exiting plate surface. The light rays in the peripheral portion of the light guide plate may be reflected for the smaller number of times during the retroreflection. However, the light rays are properly converted to light rays with other wavelengths by the end surface wavelength converting member after exited through the non-light-entering end surface and returned by the end surface reflection member so that the light rays do not exit from the non-light-entering end surface to the outside. According to the configuration, a difference in color of exiting light between the center portion of the lighting device and the peripheral portion of the lighting device is less likely to occur. The color unevenness can be reduced and the high light use efficiency can be achieved.

The following configurations are preferable embodiments of the second means.

The light guide plate may include a non-light-entering lateral end surface that may be one of the peripheral surfaces adjacent to the light entering end surface. The end surface wavelength converting member may overlap at least the non-light-entering lateral end surface. The end surface reflection member may overlap the end surface wavelength converting member on a side opposite from a non-light-entering lateral end surface side. More light rays among the light rays emitted by the light source, entering the light guide plate through the light entering end surface, and transmitting through the light guide plate may exit the light guide plate through the non-non-light-entering lateral end surface of the peripheral surfaces of the light guide plate adjacent to the non-light-entering lateral end surface. Because the end surface wavelength converting member is over at least the non-non-light-entering lateral end surface, the light rays that have emitted through the non-light-entering lateral end surface are efficiently converted to the light rays with other wavelengths by the end surface wavelength converting member. Furthermore, the end surface reflection member is over at least the end surface wavelength converting member on the side opposite from the non-light-entering lateral end surface side. Therefore, the light rays exiting through the non-light-entering lateral end surface can be reflected by the end surface reflection member and returned to the light guide plate. According to the configuration, the color unevenness is properly reduced and the high light use efficiency can be achieved.

The light guide plate may include a non-light-entering opposite end surface that may be one of the peripheral surfaces on a side opposite from the light entering end surface. The end surface wavelength converting member may overlap at least the non-light-entering opposite end surface. The end surface reflection member may overlap the end surface wavelength converting member on the side opposite from the non-light-entering end surface side. More light rays among the light rays emitted by the light source, entering the light guide plate through the light entering end surface, and transmitting through the light guide plate may exit the light guide plate through the non-non-light-entering opposite end surface of the peripheral surfaces of the light guide plate on the side opposite from the light entering end surface. Because the end surface wavelength converting member is over at least the non-non-light-entering opposite end surface, the light rays that have emitted through the non-light-entering opposite end surface are efficiently converted to the light rays with other wavelengths by the end surface wavelength converting member. Furthermore, the end surface reflection member is over at least the end surface wavelength converting member on the side opposite from the non-light-entering opposite end surface side. Therefore, the light rays exiting through the non-light-entering opposite end surface can be reflected by the end surface reflection member and returned to the light guide plate. According to the configuration, the color unevenness is properly reduced and the high light use efficiency can be achieved.

The end surface wavelength converting member may cover an entire area of the non-light-entering end surface of the light guide plate. The end surface reflection member may be disposed on a side opposite from the non-light-entering end surface side relative to an entire area of the end surface wavelength converting member to cover the entire area of the end surface wavelength converting member. More light rays among the light rays emitted by the light source, entering the light guide plate through the light entering end surface, and transmitting through the light guide plate may exit the light guide plate through the non-non-light-entering end surface of the peripheral surfaces of the light guide plate on the side opposite from the light entering end surface. Because the end surface wavelength converting member is over the entire area of the non-non-light-entering end surface, the light rays that have emitted through the non-light-entering end surface are efficiently converted to the light rays with other wavelengths by the end surface wavelength converting member. Furthermore, the end surface reflection member is over the entire area of the end surface wavelength converting member on the side opposite from the non-light-entering end surface side. Therefore, the light rays exiting through the non-light-entering end surface can be reflected by the end surface reflection member and returned to the light guide plate. According to the configuration, the color unevenness is properly reduced and the high light use efficiency can be achieved.

The lighting device may further include a plate surface reflection member opposed to an opposite plate surface on a side opposite from the light exiting plate surface of the light guide plate and configured to reflect light rays. According to the configuration, light rays traveling from a light exiting plate surface side to an opposite plate surface side during the transmission through the light guide plate may be reflected by the plate surface reflection member to the light exiting plate surface side. Therefore, efficiency in transmission of the light rays improves.

The end surface reflection member may be integrally formed with the plate surface reflection member. According to the configuration, the end surface reflection member and the plate surface reflection member are provided as a single component. Therefore, the number of components can be reduced. Furthermore, a gap is less likely to be created between the end surface reflection member and the plate surface reflection member. Therefore, the leak of light from the light guide plate is further less likely to occur.

The end surface wavelength converting member may be integrally formed with the non-light-entering end surface of the light guide plate. According to the configuration, an interface such as an air layer is less likely to be created between the non-light-entering end surface of the light guide plate and the end surface wavelength converting member. The light rays that have emitted through the non-light-entering end surface are less likely to be improperly refracted before reaching the end surface wavelength converting member. Therefore, the light rays that have exited the light guide plate through the non-light-entering end surface more properly pass through the end surface wavelength converting member. The wavelength converting efficiency further improves. This configuration is preferable for reducing the color unevenness.

The end surface wavelength converting member may be applied to a surface of the non-light-entering end surface of the light guide plate. According to the configuration, the end surface wavelength converting member is integrated with the non-light-entering end surface of the light guide plate without an interface such as an air layer.

The end surface wavelength converting member may be integrally formed with the end surface reflection member. According to the configuration, an interface such as an air layer is less likely to be crated between the end surface wavelength converting member. The light rays that have transmitted through the end surface wavelength converting member are less likely to be improperly refracted before reaching the end surface reflection member. Therefore, the light rays that have transmitted through the end surface wavelength converting member are more properly reflected by the end surface reflection member. The light use efficiency further improves.

The end surface wavelength converting member may be applied to a surface of the end surface reflection member. According to the configuration, the end surface wavelength converting member is integrated with the end surface reflection member without an interface such as an air layer. In comparison to a configuration in which the end surface wavelength converting member is applied to the non-light-entering end surface of the light guide plate and provided integrally with the non-light-entering end surface, the end surface wavelength converting member can be more easily provided.

The plate surface wavelength converting member and the end surface wavelength converting member may contain quantum dot phosphors as the phosphors. According to the configuration, the efficiency in the wavelength conversion by the plate surface wavelength converting member and the end surface wavelength converting member improves. Furthermore, the light rays obtained through the wavelength conversion have high purity.

### Third Means for Solving the Problem

A lighting device according to the present invention includes, as a different embodiment, a light source, a light guide plate, a reflection member, a wavelength converting member, and a first complementary color member. The light source is configured to emit primary light rays in a predefined wavelength range. The light guide plate includes a light entering surface, a light exiting surface, and an opposite surface. The light entering surface through which the primary light rays from the light source enter the light guide plate is opposed to the light source. The primary light rays entering through the light entering surface exit through the light exiting surface. The opposite surface is on a side opposite from the light exiting surface. The reflection member is disposed to cover the opposite surface and configured to reflect light rays. The wavelength converting member contains phosphors that are configured to emit secondary light rays in a wavelength range different from the wavelength range of the primary light rays when excited by the primary light rays. The wavelength converting member is disposed to cover the light exiting surface and configured to pass some of the primary light rays and to emit planar light. The first complementary color member is disposed between the opposite surface and the reflection member to cover an end of the light guide plate. The first complementary color member exhibits a color that makes a complementary color pair with a reference color exhibited by the primary color rays.

According to the above configuration, in the lighting device, a percentage of the light rays in a color that makes a complementary color pair with the reference color the is exhibited by the primary light rays can be increased and a percentage of the primary light rays can be reduced. Therefore, in the lighting device, the light rays included in the planar light emitted by the wavelength converting member in the peripheral portion is less likely to be tinted the color of the primary light rays more than the center portion.

The following configurations are preferable embodiments of the third means.

The first complementary color member may be disposed on a light source non-opposed end that is one of ends of the light guide plate other than a light entering end of the light guide plate including the light entering surface.

In the lighting device, the light source non-opposed end may include a light source non-opposed adjacent end that includes an adjacent end surface that is adjacent to the light entering surface.

In the lighting device, the first complementary color member may have light transmissivity and contain phosphors that are configured to emit the secondary light rays when excited by the primary light rays. With the first complementary color member, the primary light rays are efficiently converted to the secondary light. The percentage of the light rays that exhibit a color that makes a complementary color pair with the reference color exhibited by the primary light rays can be increased and the percentage of the primary light rays can be reduced.

In the lighting device, the first complementary color member may have light transmissivity. The first complementary color member may be configured to selectively absorb the primary light rays. With the first complementary color member, the primary light rays can be selectively absorbed and thus the percentage of the light rays that exhibit a color that makes a complementary color pair with the reference color exhibited by the primary light rays can be increased and the percentage of the primary light rays can be reduced.

In the lighting device, the primary light rays from the light source may be blue light rays. The wavelength converting member may contain at least green phosphors and red phosphors as the phosphors. The green phosphors may be configured to emit green light rays as the secondary light rays when excited by the blue light rays that are the primary light rays. The red phosphors may be configured to emit red light rays as the secondary light rays when excited by the blue light rays that are the primary light rays. The first complementary color member may exhibit yellow.

The lighting device may include a light source, a light guide plate, a wavelength converting member, and a second complementary color member. The light source may be configured to emit primary light rays in a predefined wavelength range. The light guide plate may include a light entering surface, a light exiting surface, and an opposite surface. The light entering surface through which the primary light rays from the light source enter may be opposed to the light source. The primary light rays that have entered through the light entering surface may exit through the light exiting surface. The opposite surface may be on a side opposite from the light exiting surface. The wavelength converting member may contain phosphors that are configured to emit secondary light rays in a wavelength range different from the wavelength range of the primary light rays when excited by the primary light rays. The wavelength converting member may be disposed to cover the light exiting surface and configured to pass some of the primary light rays and to emit planar light. The second complementary color member may be disposed between the opposite surface and the reflection member to cover an end of the light guide plate. The second complementary color member may exhibit a color that makes a complementary color pair with a reference color that is exhibited by the primary color rays.

According to the configuration, in the light exiting surface at the end of the light guide plate in the lighting device, a percentage of the light rays in a color that makes a complementary color pair with the reference color that is exhibited by the primary light rays can be increased and a percentage of the primary light rays can be reduced. Therefore, in the lighting device, the light rays included in the planar light emitted by the wavelength converting member in the peripheral portion is less likely to be tinted the color of the primary light rays more than the center portion.

The second complementary color member may be disposed on a light source non-opposed end among ends of the light guide plate other than a light entering end of the light guide plate that includes the light entering surface.

The light source non-opposed end may include a light source non-opposed adjacent end that may include an adjacent end surface that is adjacent to the light entering surface.

In the lighting device, the second complementary light member may have light transmissivity. The second complementary light member may contain phosphors that are configured to emit the secondary light rays when excited by the primary light rays. With the second complementary color member, the primary light rays can be efficiently converted to the secondary light rays. Therefore, a percentage of the light rays in a color that makes a complementary color pair with the reference color that is exhibited by the primary light rays can be increased and a percentage of the primary light rays can be reduced.

In the lighting device, the second complementary color member may have light transmissivity. The second complementary color member may be configured to selectively absorb the primary light rays. With the second complementary color member, the primary light rays can be selectively absorbed. Therefore, a percentage of the light rays in a color that makes a complementary color pair with the reference color that is exhibited by the primary light rays can be increased and a percentage of the primary light rays can be reduced.

In the lighting device, the primary light rays from the light source may be blue light rays. The wavelength converting member may contain at least green phosphors and red phosphors as the phosphors. The green phosphors may be configured to emit green light rays as the secondary light rays when excited by the blue light rays that are the primary light rays. The red phosphors may be configured to emit red light rays as the secondary light rays when excited by the blue light rays that are the primary light rays. The second complementary color member may exhibit yellow.

### Fourth Means for Solving the Problem

A lighting device according to the present invention includes, as a different embodiment, a light source, a chassis, a wavelength converting member, and a retroreflector. The chassis holds the light source and includes a light exiting portion having an opening on a light exiting side to open toward an outside. The wavelength converting member is disposed to cover the light exiting portion and contains phosphors for converting light rays from the light source to light rays with other wavelengths. The retroreflector is disposed to at least partially overlap a peripheral portion of the wavelength converting member but not a center portion of the wavelength converting member when the wavelength converting member is sectioned into the center portion and the peripheral portion. The retroreflector is configured to retroreflect some of the light rays to a side opposite from the light exiting side.

According to the configuration, the light rays emitted by the light source are converted to light rays with other wavelengths by the phosphors contained in the wavelength converting member disposed to cover the light exiting portion of the chassis that holds the light source. The light exiting portion of the chassis opens toward the outside. In the peripheral portion of the lighting device, a gap is more likely to be created between components of the lighting device. Light may leak through the gap. The retroreflector is disposed to at least partially overlap the peripheral portion of the wavelength converting member although the retroreflector does not overlap the center portion of the wavelength converting member. Therefore, some of the light rays in the peripheral portion can be retroreflected to the side opposite from the light exiting side by the retroreflector. The light rays that are retroreflected to the side opposite from the light exiting side are more likely to pass through the wavelength converting member and more likely to be converted to light rays with other wavelengths. Therefore, even if the light leaks through the gap, emitting light from the peripheral portion of the lighting device is less likely to be tinted a color similar to the color of the light rays from the light source and thus the color unevenness can be reduced.

The following configurations are preferable embodiments of the fourth means.

The retroreflector may be disposed to overlap the wavelength converting member on the light exiting side. According to the configuration, the light rays that have passed through the wavelength converting member and have been retroreflected by the retroreflector pass through the wavelength converting member immediately after the retroreflection. Therefore, the light rays pass through the wavelength converting member for the larger number of times and thus the wavelength conversion are actively performed. This configuration is preferable for reducing the color unevenness.

The lighting device may further include a positioning portion for positioning the wavelength converting member and the retroreflector. The wavelength converting member may include a first mating positioning portion that contact the positioning portion. The retroreflector may include a second mating positioning portion that is disposed to correspond with the first mating portion and to contact the positioning portion. According to the configuration, the wavelength converting member and the retroreflector are positioned by the first mating positioning portion and the second mating positioning portion that contact the common positioning portion. High accuracy is achieved in positioning of the retroreflector relative to the wavelength converting member and the structures are simplified.

The retroreflector may contain light scattering particles for reflecting and scattering light rays. By reflecting and scattering the light rays in the peripheral portion of the wavelength converting member by the light scattering particles contained in the retroreflector, some of the light rays are retroreflected to the side opposite from the light exiting side. According to the configuration, the color unevenness resulting from leak of light through a gap between components of the lighting device can be properly reduced. The light scattering particles are less likely to absorb the light rays and retroreflect some of the light rays to the side opposite from the light exiting side. Therefore, high light use efficiency can be achieved and chronological deterioration in performance is less likely to occur.

The retroreflector may include a refractive optical component for refracting light rays. The light rays in the peripheral portion of the wavelength converting member can be refracted by the refractive optical component in the retroreflector and some of the light rays can be retroreflected to the side opposite from the light exiting side. According to the configuration, the color unevenness resulting from leak of light trough a gap between components of the lighting device can be properly reduced. Furthermore, the refractive optical component refracts the light rays without absorbing and retroreflects some of the light rays to the side opposite from the light exiting side. Therefore, high light use efficiency can be achieved and chronological deterioration in performance is less likely to occur.

The lighting device may further include a light guide plate that is disposed on a side opposite from the light exiting side relative to the wavelength converting member. The light guide plate may include a light entering end surface and a light exiting plate surface. The light entering end surface may be one of end surfaces of the light guide plate through which the light rays from the light source enter. The light exiting plate surface may be one of plate surfaces of the light guide plate through which light rays exit. The light rays emitted by the light source enter the light guide plate through the light entering end surface, transmit through the light guide plate, and exit through the light exiting plate surface. Because the wavelength converting member is disposed on the light exiting side relative to the light guide plate, the light rays that have emitted through the light exiting plate surface are converted to light rays with other wavelengths by the phosphors contained in the wavelength converting member. According to the edge light type lighting device, in comparison to a direct type lighting device including multiple light sources, the number of light sources can be reduced and sufficiently high evenness can achieved in brightness of emitting light.

The lighting device may include a frame that supports an outer edge portion of the light guide plate from the light exiting side. The retroreflector may include a portion that overlaps the frame and a portion that is disposed inner than an inner edge of the frame. The outer edge portion of the light guide plate may be supported by the frame from the light exiting side. The retroreflector may include the portion that overlaps the frame and the portion that is disposed inner than the inner edge of the frame. Therefore, some of the light rays inner than the inner edge of the frame can be retroreflected to the side opposite from the light exiting side by the retroreflector. The light rays around the peripheral portion of the wavelength converting member can be efficiently retroreflected. The color unevenness resulting from leak of light through a gap between the frame and the light guide plate or a gap between the frame and the wavelength converting member can be properly reduced.

The end surfaces of the light guide plate excluding the light entering end surface may be configured as non-light-entering end surfaces through which the light rays from the light source do not directly enter. The retroreflector may be disposed to overlap at least sections of the peripheral portion of the wavelength converting member parallel to the non-light-entering end surfaces. The light rays emitted by the light source, entering the light guide plate through the light entering end surface, and transmitting through the light guide plate tend to exit the light guide plate through the non-light-entering end surfaces among the end surfaces excluding the light entering end surface. Such light rays may leak through a gap that is created between components of the lighting device. Because the retroreflector is disposed to overlap at least the sections of the peripheral portion of the wavelength converting member parallel to the non-light-entering end surfaces, the retroreflector can retroreflect some of the light rays at least around the sections of the peripheral portion of the wavelength converting member parallel to the non-light-entering end surfaces to the side opposite from the light exiting side. Therefore, the color evenness resulting from the leak of light that includes the light rays exiting the light guide plate through the non-light-entering end surfaces thought the gap can be properly reduced.

The chassis may include a bottom that is disposed on a side opposite from a light emitting surface side of the light source. The lighting device may further include a reflection member that is configured to reflect light rays from the light source. The reflection member may include at least a bottom-side reflecting portion and a projected reflecting portion. The bottom-side reflecting portion may be disposed along the bottom. The projected reflecting portion may project from the bottom-side reflecting portion to the light exiting side. The wavelength converting member may be disposed opposite and away from the light emitting surface of the light source on the light exiting side. The retroreflector may be disposed outer than an outer edge or the projected reflecting portion not to overlap the projected reflecting portion. According to the configuration, the light rays emitted by the light source that is held in the chassis may be reflected by the bottom-side reflecting portion and the projected reflecting portion of the reflection member and converted to light rays with other wavelengths by the phosphors contained in the wavelength converting member that is disposed opposite and away from the light emitting surface of the light source. Then, the light rays may exit from the lighting device. According to such a direct type lighting device, the light rays emitted by the light source exit without passing through the components such as a light guide plate included in the edge light type lighting device. Therefore, high light use efficiency can be achieved.

The retroreflector may be disposed outer than the outer edge of the projected reflecting portion not to overlap the projected reflecting portion. Some of the light rays that have passed through the wavelength converting member may not be included in light exiting from the lighting device. Some of the light rays may be retroreflected and returned to the reflection member and then included in the light exiting from the lighting device. The light lays tend to be retroreflected for the larger number of times in the peripheral portion of the reflection member in which the projected reflecting portions are disposed than in the center portion in which the bottom-side reflecting portion of the reflection member is disposed. The retroreflected light rays in the peripheral portion pass through the wavelength converting member for the larger number of times. Namely, the retroreflected light rays in the peripheral portion are more likely to be converted to the light rays with other wavelengths. The retroreflector may be disposed outer than the outer edges of the projected reflecting portion not to overlap the projected reflecting portion. Therefore, the light rays reflected by the projected reflecting portion are less likely to be retroreflected for the excessive number of times.

The retroreflector may be disposed to overlap the peripheral portion of the wavelength converting member for an entire periphery. According to the configuration, some of the light rays in the peripheral portion of the wavelength converting member can be retroreflected to the side opposite from the light exiting side by the retroreflector for the entire periphery. Therefore, the color unevenness resulting from the leak of light through a gap between components of the lighting device can be reduced regardless of a position of the gap with respect to the peripheral direction.

The light source may be configured to emit blue light rays. The wavelength converting member may contain at least either a combination of green phosphors an red phosphors or yellow phosphors as the phosphors. The green phosphors may be configured to convert the blue light rays to green light rays through wavelength conversion. The red phosphors may be configured to convert the blue light rays to red light rays through wavelength conversion. The yellow phosphors may be configured to convert the blue light rays to yellow light rays through wavelength conversion. The blue light rays emitted by the light source are converted to the green light rays and the red light rays if the green phosphors and the red phosphors are contained in the wavelength converting member. The blue light rays emitted by the light source are converted to the yellow light rays if the yellow phosphors are contained in the wavelength converting member. If a gap is created between components of the lighting device in the peripheral portion, the blue light rays may leak through the gap without the wavelength conversion. The exiting light rays from the peripheral portion of the lighting device may become more bluish in comparison to exiting light rays from the center portion of the lighting device. The retroreflector can retroreflect some of the light rays around the peripheral portion of the wavelength converting member to the side opposite from the light exiting side. The retroreflected light rays pass through the wavelength converting member again and thus the wavelength conversion is actively performed. Therefore, even if the light rays leak through the gap, the exiting light from the peripheral portion of the lighting device is less likely to become bluish and thus the color unevenness can be reduced.

The wavelength converting member may contain quantum dot phosphors as the phosphors. According to the configuration, higher efficiency can be achieved in the wavelength converting by the wavelength converting member. Furthermore, the light rays obtained through the wavelength conversion have high color purity.

A display device according to the present invention includes the lighting device according to any one of the first to the fourth means and a display panel that is configured to display an image using light from the lighting device.

The display panel may be a liquid crystal panel.

A television device according to the present invention includes the above display device.

### Advantageous Effect of the Invention

According to the present invention, technologies for reducing color unevenness in an edge light type lighting device including a wavelength converting member are provided. Especially, technologies for reducing color unevenness in exiting light including light rays that are tinted a color of primary light rays from a light source more at an end than in a center portion are provided.

### BRIEF DESCRIPTION OF THE DRAWINGS

FIG. 1 is an exploded perspective view illustrating a general configuration of a television device according to a first embodiment of the present invention.
FIG. 2 is a cross-sectional view along line A-A in FIG. 1.
FIG. 3 is a plan view schematically illustrating positional relationships of a complementary color member, a light guide plate, and LEDs with one another.
FIG. 4 is a magnified cross-sectional view illustrating a light entering surface and therearound illustrated in FIG. 2.
FIG. 5 is a cross-sectional view of a liquid crystal display device according to a second embodiment along a longitudinal direction thereof.
FIG. 6 is a magnified cross-sectional view illustrating a light entering surface and therearound illustrated in FIG. 6.
FIG. 7 is a plan view schematically illustrating positional relationships of complementary color members, a light guide plate, a reflection sheet, and LEDs with one another.
FIG. 8 is a magnified cross-sectional view illustrating a light entering surface and therearound illustrated in FIG. 6.
FIG. 9 is a magnified cross-sectional view illustrating an opposite-side light source non-opposed surface and therearound illustrated in FIG. 6.
FIG. 10 is a partial plan view schematically illustrating a lighting unit according to a third embodiment.
FIG. 11 is a magnified cross-sectional view illustrating a light entering surface and therearound in a liquid crystal display device according to the third embodiment.
FIG. 12 is a magnified cross-sectional view illustrating a light entering surface and therearound in a liquid crystal display device according to a fourth embodiment.
FIG. 13 is a magnified cross-sectional view illustrating a light entering surface and therearound in a liquid crystal display device according to a fifth embodiment.
FIG. 14 is a front view of a holder.
FIG. 15 is a magnified cross-sectional view illustrating a light entering surface and therearound in a liquid crystal display device according to a sixth embodiment.
FIG. 16 is an exploded perspective view illustrating a schematic configuration of a liquid crystal display device according to a seventh embodiment.
FIG. 17 is a plan view of a backlight unit included in the liquid crystal display device.
FIG. 18 is a cross-sectional view along line iv-iv in FIG. 17.
FIG. 19 is a cross-sectional view along line v-v in FIG. 17.
FIG. 20 is a cross-sectional view of a plate surface wavelength converting sheet or an end surface wavelength converting sheet.
FIG. 21 is a magnified cross-sectional view illustrating a non-light-entering opposite end surface and therearound of a light guide plate.
FIG. 22 is a magnified cross-sectional view illustrating a non-light-entering opposite end surface and therearound of a light guide plate according to an eighth embodiment.
FIG. 23 is a magnified cross-sectional view illustrating a non-light-entering opposite end surface and therearound of a light guide plate according to a ninth embodiment.
FIG. 24 is a magnified cross-sectional view illustrating a non-light-entering opposite end surface and therearound of a light guide plate according to a tenth embodiment.
FIG. 25 is a magnified cross-sectional view illustrating a non-light-entering opposite end surface and therearound of a light guide plate according to an eleventh embodiment.
FIG. 26 is a plan view of a backlight unit according to a twelfth embodiment.
FIG. 27 is a plan view of a backlight unit according to a thirteenth embodiment.
FIG. 28 is a plan view of a backlight unit according to a fourteenth embodiment.
FIG. 29 is a plan view of a backlight unit according to a fifteenth embodiment.
FIG. 30 is a plan view of a backlight unit according to a sixteenth embodiment.
FIG. 31 is a plan view of a backlight unit according to a seventeenth embodiment.
FIG. 32 is a plan view of a backlight unit according to an eighteenth embodiment.
FIG. 33 is a cross-sectional view illustrating a schematic configuration of a liquid crystal display device according to a nineteenth embodiment.
FIG. 34 is a magnified cross-sectional view illustrating an LED and therearound.
FIG. 35 is a plan view schematically illustrating positional relationships of a light guide plate with LEDs viewed from the front surface side.
FIG. 36 is a plan view schematically illustrating positional relationships of the light guide plate with the LEDs viewed from the back surface side.
FIG. 37 is a plan view schematically illustrating positional relationships of the LEDs, the light guide plate, complementary color members, and a reflection sheet with one another viewed from the front surface side.
FIG. 38 is a magnified cross-sectional view illustrating a light source non-opposed adjacent end and therearound of a liquid crystal display device.
FIG. 39 is an explanatory drawing illustrating positional relationships of LEDs, a light guide plate, a complementary color member, and a reflection sheet with one another in a lighting unit according to a twentieth embodiment.
FIG. 40 is a magnified cross-sectional view illustrating a light source non-opposed adjacent end and therearound of a liquid crystal display device according to the twenty-first embodiment.
FIG. 41 is an explanatory drawing illustrating positional relationships of LEDs, a light guide plate, a complementary color member, and a reflection sheet with one another in a lighting unit according to a twenty-second embodiment.
FIG. 42 is a magnified cross-sectional view illustrating a light source non-opposed adjacent end and therearound of a liquid crystal display device according to the twenty-second embodiment.
FIG. 43 is an explanatory drawing illustrating positional relationships of LEDs, a light guide plate, a complementary color member, and a reflection sheet with one another in a lighting unit according to a twenty-third embodiment.
FIG. 44 is a magnified cross-sectional view illustrating a light source non-opposed adjacent end and therearound of a liquid crystal display device of a twenty-fourth embodiment.
FIG. 45 is an exploded perspective view illustrating a schematic configuration of a liquid crystal display device according to a twenty-fifth embodiment.
FIG. 46 is a plan view illustrating a chassis, an LED board, and a light guide plate of a backlight unit in the liquid crystal display device.
FIG. 47 is a cross-sectional view illustrating a cross-sectional configuration of the liquid crystal display device along a transverse direction of the liquid crystal display device.
FIG. 48 is a cross-sectional view illustrating a cross-sectional configuration of the liquid crystal display device along a longitudinal direction of the liquid crystal display device.
FIG. 49 is a cross-sectional view illustrating an LED and an LED board.
FIG. 50 is a cross-sectional view of a wavelength converting sheet.
FIG. 51 is a plan view illustrating the wavelength converting sheet and a retroreflector mounted to a frame.
FIG. 52 is a plan view of the retroreflector.
FIG. 53 is a plan view of the frame.
FIG. 54 is a plan view of the wavelength converting sheet.
FIG. 55 is a cross-sectional view of the wavelength converting sheet.
FIG. 56 is an exploded perspective view illustrating a schematic configuration of a liquid crystal display device according to a twenty-sixth embodiment of the present invention.
FIG. 57 is a plan view of a backlight unit.
FIG. 58 is a cross-sectional view illustrating a cross-sectional configuration of the liquid crystal display device along a longitudinal direction of the liquid crystal display device.
FIG. 59 is a cross-sectional view illustrating a cross-sectional configuration of the liquid crystal display device along a transverse direction of the liquid crystal display device.
FIG. 60 is a cross-sectional view illustrating a cross-sectional configuration of an end of the liquid crystal display device along the longitudinal direction.
FIG. 61 is a cross-sectional view illustrating a cross-sectional configuration of an end of the liquid crystal display device along the transverse direction.
FIG. 62 is a cross-sectional view of a retroreflector according to a twenty-seventh embodiment of the present invention.
FIG. 63 is a cross-sectional view of a retroreflector according to a twenty-eighth embodiment of the present invention.
FIG. 64 is a cross-sectional view of a retroreflector according to a twenty-ninth embodiment of the present invention.

### MODE FOR CARRYING OUT THE INVENTION

### <First Embodiment>

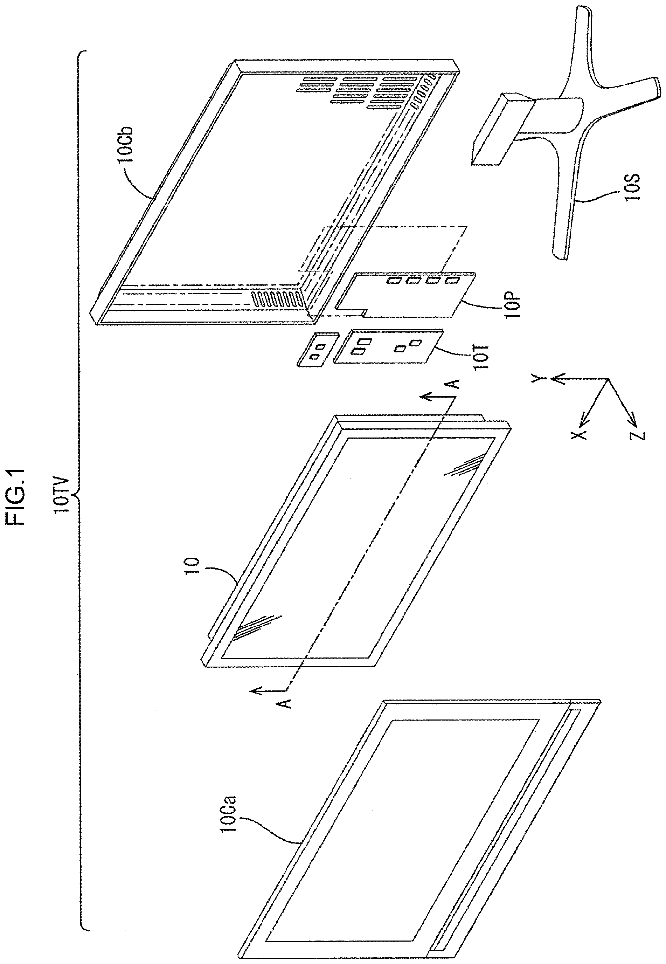

The first embodiment of this technology will be described with reference to FIGS. 1 to 5. In this section, a television device 10TV (an example of a liquid crystal display device 10) including a lighting unit 12 (a backlight unit) will be described. An X-axis, a Y-axis, and a Z-axis are present in some drawings for the purpose of illustration.

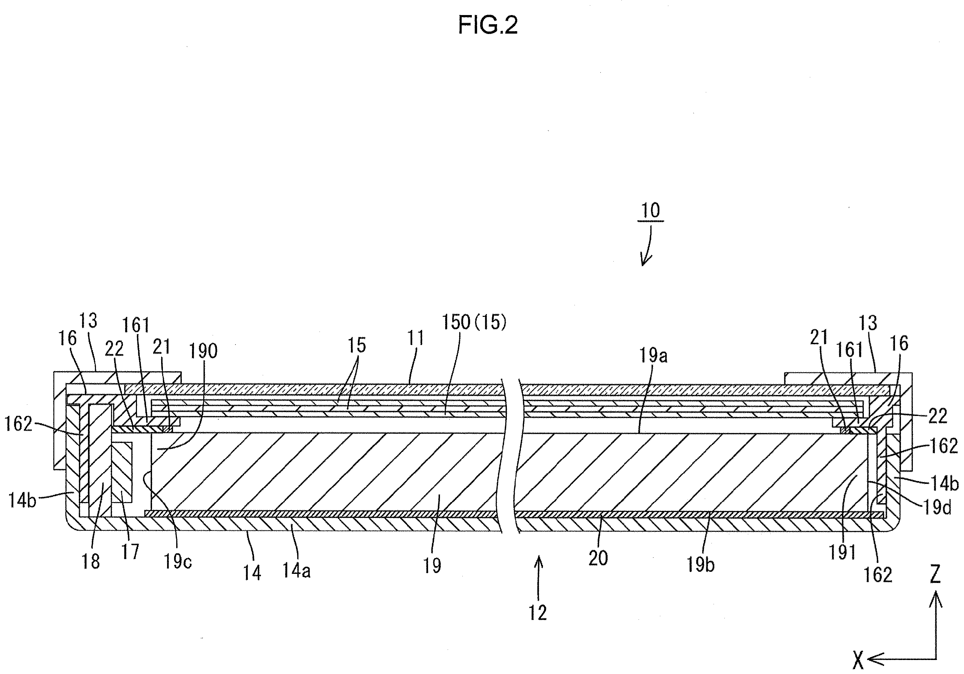

The television device 10TV and the liquid crystal display device 10 will be described. FIG. 1 an exploded perspective view illustrating a schematic configuration of the television display device 10TV. FIG. 2 is a cross-sectional view along line A-A in FIG. 1.

As illustrated in FIG. 1, the television device 10TV includes the liquid crystal display device 10 (an example of a display device), a front cabinet 10Ca, a rear cabinet 10Cb, a power supply 10P, a tuner 10T (a receiver), and a stand 10S.

The liquid crystal display device 10 in this embodiment has a horizontally-long rectangular overall shape elongated in the horizontal direction. As illustrated in FIG. 2, the liquid crystal display device 10 mainly includes a liquid crystal panel 11, the lighting unit 12 (the backlight unit), and a bezel 13. The liquid crystal panel 11 is used as a display panel. The lighting unit 12 is an external light source configured to supply light to the liquid crystal panel 11. The bezel 13 has a frame shape and holds the liquid crystal panel 11 and the lighting unit 12.

The liquid crystal panel 11 includes a pair of transparent boards and a liquid crystal layer sealed between the substrates. The liquid crystal panel 11 is configured to display an image visible on a panel surface using the light emitted by the lighting unit 12. The liquid crystal panel 11 has a horizontally-long rectangular shape in a plan view. One of the boards of the liquid crystal panel 11 is an array board including a transparent glass substrate, thin film transistors (TFTs) which are switching components, and pixel electrodes. The TFTs and the pixel electrodes are arranged in a matrix on the substrate. The other board is a color filter (CF) board including a transparent glass substrate and color filters. The color filters include red, green, and blue color filters arranged in a matrix on the glass substrate.

The lighting unit 12 is a device disposed behind the liquid crystal panel 11 for supplying light to the liquid crystal panel 11. The lighting unit 12 is configured to emit white light rays. In this embodiment, the lighting unit 12 is an edge light type (or a side light type) lighting device.

As illustrated in FIG. 2, the lighting unit 12 includes a chassis 14, an optical member 15, a frame 16, LEDs 17, an LED board 18, a light guide plate 19, a reflection sheet 20, and complementary color members 22.

The chassis 14 has a box-like overall shape. The chassis 14 is formed from a metal sheet such as an aluminum sheet and an electro galvanized steel sheet (SECC). The chassis 14 includes a bottom plate 14a and sidewall plates 14b. The bottom plate 14a has a rectangular shape similar to the liquid crystal panel in the plan view. The sidewall plates 14b rise from edges of the bottom plate 14a and surround the bottom plate 14a.

The chassis 14 holds various kinds of components including the LEDs 17, the LED board 18, the reflection sheet 20, the light guide plate 19, and the optical member 15. Circuit boards including a control board and an LED driver board, which are not illustrated, are attached to an external surface of the chassis 14.

The reflection sheet 20 is placed to cover a surface of the bottom plate 14a inside the chassis 14. The reflection sheet 20 (an example of a reflecting member) is a sheet shaped member having light reflectivity. The reflection sheet 20 may be made of white foamed polyethylene terephthalate (an example of a white plastic sheet). The light guide plate 19 is place on the reflection sheet 20 and held in the chassis 14.

The light guide plate 19 is made of transparent synthetic resin having high light transmissivity and a refraction index sufficiently higher than that of air (e.g., acrylic resin such as PMMA, polycarbonate resin). The light guide plate 19 is a plate shaped member having a rectangular shape similar to the liquid crystal panel in the plan view. The light guide plate 19 is held in the chassis 14 such that a front surface 19a thereof is opposed to the liquid crystal panel 11 and a back surface (an opposite surface) 19b thereof are opposed to the reflection sheet 20.

The front surface 19a of the light guide plate 19 is configured as a light exiting surface 19a through which light rays exit toward the liquid crystal panel 11. In this specification, the back surface 19b on a side opposite from the light exiting surface 19a may be referred to as "the opposite surface."

The optical member 15 is supported by the frame 16 between the light exiting surface 19a and the liquid crystal panel 11. A first short end surface 19c of the light guide plate 19 is configured as a light entering surface 19c through which light rays from LEDs 17 enter.

A second short end surface 19d and two long end surfaces 19e and 19f of the light guide plate 19 are not opposed to the LEDs 17 and the light source (the LEDs 17). Therefore, they may be referred to as light source non-opposed surfaces. Especially, the light source non-opposed surface on a side opposite from the light entering surface 19c (the second short end surface 19d) may be referred to as "an opposite-side light source non-opposed surface."

The frame 16 has a frame shape (a picture frame shape) as a whole to cover a peripheral portion of the light guide plate 19 from the front side. The frame 16 is fitted in an opening of the chassis 14. The frame 16 is made of synthetic resin and painted in white to have light reflectivity. The frame 16 includes a frame portion 161 and a projected wall portion 162. The frame portion 161 has a frame shape in the plan view. The frame portion 161 includes an inner end held against the peripheral portion of the light guide plate 19 in the chassis 14 from the front side. The projected wall portion 162 projects from the frame portion 161 toward the bottom plate 14a of the chassis 14. The projected wall portion 162 is held in the chassis 14.

The frame portion 161 has the frame shape such that the inner end overlaps the peripheral portion of the light guide plate 19 and the peripheral portion overlaps upper ends of the sidewall plates 14b of the chassis 14. An elastic member 21 made of urethane foam is attached to a back surface of the inner end of the frame portion 161. The elastic member 21 in this embodiment is in black and has a light blocking property. The elastic member 21 has a frame shape (or a ring shape) as a whole. The elastic member 21 is brought into contact with the peripheral portion of the light guide plate 19 from the front side.

The inner end of the frame portion 161 is configured such that the front surface thereof is one step lower than the front surface of the peripheral portion. The end of the optical member 15 is placed on the surface that is one step lower. The front surface of the inner end of the frame portion includes protrusions that are not illustrated. The end of the optical member 15 includes holes in which the protrusions are fitted and the optical member 15 is supported by the frame portion 161.

The projected wall portion 162 has a plate shape that extends from the outer end of the frame portion 161 toward the bottom plate 14a of the chassis 14 to be opposed to the end surface 19c of the light guide plate 19. The LED board 18 on which the LEDs 17 are mounted are attached to a portion of the projected wall portion 162 opposed to the first short end surface 19c of the light guide plate 19. A portion of the projected wall portion 162 other than the portion to which the LED board 18 is attached is placed between the end surface of the light guide plate 19 and the sidewall plate 14b and held in the chassis 14.

Each LED 17 (an example of a light source) includes a blue LED component (a blue light emitting component), a transparent sealing member, and a case. The blue LED component is a light emitting source in a form of a chip. The sealing member seals the blue LED component. The case has a box-like shape and holds the blue LED component and the sealing member therein. Each LED 17 is configured to emit blue light rays. The blue LED component is a semiconductor made of InGaN, for example. When a forward bias is applied, the blue LED component emits light rays in a wavelength range of blue light (about 420 nm to about 500 nm), that is, blue light rays. In this specification, the light rays emitted by each LED 17 may be referred to as primary light rays.

Each LED 17 is a so-called top surface emitting type LED. The LEDs 17 are surface-mounted on the LED board 18 having an elongated shape. The LEDs 17 are arranged in line at equal intervals on the LED board 18. The LED board 18 on which the LEDs 17 are mounted is attached to the projected wall portion 162 of the frame 16 such that the light emitting surfaces 17a are opposed to the first short end surface 19c of the light guide plate 19 and held in the chassis 14. The LEDs 17 are configured to emit light rays (blue light rays) toward the light entering surface 19c of the light guide plate 19.

The optical member 15 has a horizontally-long rectangular shape similar to the liquid crystal panel 11 in the plan view. The optical member 15 is disposed between the light exiting surface 19a of the light guide plate 19 and the back surface of the liquid crystal panel 11 with the outer end placed on the frame portion 161 of the frame 16 from the front side. The optical member 15 has a function for exerting predefined optical effects on the light rays exiting from the light guide plate 19 and directs the light rays toward the liquid crystal panel 11. The optical member 15 includes multiple sheets that are placed in layers (optical sheets).

The sheets of the optical member 15 (the optical sheets) may be a diffuser sheet, a lens sheet, and a reflective type polarizing sheet. The optical member 15 in this embodiment includes a phosphor sheet 150 containing quantum dot phosphors (an example of a wavelength converting member) as a mandatory member (optical sheet). The phosphor sheet 150 is disposed the closest to the light exiting surface 19a among the sheets of the optical member 15.

The phosphor sheet 150 will be described. The phosphor sheet 150 has a rectangular shape similar to the liquid crystal panel 11 in the plan view. The phosphor sheet 150 passes some of the light rays from the LEDs 17 in the thickness direction thereof. The phosphor sheet 150 absorbs some of the light rays from the LEDs 17, converts the light rays into light rays in a different wavelength range, and releases the light rays. The phosphor sheet 150 includes a wavelength converting layer, a pair of supporting layers, and a pair of barrier layers. The supporting layers sandwich the wavelength converting layer. The barrier layers are formed on outer sides of the supporting layers to sandwich the wavelength converting layer and the supporting layers.

The wavelength converting layer contains an acrylic resin as a binder resin and the quantum dot phosphors (an example of phosphors) dispersed in the acrylic resin. The acrylic resin is transparent and has light transmissivity. The acrylic resin has adhesiveness to the supporting layers. The supporting layers are sheet (or film) members made of polyester based resin such as polyethylene terephthalate (PET).

The quantum dot phosphors are phosphors having high quantum efficiency. The quantum dot phosphors include semiconductor nanocrystals (e.g., diameters in a range from 2 nm to 10 nm) which tightly confine electrons, electron holes, or excitons with respect to all direction of a three dimensional space to have discrete energy levels. A peak wavelength of emitting light rays (a color of emitting light rays) is freely selectable by changing the dot size.

In this embodiment, the wavelength converting layer includes green quantum dot phosphors and red quantum dot phosphors as quantum dot phosphors. The green quantum dot phosphors emit green light (in a wavelength range from about 500 nm to about 570 nm). The red quantum dot phosphors emit red light rays (in a wavelength range from about 600 nm to about 780 nm). An emitting light spectrum of the green light rays emitted by the green quantum dot phosphors and an emitting light spectrum of the red light rays emitted by the red quantum dot phosphors have sharp peaks, respectively. A half width of each peak is small, that is, purity of green and purity of red are very high and their color gamut is large.

The green quantum dot phosphors absorb the light rays from the LEDs 17 (the blue light rays, the primary light rays, exciting light rays). The green quantum dot phosphors are excited by the light rays and emit green light rays (in the wavelength range from about 500 nm to 570 nm). Namely, the green quantum dot phosphors have functions for converting the light rays from the LEDs 17 (the blue light rays, the primary light rays, the exciting light rays) to light rays in the different wavelength range (the green light rays).

The red quantum dot phosphors absorb the light rays from the LEDs 17 (the blue light rays, the primary light rays, exciting light rays). The red quantum dot phosphors are excited by the light rays and emit red light rays (in the wavelength range from about 600 nm to 780 nm). Namely, the red quantum dot phosphors have functions for converting the light rays from the LEDs 17 (the blue light rays, the primary light rays, the exciting light rays) to light rays in the different wavelength range (the red light rays).

Materials used for the quantum dot phosphors include a material prepared by combining elements that could be divalent cations such as Zn, Cd, and Pb and elements that could be divalent anions such as O, S, Se, and Te (e.g., cadmium selenide (CdCe), zinc sulfide (ZnS), a material prepared by combining elements that could be trivalent cations such as Ga and In and elements that could be trivalent anions such as P, As, and Sb (e.g., indium phosphide (InP), gallium arsenide (GaAs), and chalcopyrite type compounds (CuInSe2). In this embodiment, CdSe is used for the material of the quantum dot phosphors.

In this embodiment, the quantum dot phosphors (the green quantum dot phosphors and the red quantum dot phosphors) are evenly dispersed in the acrylic resin in the wavelength converting layer. The wavelength converting layer may contain other components such as a scattering agent.

The barrier layers are formed from metal oxide films such as alumina films and silicon oxide films. The barrier layers have functions for protecting the quantum dot phosphors in the wavelength converting layer from moisture (water) and oxygen. The barrier layers may be formed on the supporting layers by a vacuum deposition method.

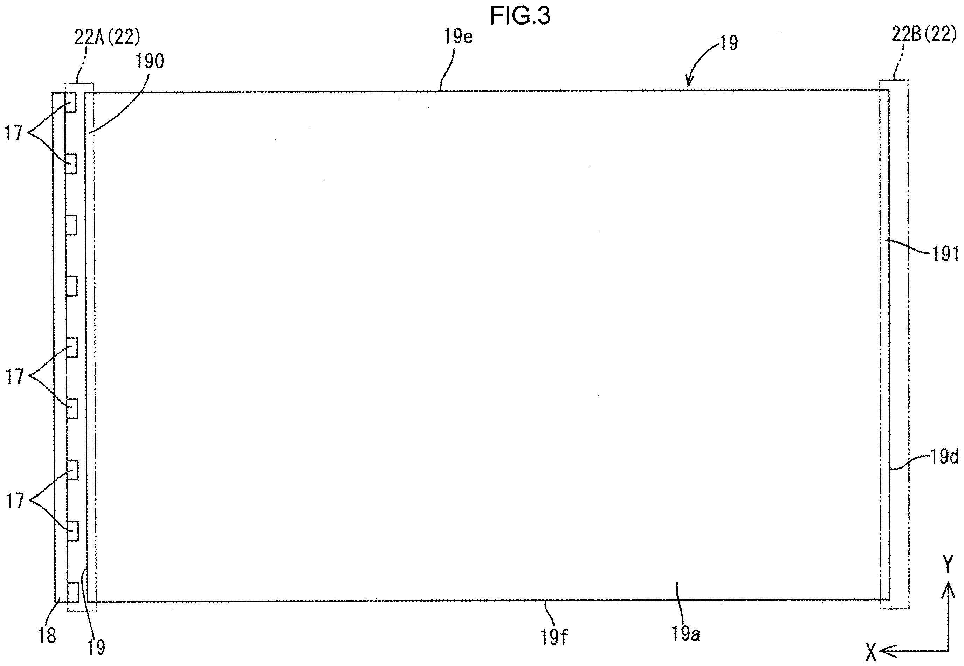

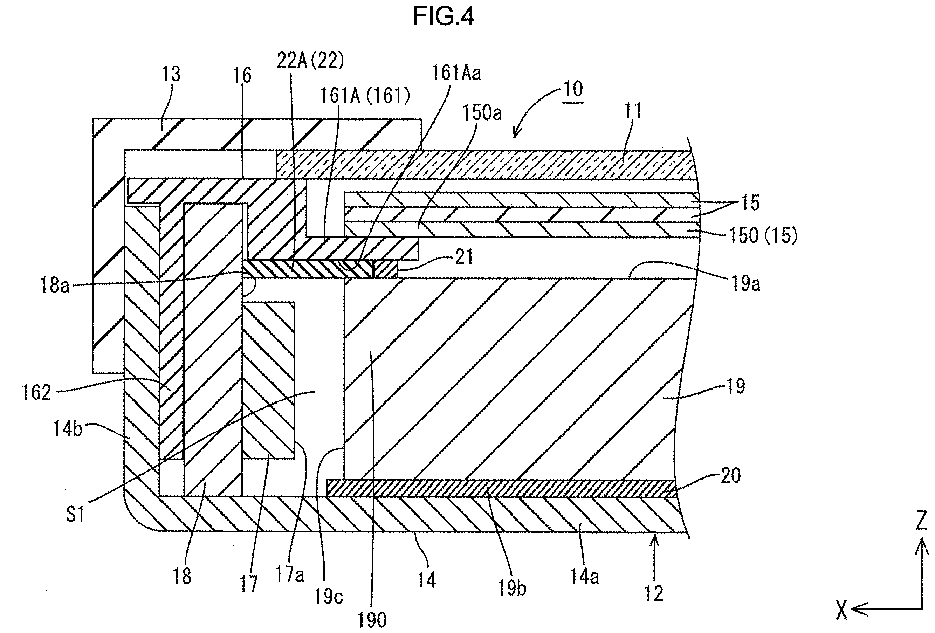

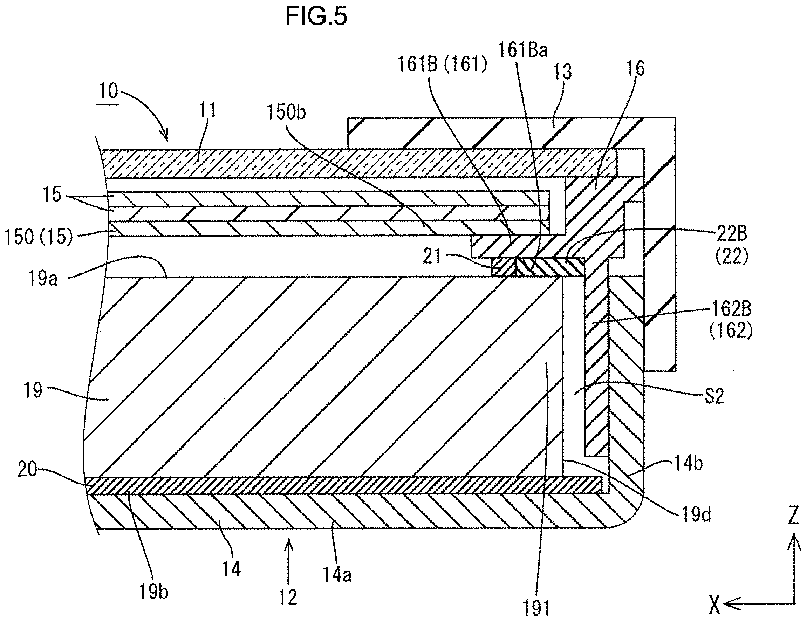

The complementary color members 22 will be described with reference to FIGS. 3 to 5. FIG. 3 is a plan view schematically illustrating positional relationships of the complementary color members 22, the light guide plate 19, and the LEDs 17 with one another. FIG. 4 is a magnified cross-sectional view illustrating the light entering surface 19c and therearound illustrated in FIG. 2. FIG. 5 is a magnified cross-sectional view illustrating the opposite-side light source non-opposed surface 19d and therearound illustrated in FIG. 2.

The complementary color members 22 are in color that makes a complementary color pair with the color of light rays emitted by the LEDs 17 (the primary light rays, the blue light rays), that is, blue (reference color). In this embodiment, the color is yellow. The complementary color members 22 have functions for absorbing light rays in blue (the blue light rays, the primary light rays) which makes the complementary color pair with yellow exhibited by the complementary color members 22 and for reflecting light rays in color other than blue.

The complementary color members 22 are not limited to a specific configuration as long as surfaces of the complementary color members 22 exhibit yellow. The complementary color members 22 may include thin resin base sheets (or films) colored by forming yellow coating films on surfaces of the resin base sheets.

In the lighting unit 12 in this embodiment, the complementary color members 22 are disposed on the light entering surface 19c side and on the opposite-side light source non-opposed surface 19d side opposite from the light entering surface 19c side with respect to the light guide plate 19, respectively. In this specification, the complementary color member 22 on the light entering surface 19c side may be referred to as "the complementary color member 22A" and the complementary color member 22 in the opposite-side light source non-opposed surface 19d side may be referred to as "a complementary color member 22B."

As illustrated in FIGS. 3 and 4, a complementary color member 22A on the light entering surface 19c side is formed to cover the space S1 between the LEDs 17 and a light entering end 190 of the light guide plate 19 including the light entering surface 19c at least from the light exiting surface 19a side. The light entering end 190 is one of the short ends of the light guide plate 19 including the light entering surface 19c opposed to the LEDs 17.

The complementary color member 22A has an elongated rectangular shape (a band shape) along the transverse direction of the light guide plate 19 from the LEDs 17 to the light entering end 190 across the space S1. In this embodiment, the complementary color member 22A extends from a mounting surface 18a of the LED board 18 to the light entering end 190. As illustrated in FIG. 3, the complementary color member 22A extends along the transverse direction of the light guide plate 19 without breaks.

The complementary color member 22A is fixed to a back surface 161Aa of a frame section 161A of the frame portion 161 of the frame 16 along the light entering end 190 with a fixing member such as a double-sided adhesive tape (not illustrated).

Some of the light rays emitted by the LEDs 17 (the primary light rays, the blue light rays) travel toward the frame section 161A of the frame 16 through the space S1 between the LEDs 17 and the light entering surface 19c (or a space between the mounting surface 18a of the LED board 18 and the light entering surface 19c) without entering the light guide plate 19 through the light entering surface 19c. The light rays that travel toward the frame section 161A are mainly the light rays without the wavelength conversion after emitted by the LEDs 17 (the blue light rays).

Light intensity is higher in the area closer to the LEDs 17 in comparison to other areas. Furthermore, a percentage of the light rays without the wavelength conversion by the phosphor sheet 150 (i.e., the primary light rays) is higher in the area closer to the LEDs 17 in comparison to other areas. In such a condition, some of the blue light rays (the primary light rays) traveling toward the frame section 161A of the frame 16 and reaching the complementary color member 22A are absorbed by the complementary color member 22A.

Some of the light rays reaching the complementary color member 22A are in a state after the wavelength conversion by the phosphor sheet 150. Such rays are retroreflected by the optical member 15 after the wavelength conversion and returned to the light guide plate 19. If the light rays after the wavelength conversion are reflected by the reflection sheet 20 toward the frame section 161A of the frame 16, the light rays are reflected by the complementary color member 22A and returned to the light guide plate 19.

An inner end of the frame section 161A of the frame 16 is placed on the light entering end 190 on the front side (the light exiting surface 19a side) via the elastic member 21 having the light blocking property. The elastic member 21 linearly elongates along the transverse direction of the light guide plate 19. Ideally, the elastic member 21 seals the gap between the frame section 161A and the light entering end 190. If the components of the frame 16 and the light guide plate 19 are deformed, for example, warped or curved, a small gap may be formed between the elastic member 21 and the light entering end 190 (i.e., between the frame section 161A and the light entering end 190). In this case, the primary light rays (the blue light rays) with the higher percentage may leak through the gap and travel toward an end 150a of the phosphor sheet 150.

In this embodiment, the complementary color member 22A is attached to the back surface 161Aa of the frame section 161A of the frame 16 as described above. Some of the primary light rays (the blue light rays) are absorbed by the complementary color member 22A and other rays of the primary light rays are reflected. Therefore, light supplied to the end 150a of the phosphor sheet 150 includes a relatively low percentage of the primary light rays (the blue light rays). Furthermore, the light supplied to the end 150a of the phosphor sheet 150 is whitish. The primary light rays (the blue light rays) passing through the end 150a of the phosphor sheet 150 without the wavelength conversion can be reduced. Therefore, light passing through the optical member 15 and reaching the liquid crystal panel 11 is less likely to have color unevenness. Namely, the light rays exiting from an end portion of the lighting unit 12 in which the LEDs 17 are disposed (on the light entering end 190 side of the light guide plate 19) are less likely to be tinted blue (the color of the primary light rays from the LEDs 17) more than the light rays exiting from the center portion of the lighting unit 12. Therefore, the planar light emitted by the lighting unit 12 including the light rays is less likely to have color unevenness.

Next, the complementary color member 22B on the opposite-side light source non-opposed surface 19d side will be described with reference to FIGS. 3 and 5. As illustrated in FIGS. 3 and 5, the complementary color member 22B is formed to cover the space S2 (the second space) between a light source non-opposed end 191 of the light guide plate 19 including the opposite-side light source non-opposed surface 19d (an example of the light source non-opposed surface) and a projected wall 162B (an example of an opposed member) of the frame 16 opposed to the opposite-side light source non-opposed surface 19d at least from the light exiting surface 19a side. The light source non-opposed end 191 is one of the short ends of the light guide plate 19 including the opposite-side light source non-opposed surface 19d opposed to the projected wall 162B (an example of the opposed member).

The complementary color member 22B has an elongated rectangular shape (a band shape) along the transverse direction of the light guide plate 19, similar to the complementary color member 22A described above. The complementary color potion 22B extends from the projected wall 162B to the light source non-opposed end 191 across the space S2. In this embodiment, the complementary color member 22B has a width smaller than the width of the complementary color member 22A. As illustrated in FIG. 3, the complementary color member 22B extends along the transverse direction of the light guide plate 19 without breaks.

The complementary color member 22B is fixed to a back surface 161Ba of a frame section 161B of the frame portion 161 of the frame 16 along the light source non-opposed end 191 with a fixing member such as a double-sided adhesive tape (not illustrated).

Some of the light rays emitted by the LEDs 17 and traveling through the light guide plate 19 (the primary light rays, the blue light rays) exit through the opposite-side light source non-opposed surface 19d toward the space S2. The rays are reflected by the projected wall 162B toward the frame section 161B of the frame 16 through the space S2. Most of the light rays traveling toward the frame section 161B are the light rays without the wavelength conversion (the primary light rays, the blue light rays) .

A percentage of light rays without the wavelength conversion by the phosphor sheet 150 (i.e., the primary light rays) is higher in the area closer to the opposite-side light source non-opposed surface 19d opposite from the light entering surface 19c in comparison to the center area of the light guide plate 19. In such a condition, some of the blue light rays (the primary light rays) traveling toward the frame section 161B of the frame 16 and reaching the complementary color member 22B on the back surface 161Ba of the frame section 161B are absorbed by the complementary color member 22B.

Some of the light rays reaching the complementary color member 22B are in a state after the wavelength conversion by the phosphor sheet 150. Such rays are retroreflected by the optical member 15 after the wavelength conversion and returned to the light guide plate 19. If the light rays after the wavelength conversion are reflected by the reflection sheet 20 toward the frame section 161B of the frame 16, the light rays are reflected by the complementary color member 22B and returned to the light guide plate 19.

An inner end of the frame section 161B of the frame 16 is placed on the light source non-opposed end 191 on the front side (the light exiting surface 19a side) via the elastic member 21 having the light blocking property. The elastic member 21 linearly elongates along the transverse direction of the light guide plate 19. Ideally, the elastic member 21 seals the gap between the frame section 161B and the light source non-opposed end 191. If the components of the frame 16 and the light guide plate 19 are deformed, for example, warped or curved, a small gap may be formed between the elastic member 21 and the light source non-opposed end 191 (i.e., between the frame section 161B and the light source non-opposed end 191). In this case, light including the primary light rays (the blue light rays) with the higher percentage may leak through the gap and travel toward an end 150b of the phosphor sheet 150.

In this embodiment, the complementary color member 22B is attached to the back surface 161Ba of the frame section 161B of the frame 16 as described above. Some of the primary light rays (the blue light rays) are absorbed by the complementary color member 22B and other primary light rays are reflected. Therefore, light including the primary light rays (the blue light rays) with a relatively low percentage is supplied to the end 150b of the phosphor sheet 150. The light supplied to the end 150b of the phosphor sheet 150 is whitish. The primary light rays (the blue light rays) passing through the end 150b of the phosphor sheet 150 without the wavelength conversion can be reduced. Therefore, the light including the light rays passing through the optical members 15 and reaching the liquid crystal panel 11 is less likely to have color unevenness. Namely, the light rays exiting from an end portion of the lighting unit 12 on a side opposite from a side on which the LEDs 17 are disposed (on the light source non-opposed end 191 side of the light guide plate 19) are less likely to be tinted blue (the color of the primary light rays from the LEDs 17) more than the light rays exiting from the center portion of the lighting unit 12. Therefore, the planar light emitted by the lighting unit 12 including the light rays is less likely to have color unevenness.

### <Second Embodiment>

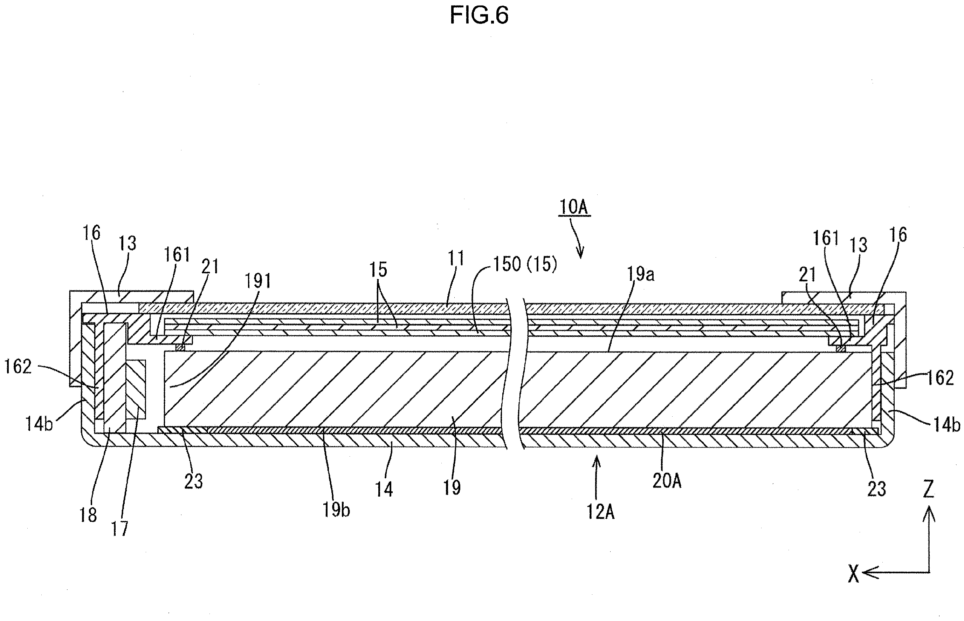

A second embodiment of the technology will be described with reference to FIGS. 6 to 9. In this section, a liquid crystal display device 10A including a lighting unit 12A will be described. A basic configuration of the liquid crystal display device 10A according to this embodiment is the same as that of the first embodiment. Components the same as those of the first embodiment will be indicated by the same symbols and will not be described.

FIG. 6 is a cross-sectional view of the liquid crystal display device 10A according to the second embodiment along the longitudinal direction of the liquid crystal display device 10A. The liquid crystal display device 10A according to this embodiment include complementary color members 23 disposed on the back surface 19b (the opposite surface) of the light guide plate 19, which is different from the first embodiment.

The complementary color members 23 are in color that makes a complementary color pair with the color of light rays emitted by the LEDs 17 (the primary light rays, the blue light rays), that is, blue (reference color). In this embodiment, the color is yellow. The complementary color members 23 have functions for absorbing the light rays in blue (the blue light rays, the primary light rays) which makes the complementary color pair with yellow that is the color of light the complementary color members 23 and for reflecting light rays in color other than blue.

In the lighting unit 12A in this embodiment, the complementary color members 23 are disposed on the back surface 19b of the light guide plate 19 on the light entering surface 19c side and the back surface 19b on the opposite-side light source non-opposed surface 19d side opposite from the light entering surface 19c side with respect to the light guide plate 19, respectively. In this specification, the complementary color member 23 on the light entering surface 19c side may be referred to as "the complementary color potion 23A" and the complementary color member 23 in the opposite-side light source non-opposed surface 19d side may be referred to as "a complementary color potion 23B."

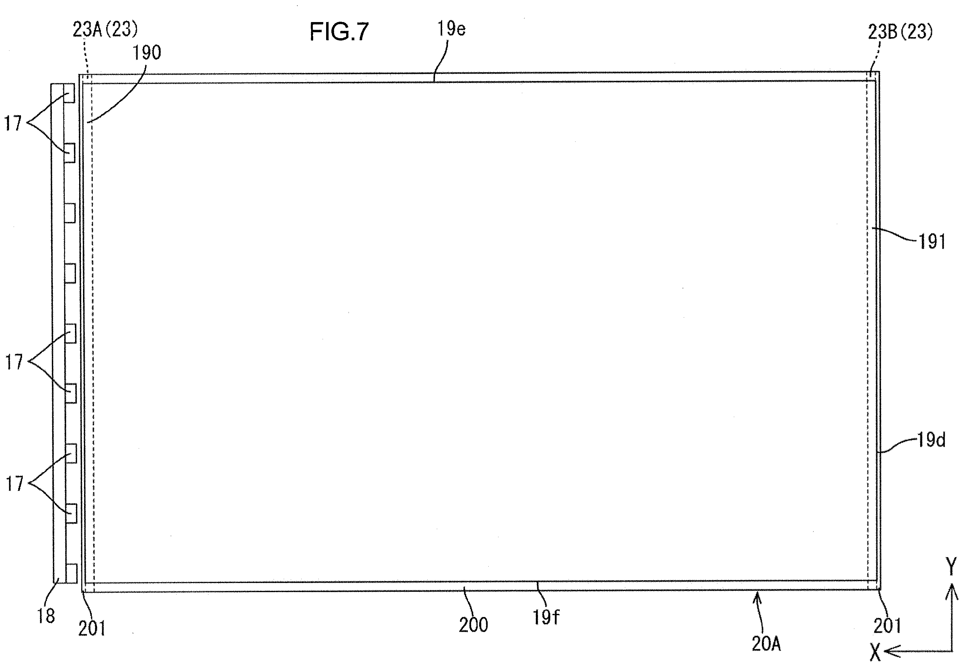

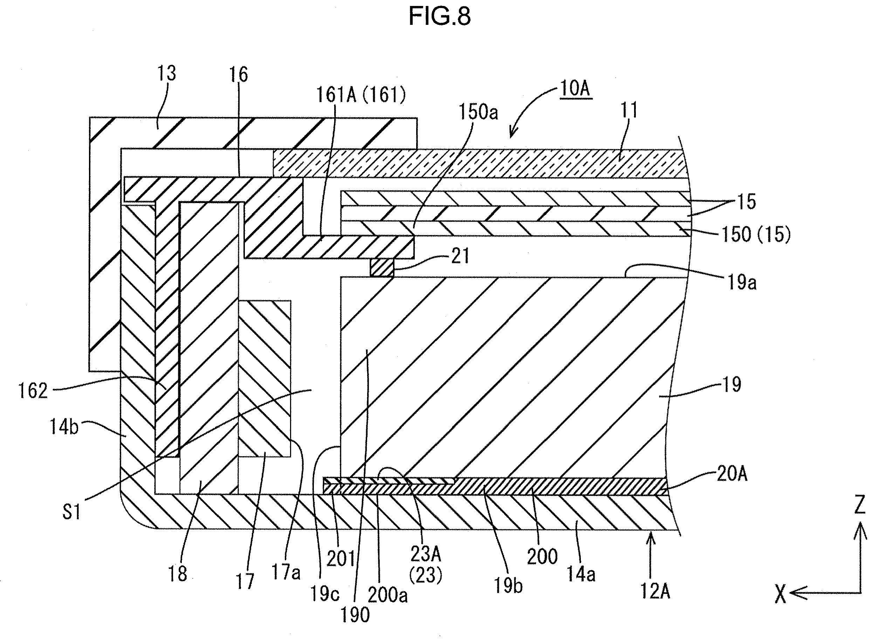

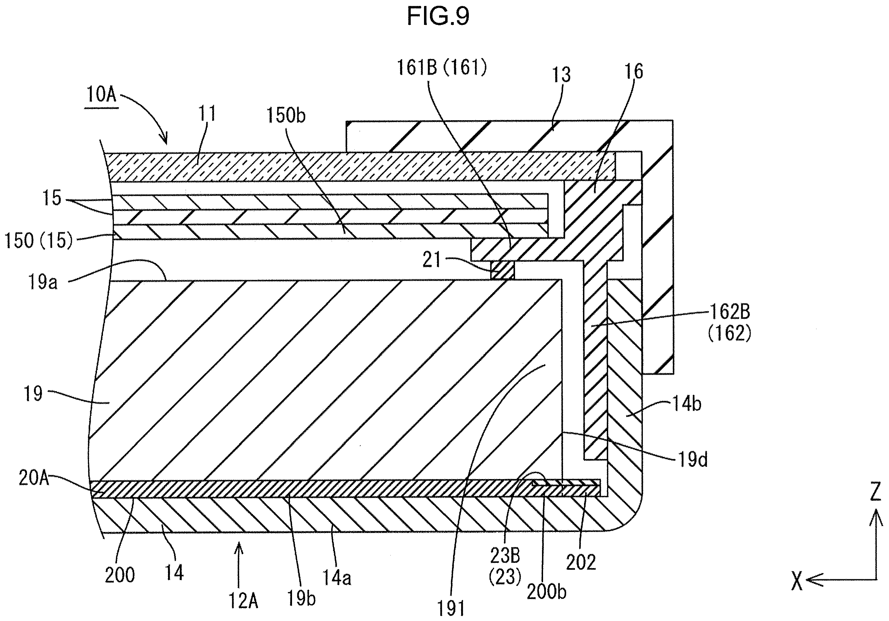

FIG. 7 is a plan view schematically illustrating positional relationships of the complementary color members 23, the light guide plate 19, a reflection sheet 20A, and the LEDs 17 with one another. FIG. 8 is a magnified cross-sectional view illustrating the light entering surface 19c and therearound illustrated in FIG. 6. FIG. 9 is a magnified cross-sectional view illustrating the opposite-side light source non-opposed surface 19d and therearound illustrated in FIG. 6.

As illustrated in FIGS. 7 and 8, a complementary color member 23A on the light entering surface 19c side is formed to cover the light entering end 190 of the light guide plate 19 including the light entering surface 19c at least from the back surface 19b (the opposite surface) side.

The complementary color member 23A is fixed to an end of the reflection sheet 20A (an example of a reflection member) on the LED 17 side with a fixing member such as a double-sided adhesive tape (not illustrated). The reflection sheet 20A may be made of white foamed polyethylene terephthalate similar to the first embodiment. The reflection sheet 20A includes a reflection body 200 and a reflection extended portion 201. The reflection body 200 overlaps the back surface 19b (the opposite surface) of the light guide plate 19 in the chassis 14. The reflection extended portion 201 extends from the reflection body 200 toward the LEDs 17 and projects outward from the back surface 19b (the opposite surface).

The complementary color member 23A is formed over the entire front surface of the reflection extended portion 201 of the reflection sheet 20A and the entire front surface of an end 200a of the reflection body 200 on the LED 17 side. The complementary color member 23A has an elongated rectangular shape (a band shape) as a whole along the transverse direction of the light guide plate 19. As illustrated in FIG. 7, the complementary color member 23A extends along the transverse direction of the light guide plate 19 without breaks.

According to the configuration of this embodiment in which the end (the reflection extended portion 201, the end 200a of the reflection body 200) of the reflection sheet 20A placed under the light guide plate 19 is arranged closer to the LEDs 17, some of the light rays emitted by the LEDs 17 (the primary light rays) are reflected to rise toward the liquid crystal panel 11 by the end (the reflection extended portion 201) of the reflection sheet 20A without entering the light guide plate 19. The light rays transmit through the light guide plate 19 and reach the end 150a of the phosphor sheet 150. Similar to the first embodiment, if a gap is formed between the light guide plate 19 and the frame section 161A of the frame 16 (between the light guide plate 19 and the elastic member 21), the light rays reflected by the end of the reflection sheet 20A pass through the gap and reach the end 150a of the phosphor sheet 150.

Some of the light rays emitted by the LEDs 17 (the primary light rays) that have entered the light guide plate 19 are reflected by the end of the reflection sheet 20A (the reflection extended portion 201, the end 200a of the reflection body 200) to rise toward the liquid crystal panel 11. The light rays transmit through the light guide plate 19 and reach the end 150a of the phosphor sheet 150. Some of the light rays reflected by the end of the reflection sheet 20A may pass through the gap between the light guide plate 19 and the frame section 161A of the frame 16 (between the light guide plate 19 and the elastic member 21).

If the end of the reflection sheet 20A is warped and a gap is formed between the back surface 19b of the light guide plate 19 and the reflection sheet 20A, the position (the arrangement angle) of the reflection sheet 20A changes from the original position, resulting in more light rays traveling toward the end 150a of the phosphor sheet 150.

A percentage of the primary light rays (the blue light rays) in the light reaching the end of the reflection sheet 20A (the reflection extended portion 201, the end 200a of the reflection body 200) is higher in comparison to other portions (e.g., the center of the reflection sheet 20A). Intensity of the light in the area closer to the LEDs 17 is higher.

As described above, this embodiment includes the complementary color member 23A on the front surface of the end of the reflection sheet 20A (the reflection extended portion 201, the end 200a of the reflection body 200). Some of the primary light rays (the blue light rays) are absorbed by the complementary color member 23A and other primary light rays are reflected. The light including the primary light rays (the blue light rays) with a lower percentage is supplied to the end 150a of the phosphor sheet 150. The light supplied to the end 150a of the phosphor sheet 150 is whitish. The primary light rays (the blue light rays) passing through the end 150a of the phosphor sheet 150 without the wavelength conversion can be reduced. Therefore, light passing through the optical member 15 and reaching the liquid crystal panel 11 is less likely to have color unevenness. Namely, the light rays exiting from an end portion of the lighting unit 12A in which the LEDs 17 are disposed (on the light entering end 190 side of the light guide plate 19) are less likely to be tinted blue (the color of the primary light rays from the LEDs 17) more than the light rays exiting from the center portion of the lighting unit 12A. Therefore, the planar light emitted by the lighting unit 12A including the light rays is less likely to have color unevenness.

Next, the complementary color member 23B on the opposite-side light source non-opposed surface 19d side will be described with reference to FIGS. 7 and 9. As illustrated in FIGS. 7 and 9, the complementary color member 23B is formed to cover the light source non-opposed end 191 of the light guide plate 19 including the opposite-side light source non-opposed surface 19d (an example of the light source non-opposed surface) at least from the back surface 19b (the opposite surface) side.

The complementary color member 23B is fixed to an end of the reflection sheet 20A (an example of a reflection member) on the projected wall 162B side (an example of the opposed member) with a fixing member such as a double-sided adhesive tape (not illustrated). The reflection sheet 20A includes a second reflection extended portion 202 that extends from the reflection body 200 toward the projected wall 162B and projects outward from the back surface 19b (the opposite surface).

The complementary color member 23B is formed over the entire front surface of the second reflection extended portion 202 of the reflection sheet 20A and the entire front surface of an end 200b of the reflection body 200 on the projected wall 162B side. The complementary color member 23B has an elongated rectangular shape (a band shape) as a whole along the transverse direction of the light guide plate 19. The complementary color member 23B extends along the transverse direction of the light guide plate 19 without breaks.

Some of the light rays emitted by the LEDs 17 and traveling through the light guide plate 19 (the primary light rays, the blue light rays) travel toward the end of the reflection sheet 20A (the second reflection extended portion 202, the end 200b of the reflection body 200). A percentage of the light rays without the wavelength conversion by the phosphor sheet 150 (i.e., the primary light rays) is higher in the area closer to the opposite-side light source non-opposed surface 19d in comparison to the center of the light guide plate 19. In such a condition, the light rays traveling toward the end of the reflection sheet 20A (the second reflection extended portion 202, the end 200b of the reflection body 200) reach the complementary color member 23B and some rays of the blue light rays (the primary light rays) are absorbed by the complementary color member 23B.

Some of the light rays reaching the complementary color member 23B include the light rays after the wavelength conversion by the phosphor sheet 150. Such rays are reflected by the complementary color member 23B toward to the phosphor sheet 150.

If a gap is formed between the light guide plate 19 and the frame section 161B of the frame 16 (between the light guide plate 19 and the elastic member 21) as in the first embodiment, the light rays reflected by the end of the reflection sheet 20A pass through the gap and reach the end 150a of the phosphor sheet 150.

If the end of the reflection sheet 20A is warped and a gap is formed between the back surface 19b of the light guide plate 19 and the reflection sheet 20A, the position (the arrangement angle) of the reflection sheet 20A changes from the original position, resulting in more light rays traveling toward the end 150a of the phosphor sheet 150.

As described above, this embodiment includes the complementary color member 23B on the front surface of the end of the reflection sheet 20A (the second reflection extended portion 202, the end 200b of the reflection body 200). Some of the primary light rays (the blue light rays) are absorbed by the complementary color member 23B and other primary light rays are reflected. The light including the primary light rays (the blue light rays) with a lower percentage is supplied to the end 150a of the phosphor sheet 150. The light supplied to the end 150a of the phosphor sheet 150 is whitish. The primary light rays (the blue light rays) passing through the end 150a of the phosphor sheet 150 without the wavelength conversion can be reduced. Therefore, light passing through the optical members 15 and reaching the liquid crystal panel 11 is less likely to have color unevenness. Namely, the light rays exiting from an end portion of the lighting unit 12A in which the LEDs 17 are disposed (on the light entering end 190 side of the light guide plate 19) are less likely to be tinted blue (the color of the primary light rays from the LEDs 17) more than the light rays exiting from the center portion of the lighting unit 12A. Therefore, the planar light emitted by the lighting unit 12A including the light rays is less likely to have color unevenness.

### <Third Embodiment>

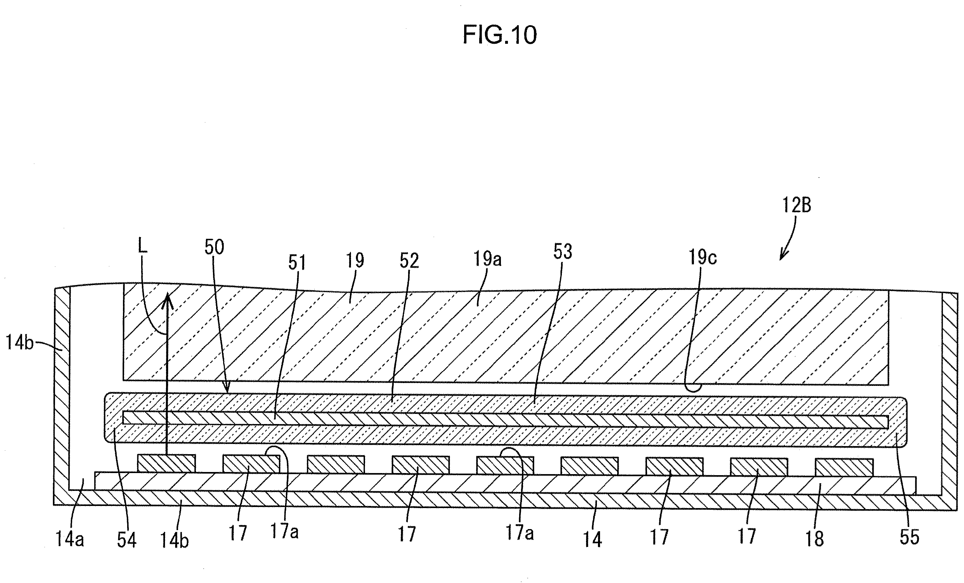

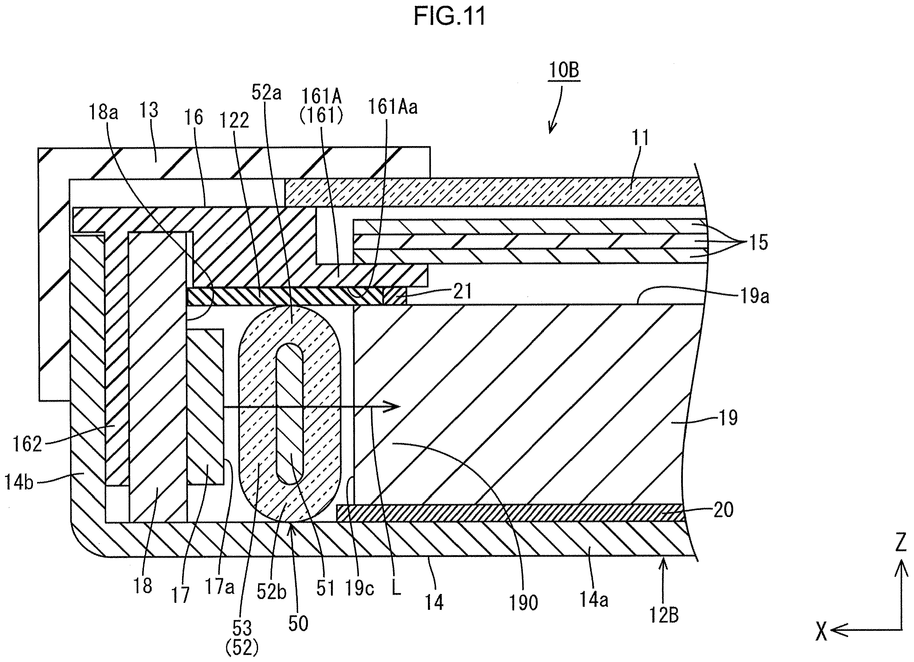

A third embodiment of the present invention will be described with reference to FIGS. 10 and 11. In this section, a liquid crystal display device 10B including a lighting unit 12B will be described.

FIG. 10 is a partial plan view schematically illustrating a lighting unit 12B according to the third embodiment. FIG. 11 is a magnified cross-sectional view illustrating a light entering surface and therearound in the liquid crystal display device 10B according to the third embodiment. The lighting unit 12B in the liquid crystal display device 10B according to this embodiment includes a phosphor tube 50 as a wavelength converting member.

The phosphor tube 50 has an elongated overall shape. The phosphor tube 50 is disposed along a direction in which the LEDs 17 are arranged in line (the transverse direction of the light guide plate 19 in this embodiment) between the light emitting surfaces 17a of the LEDs 17 and the light entering surface 19c of the light guide plate 19. The phosphor tube 50 includes a wavelength converter 51 and a holder 52. The wavelength converter 51 contains quantum dot phosphors (an example of phosphors). The holder 52 holds the wavelength converter 51 to surround the wavelength converter 51. The holder 52 is an elongated member having light transmissivity.

The wavelength converter 51 has a function for converting the primary light rays emitted by the LEDs 17 (the blue light rays in this embodiment) into secondary light rays with wavelengths in a wavelength range different from a wavelength range of the primary light rays (the green light rays and the red light rays in this embodiment). The wavelength converter 51 is made of curable resin material with the quantum dot phosphors added. An example of the resin with the quantum dot phosphors added is an ultraviolet curable resin. The wavelength converter 51 held in the holder 52 having the elongated shape in this embodiment extends along the longitudinal direction of the holder 52. The quantum dot phosphors used in the first embodiment may be used.

The holder 52 has the elongated overall shape. The holder 52 includes a tube having the light transmissivity. Ends of the holder 52 are closed when the wavelength converter 51 is inside the holder 52. For example, a glass tube including one open end and one closed end is prepared and the open end is closed after the wavelength converter 51 is inserted. This completes the holder portion 52.

The holder 52 includes a transparent wall in a tubular shape to surround the wavelength converter 51. The holder 52 includes an elongated tubular body 53 and two sealing ends 54 and 55.The tubular body 53 includes a space for holding the wavelength converter 51 therein. The sealing ends 54 and 55 close (seal) the respective ends of the tubular body 53 at ends in the long-side direction. The sealing ends 54 and 55 are ends of the holder 52 at ends in the long-side direction and ends of the phosphor tube 50 at ends in the long-side direction.

The phosphor tube 60 (the wavelength converting member) is produced by adding and mixing the quantum dot phosphors to and with the transparent ultraviolet curable resin having flowability, inserting the mixture into the glass tube, sealing (closing) the open end of the glass tube, and curing the resin in the glass tube through application of ultraviolet rays.

In this embodiment, the phosphor tube 50 is sandwiched between the bottom plate 14a of the chassis 14 and the frame section 161A of the frame 16 and fixed at a position between the LEDs 17 and the light entering surface 19c using a holding member that is not illustrated.

As illustrated in FIGS. 10 and 11, the phosphor tube 50 is disposed in the lighting unit 12B such that the wavelength converter 51 held in the holder 52 overlap the light emitting surfaces 17a of the LEDs 17 and the light entering surface 19c of the light guide plate 19 with respect to the light emitting direction of the LEDs 17 (an optical axis direction L of the LEDs 17).

The lighting unit 12 in the phosphor tube 50 includes a transparent portion 52a that is a portion of the wall of the holder 52 extending along the longitudinal direction on the front side of the lighting unit 12B (the frame 16 side). The transparent portion 52a is made of material having light transmissivity (e.g., glass) and does not have the wavelength converting function. The transparent portion 52a is referred to as a front-side wavelength non-converting section 52a. Furthermore, the phosphor tube 50 includes a transparent portion that is a portion of the wall of the holder 52 extending along the longitudinal direction on the rear side of the lighting unit 12B (the bottom plate 14a side). The transparent portion is made of material having light transmissivity (e.g., glass) similar to the front-side wavelength non-converting section 52a. The transparent portion is referred to as a rear-side wavelength non-converting section 52b.

As illustrated in FIG. 11, the phosphor tube 50 include sections that do not overlap the light emitting surfaces 17a of the LEDs 17 and the light entering surface 19c of the light guide plate 19 in the light emitting direction of the LEDs 17 (the optical axis direction L of the LEDs 17). The sections are the front-side wavelength non-converting section 52a and a rear-side wavelength non-converting section 52b.

In the lighting unit 12B, the ends 54 and 55 (the sealing ends) of the phosphor tube 50 are made of material having the light transmissivity (e.g., glass) and do not have the wavelength converting function. In the light emitting direction of the LEDs 17 (the optical axis direction L of the LEDs 17), the ends 54 and 55 are arranged outer than the light entering surface 19c as illustrated in FIG. 11 such that the ends 54 and 55 do not overlap the light emitting surface 17a of the LEDs 17 and the light entering surface 19c of the light guide plate 19.

In the lighting unit 12B in this embodiment, a complementary color member 122 is disposed above the light entering surface 19c of the light guide plate 19. The complementary color member 122 is made of material in color that makes a complementary color pair with blue (the reference color), which is the color of the light rays emitted by the LEDs 17 (the primary light rays, the blue light rays), similar to the complementary color members 22 in the first embodiment. In this embodiment, the color is yellow. The complementary color member 122 has functions for absorbing light rays in blue (the blue light rays, the primary light rays) which makes the complementary color pair with yellow exhibited by the complementary color member 122 and for reflecting light rays in color other than blue.

The complementary color member 122 is not limited to a specific configuration as long as a surface of the complementary color member 122 exhibits yellow. Similar to the first embodiment, the complementary color member 122 may include a thin resin base sheet (or film) colored by forming yellow coating film on a surface of the resin base sheet.

As illustrated in FIG. 11, the complementary color member 122 is formed to cover the space between the LEDs 17 and the light entering end 190 of the light guide plate 19 including the light entering surface 19c at least from the light exiting surface 19a side. In this embodiment, the phosphor tube 50 (the wavelength converting member) is disposed between the LEDs 17 and the light entering surface 19c. Therefore, the complementary color member 122 is formed to cover the phosphor tube 50 from above. The light entering end 190 is one of short ends of the light guide plate 19 including the light entering surface 19c opposed to the LEDs 17.

The complementary color member 122 has an elongated rectangular shape (a band shape) along the transverse direction of the light guide plate 19 from the LEDs 17 to the light entering end 190 across the space. In this embodiment, the complementary color member 122 extends from the mounting surface 18a of the LED board 18 to the light entering end 190. The complementary color member 122 extends along the transverse direction of the light guide plate 19 (in the direction in which the LEDs 17 are arranged in line) without breaks.

The complementary color member 122 is fixed to the back surface 161Aa of the frame section 161A of the frame portion 161 of the frame 16 arranged along the light entering end 190 with a fixing member such as a double-sided adhesive tape (not illustrated).

Some of the light rays emitted by the LEDs 17 (the primary light rays, the blue light rays) pass through the front-side wavelength non-converting section 52a without the wavelength conversion by the wavelength converter 51 of the phosphor tube 50 and travel toward the frame section 161A of the frame 16.

Intensity of light is larger in the area closer to the LEDs 17 in comparison to other areas. Furthermore, a percentage of the light rays without the wavelength conversion by the phosphor tube 50 (i.e., the primary light rays) is higher in the area closer to the LEDs 17 in comparison to other areas. In such a condition, some of the blue light rays (the primary light rays) traveling toward the back surface 161Aa of the frame section 161A and reaching the complementary color member 122 are absorbed by the complementary color member 122.

Some of the light rays reaching the complementary color member 122 are in a state after the wavelength conversion by the phosphor tube 5. If the light rays (secondary light rays) are reflected by the reflection sheet 20 toward the frame section 161A of the frame 16 after the wavelength conversion, the light rays are reflected by the complementary color member 122 and returned to the light guide plate 19.

An inner end of the frame section 161A of the frame 16 is placed on the light entering end 190 on the front side (the light exiting surface 19a side) via the elastic member 21 having the light blocking property. The elastic member 21 linearly elongates along the transverse direction of the light guide plate 19. Ideally, the elastic member 21 seals the gap between the frame section 161A and the light entering end 190. If the components of the frame 16 and the light guide plate 19 are deformed, for example, warped or curved, a small gap may be formed between the elastic member 21 and the light entering end 190 (i.e., between the frame section 161A and the light entering end 190). In this case, the primary light rays (the blue light rays) with the higher percentage may leak through the gap.

In this embodiment, the complementary color member 122 is attached to the back surface 161Aa of the frame section 161A of the frame 16 as described above. Some of the primary light rays (the blue light rays) are absorbed by the complementary color member 122. Therefore, the primary light rays (the blue light rays) passing through the light entering end of the light guide plate 19 without the wavelength conversion can be reduced. The whitish light exits from the light entering end 190 of the light guide plate 19 similar to other portions. Therefore, light passing through the optical members 15 and reaching the liquid crystal panel 11 is less likely to have color unevenness. With the complementary color member 122, the light rays exiting from an end portion of the lighting unit 12B in which the LEDs 17 are disposed (on the light entering end 190 side of the light guide plate 19) are less likely to be tinted blue (the color of the primary light rays from the LEDs 17) more than the light rays exiting from the center portion of the lighting unit 12B. Therefore, the planar light emitted by the lighting unit 12B including the light rays is less likely to have color unevenness.

### <Fourth Embodiment>

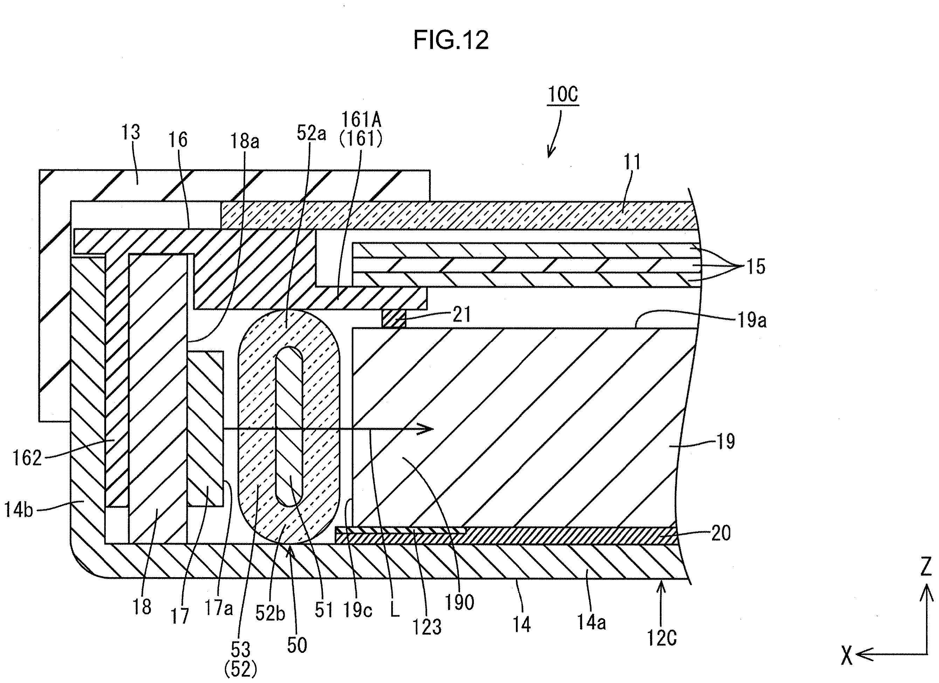

A fourth embodiment of the present invention will be described with reference to FIG. 12. In this section, a liquid crystal display device 10C including a lighting unit 12C will be described.

FIG. 12 is a magnified cross-sectional view illustrating a light entering surface and therearound in the liquid crystal display device 10C according to the fourth embodiment. The liquid crystal display device 10C according to this embodiment includes the lighting unit 12C that includes the phosphor tube 50 as the wavelength converting member as in the third embodiment.

In this embodiment, a complementary color member 123 is disposed to cover the light entering end 190 of the light guide plate 19 including the light entering surface 19c at least from the back surface 19b (the opposite surface) side, which is different from the third embodiment.

The complementary color member 123 is bonded to the end of the reflection sheet 20 (an example of a reflection member) on the LED 17 side using a fixing member such as a double-sided adhesive tape (not illustrated). The reflection sheet 20 is made of white foamed polyethylene terephthalate similar to the first embodiment. The reflection sheet 20 covers an entire back surface (the opposite surface) of the light guide plate 19 and includes an end disposed outer than the light entering surface 19c inside the chassis 14. The complementary color member 123 is a thin member with a yellow surface similar to the third embodiment.

The complementary color member 123 is formed in an area corresponding to the end of the reflection sheet 20 disposed outer than the light entering surface 19c and a portion of the reflection sheet 20 overlapping the light entering end 190. The complementary color member 123 has an elongated rectangular shape (a band shape) as a whole along the transverse direction of the light guide plate 19. The complementary color member 123 extends along the transverse direction of the light guide plate 19 without breaks.

According to the configuration of this embodiment in which the end of the reflection sheet 20 placed under the light guide plate 19 is arranged closer to the LEDs 17, some of the light rays exiting from the phosphor tube 50 are reflected by the end of the reflection sheet 20 disposed outer than the light entering surface 19c or the portion of the reflection sheet 20 covering the light entering end 190 from the rear side to rise toward the liquid crystal panel 11. The light rays are directed to the light entering end 190 of the light guide plate 19 or therearound.

If the end of the reflection sheet 20 is warped and a gap is formed between the back surface 19b of the light guide plate 19 and the reflection sheet 20, the position (the arrangement angle) of the reflection sheet 20 changes from the original position, resulting in more light rays reflected by the end of the reflection sheet 20 reach the light entering end 190 of the light guide plate 19 and therearound. Similar to the third embodiment, if a gap is formed between the light guide plate 19 and the frame section 161A of the frame 16 (or between the light guide plate 19 and the elastic member 21), the light rays reflected by the end of the reflection sheet 20 leak through the gap.

Some of the primary light rays emitted by the LEDs 17 pass through the rear-side wavelength non-converting section 52b without the wavelength conversion by the wavelength convertor 51 of the phosphor tube 50 and reach the end of the reflection sheet 20 or therearound closer to the light entering end 190. A percentage of the primary light rays (the blue light rays) in the light reaching the end of the reflection sheet 20A is higher in comparison to other portions (e.g., the center of the reflection sheet 20). Intensity of light in the area closer to the LEDs 17 is high.

As described above, this embodiment includes the complementary color member 123 on the front surface of the end of the reflection sheet 20. Some of the primary light rays (the blue light rays) are absorbed by the complementary color member 123. The primary light rays (the blue light rays) exiting from the phosphor tube 50 can be reduced in the area closer to the light entering end 190 of the light guide plate 19. The whitish light exits from the light entering end 190 of the light guide plate 19 similar to other portions. Therefore, light passing through the optical members 15 and reaching the liquid crystal panel 11 is less likely to have color unevenness. With the complementary color member 123, the light rays exiting from an end portion of the lighting unit 12C in which the LEDs 17 are disposed (on the light entering end 190 side of the light guide plate 19) are less likely to be tinted blue (the color of the primary light rays from the LEDs 17) more than the light rays exiting from the center portion of the lighting unit 12C. Therefore, the planar light emitted by the lighting unit 12C including the light rays is less likely to have color unevenness.

### <Fifth Embodiment>

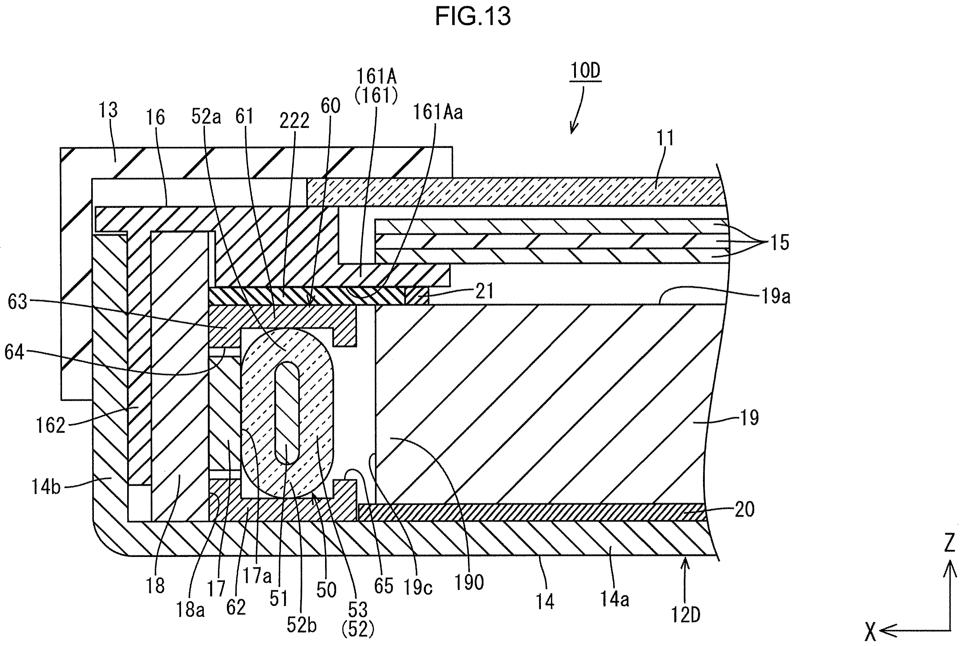

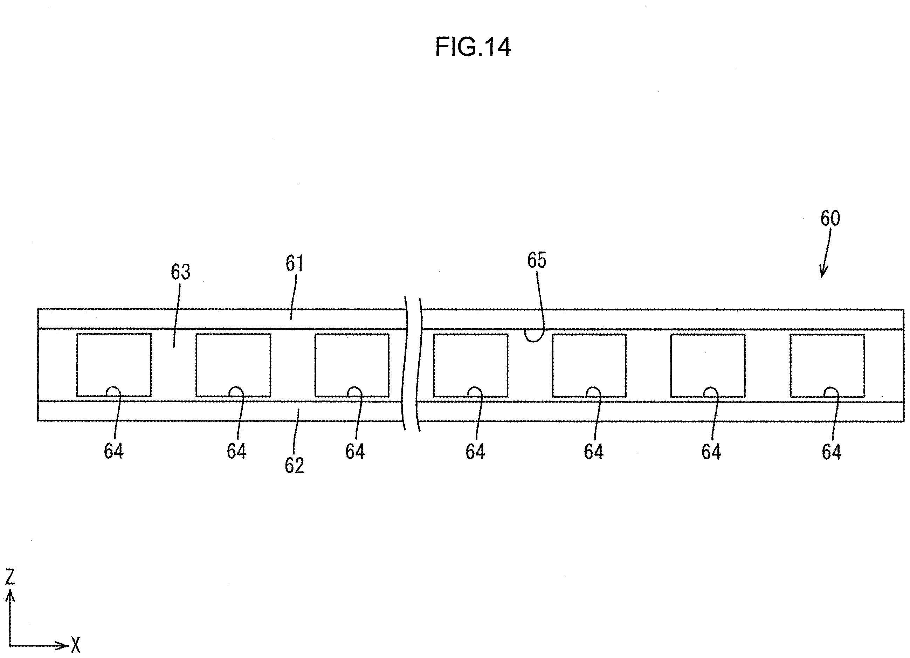

A fifth embodiment of the present invention will be described with reference to FIGS. 13 and 14. In this section, a liquid crystal display device 10D including a lighting unit 12D will be described.

FIG. 13 is a magnified cross-sectional view illustrating a light entering surface and therearound in the liquid crystal display device 10D according to the fifth embodiment. FIG. 14 is a front view of a holder 60. The lighting unit 12D in the liquid crystal display device 10D according to this embodiment includes the phosphor tube 50 held with the holder 60 having an elongated shape.

As illustrated in FIG. 13, the phosphor tube 50 (the wavelength converting member) in this embodiment is disposed in a space between the LEDs 17 and the light entering surface 19c of the light guide plate 19 and held with the holder 60. The holder 60 is a molded member made of white synthetic resin having high light reflectivity and formed in an elongated overall shape. The holder 60 has a C shaped cross section to sandwich a portion of the phosphor tube 50 holding the wavelength converter 51 in the vertical direction (the front-rear direction) for the entire length. The holder 60 includes a front-side holding wall 61, a rear-side holding wall 62, and a connecting wall 63. The front-side holding wall 61 and the rear-side holding wall 62 sandwich the phosphor tube 50 in the vertical direction. The connecting wall 63 connects the front-side holding wall 61 to the rear-side holding wall 62 in the vertical direction (the front-rear direction). The connecting wall 63 is disposed closer to the LED 17 side (the LED board 18 side) than the phosphor tube 50. The holder 60 holding the phosphor tube 50 in the vertical direction has an opening on the light entering surface 19c side.

The connecting wall 63 stands in the vertical direction inside the chassis 14 and extends along the direction in which the LEDs 17 are arranged in line. The connecting wall 63 includes holes 64 for exposing the LEDs 17 on the light entering surface 19c side. The connecting wall 63 is against the mounting surface 18a of the LED board 18 with the LEDs 17 exposed through the holes 64 inside the chassis 14.

The phosphor tube 50 held with the holder 60 having such a configuration is fixed to the bottom plate 14a of the chassis 14 with a fixing member that is not illustrated. As illustrated in FIG. 13, the light emitting surfaces 17a of the LEDs 17 are closely attached to a wall surface of the holder 52 of the phosphor tube 50 in this embodiment.

In the lighting unit 12D in this embodiment includes a thin complementary color member 222 with a yellow surface similar to the complementary color member 122 in the third embodiment. The complementary color member 222 is disposed above the light entering surface 19c of the light guide plate 19.

The complementary color member 222 is formed to cover a gap between the light entering end 190 of the light guide plate 19 at least from the light exiting surface 19a side. In this embodiment, the phosphor tube 50 (the wavelength converting member) held with the holder is disposed between the LEDs 17 and the light entering surface 19c. Therefore, the complementary color member 222 is formed to cover the holder 60 and the phosphor tube 50 from above.

The complementary color member 222 is fixed to the back surface 161Aa of the frame section 161A of the frame portion 161 of the frame 16 disposed along the light entering end 190 with a fixing member such as a double-sided adhesive tape (not illustrated).

Some of the light rays emitted by the LEDs 17 (the primary light rays, the blue light rays) pass the front-side wavelength non-converting section 52a without the wavelength conversion by the wavelength converter 51 of the phosphor tube 50 and travel toward the frame section 161A of the frame 16.

Because the phosphor tube 50 is held with the holder 60 in this embodiment, the wavelength conversion is not performed in spaces on the upper outer side and the lower outer side of the phosphor tube 50 corresponding to the holder 60 (by the thickness of the front-side holding wall 61 and by the thickness of the rear-side holding wall 62). Therefore, some of the primary light rays emitted by the LEDs 17 travel toward the frame section 161A of the frame 16 without the wavelength conversion by the phosphor tube 50.

In the area closer to the LEDs 17, the intensity of light is higher in comparison to other areas. Furthermore, more light rays without the wavelength conversion by the phosphor tube 50 (i.e., more primary light rays) exist in the area closer to the LEDs 17 in comparison to other areas. In such a condition, the blue light rays (the primary light rays) traveling toward the frame section 161A of the frame 16 and reaching the complementary color member 222 on the back surface 161Aa of a frame section 151A are absorbed by the complementary color member 122.

In this embodiment, the primary light rays (the blue light rays) passing through the light entering end 190 of the light guide plate 19 without the wavelength conversion can be reduced. The whitish light exits from the light entering end 190 of the light guide plate 19. Therefore, light passing through the optical members 15 and reaching the liquid crystal panel 11 is less likely to have color unevenness. With the complementary color member 222, the light rays exiting from an end portion of the lighting unit 12D in which the LEDs 17 are disposed (on the light entering end 190 side of the light guide plate 19) are less likely to be tinted blue (the color of the primary light rays from the LEDs 17) more than the light rays exiting from the center portion of the lighting unit 12D. Therefore, the planar light emitted by the lighting unit 12D including the light rays is less likely to have color unevenness.

### <Sixth Embodiment>

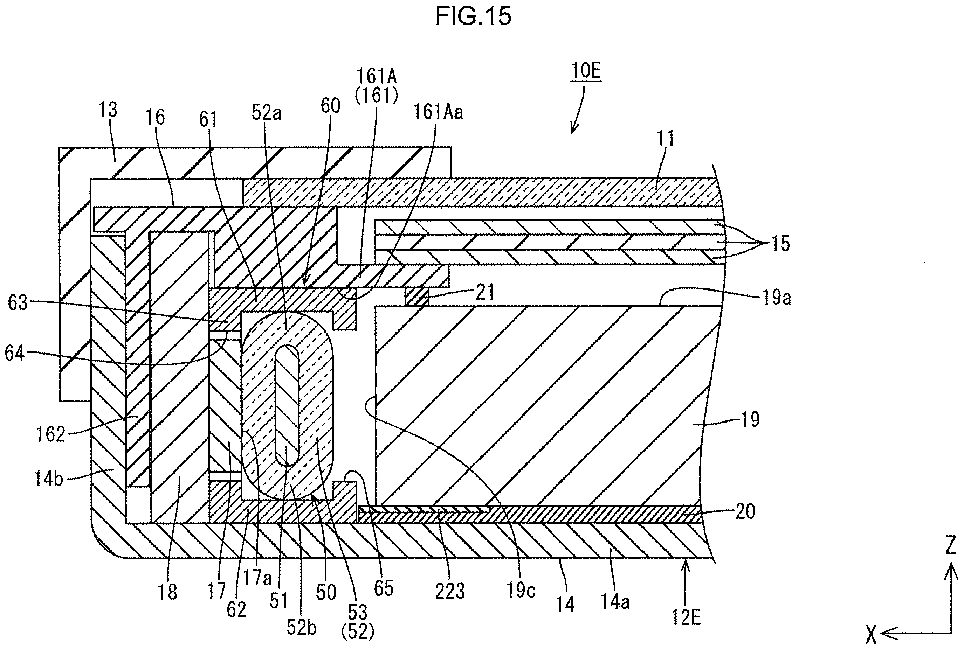

A sixth embodiment of the present invention will be described with reference to FIG. 15. In this section, a liquid crystal display device 10E including a lighting unit 12E will be described. FIG. 15 is a magnified cross-sectional view illustrating a light entering surface and therearound in the liquid crystal display device 10E according to the sixth embodiment. The lighting unit 12E included in the liquid crystal display device 10 according to this embodiment includes the phosphor tube 50 held with the holder having the elongated shape similar to the fifth embodiment.

In this embodiment, similar to the fourth embodiment, a complementary color member 223 is disposed to cover the light entering end 190 of the light guide plate 19 including the light entering surface 19c at least from the back surface 19b (the opposite surface) side. The complementary color member 223 is the thin member including the yellow surface and extending in the transverse direction of the light guide plate 19 without breaks.

In this embodiment, the end of the reflection sheet 20 placed under the light guide plate 19 is arranged closer to the LEDs 17. The light rays exiting from the phosphor tube 50 are reflected by the portion of the reflection sheet 20 disposed outer than the light entering surface 19c or the portion of the reflection sheet 20 covering the light entering end 190 from the rear side. The light rays reach the light entering end 190 or therearound of the light guide plate 19.

Because the phosphor tube 50 is held with the holder 60 in this embodiment, the wavelength conversion is not performed in spaces formed on the upper outer side and the lower outer side of the phosphor tube 50 corresponding to the holder 60 (by the thickness of the front-side holding wall 61 and by the thickness of the rear-side holding wall 62). Therefore, the primary light rays emitted by the LEDs 17 travel toward the end of the reflection sheet 20 without the wavelength conversion by the phosphor tube 50.

As described above, this embodiment includes the complementary color member 223 on the front surface of the end of the reflection sheet 20. Some of the primary light rays (the blue light rays) are absorbed by the complementary color member 223. The primary light rays (the blue light rays) exiting from the phosphor tube 50 can be reduced in the area closer to the light entering end 190 of the light guide plate 19. The whitish light exits from the light entering end 190 of the light guide plate 19 similar to other portions. Therefore, light passing through the optical members 15 and reaching the liquid crystal panel 11 is less likely to have color unevenness. With the complementary color member 223, the light rays exiting from an end portion of the lighting unit 12C in which the LEDs 17 are disposed (on the light entering end 190 side of the light guide plate 19) are less likely to be tinted blue (the color of the primary light rays from the LEDs 17) more than the light rays exiting from the center portion of the lighting unit 12C. Therefore, the planar light emitted by the lighting unit 12C including the light rays is less likely to have color unevenness.

### <Seventh Embodiment>

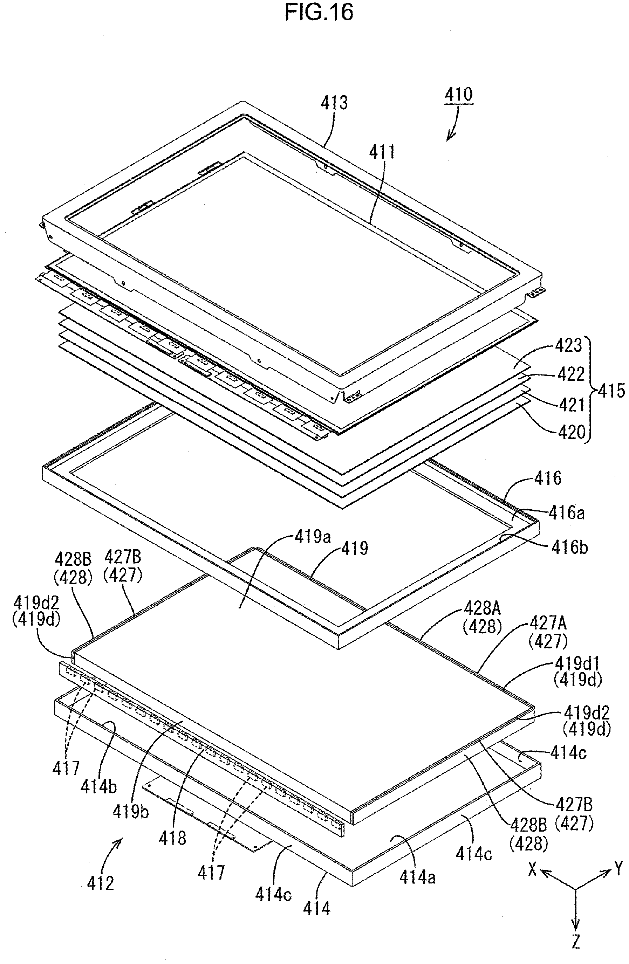

A seventh embodiment of the present invention will be described with reference to FIGS. 16 to 21.

A liquid crystal panel 411 (a display panel) included in a liquid crystal display device 410 has a configuration similar to that of the liquid crystal panel 11 in the first embodiment. As illustrated in FIG. 16, a backlight unit 412 includes a chassis 414 and an optical member 415 (optical sheets). The chassis 414 has a box-like shape and includes a light exiting portion 414b that opens toward the front side (the liquid crystal panel 411 side). The optical member 415 is disposed to cover the light exiting portion 414b of the chassis 414. In the chassis 414, LEDs 417 that are a light source, an LED board 418 on which the LEDs 417 are mounted, a light guide plate 419, and a frame 416 are disposed. The light guide plate 419 is configured to direct the light rays from the LEDs 417 to the optical member 415 (the liquid crystal panel 411). The frame 416 holds the light guide plate 419 from the front side.

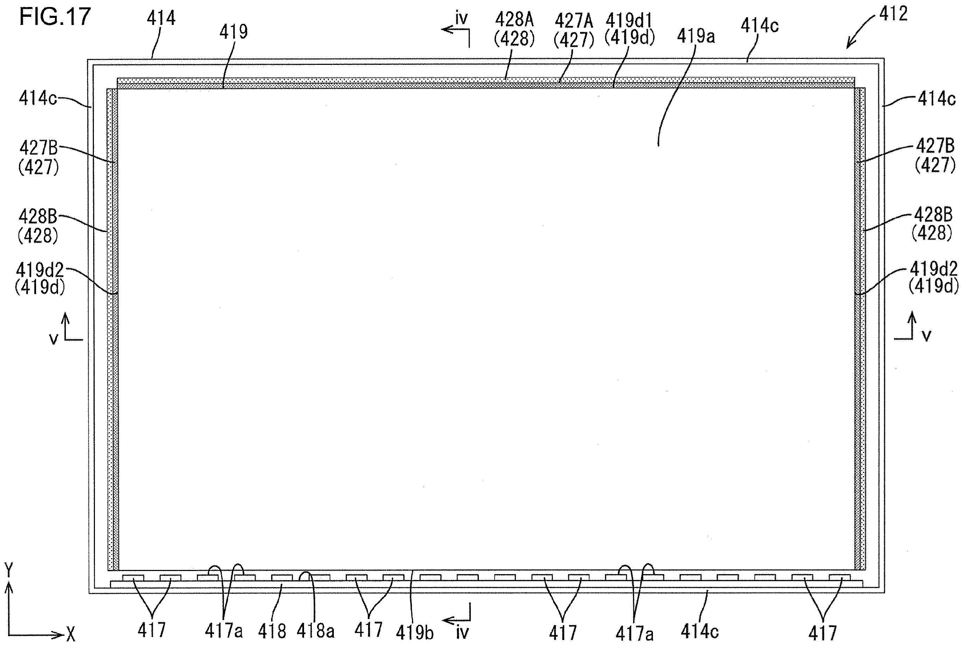

The chassis 414 is made of metal. As illustrated in FIGS. 16 and 17, the chassis 414 includes a bottom 414a and sides 414c. The bottom 414a has a horizontally-long rectangular shape similar to the liquid crystal panel 411. The sides 414c project from outer edges of the bottom 414a at an angle, respectively. The chassis 414 has a shallow box-like overall shape with an opening on the front side. The chassis 414 (the bottom 414a) is oriented with the longitudinal direction corresponding with the X-axis direction (the horizontal direction) and the transverse direction corresponding with the Y-axis direction (the vertical direction). The frame 416 and a bezel 413 can be fixed to the sides 414c.

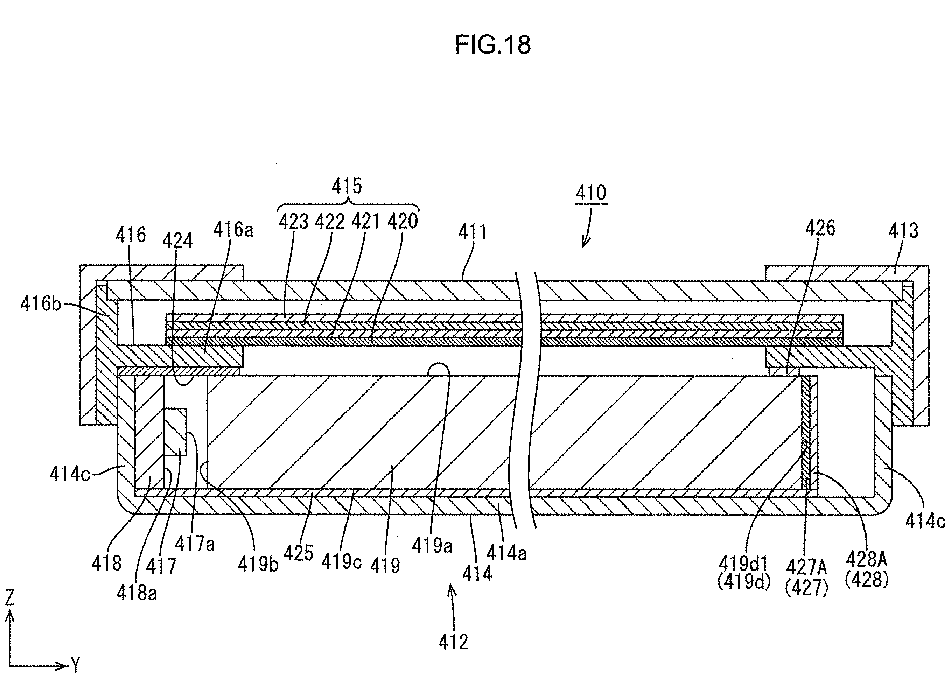

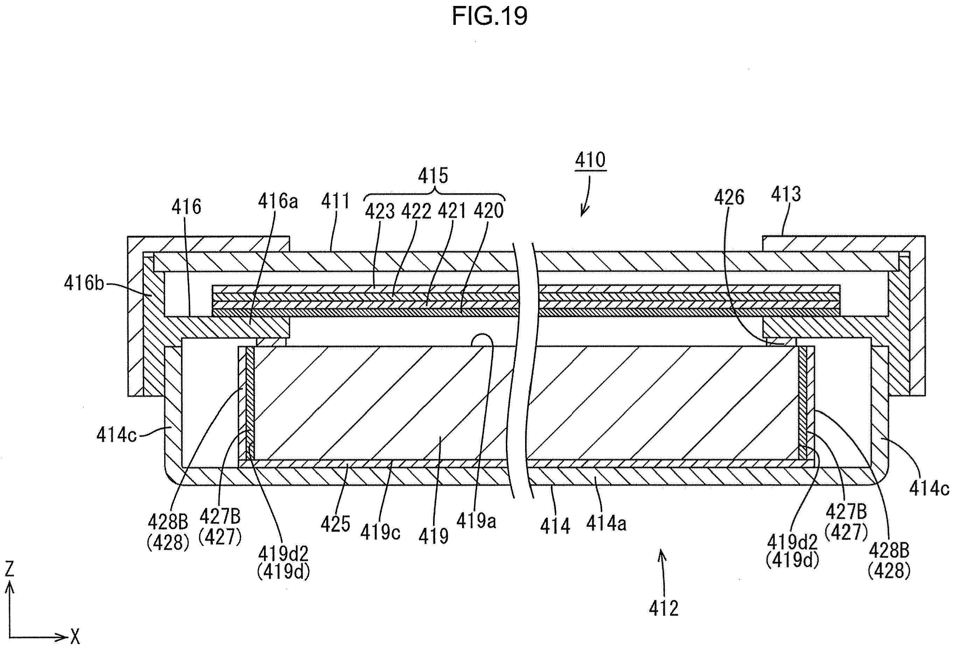

As illustrated in FIG. 16, the optical member 415 has a horizontally-long rectangular shape in a plan view similar to the liquid crystal panel 411 and the chassis 414. The optical member 415 is disposed between the liquid crystal panel 411 and the light guide plate 419 to cover a light exiting portion 414b of the chassis 414. The optical member 415 includes a total of four sheets. Specifically, the optical member 415 includes a plate surface wavelength converting sheet 420 (a plate surface wavelength converting member), a micro lens sheet 421, a prism sheet 422, and a reflective type polarizing sheet 423. The plate surface wavelength converting sheet 420 is configured to convert the light rays emitted by the LEDs 417 (the primary light rays) into light rays with different wavelengths (secondary light rays). The micro lens sheet 421 is configured exert isotropic light collecting effects on light rays. The prism sheet 422 is configured to exert anisotropic light collecting effects on light rays. The reflective type polarizing sheet 423 is configured to reflect and polarize light rays. As illustrated in FIGS. 18 and 19, the optical member 415 is prepared by placing the plate surface wavelength converting sheet 420, the micro lens sheet 421, the prism sheet 422, and the reflective type polarizing sheet 423 on top of one another in this sequence from the rear side. The peripheral portion of the optical member 415 is placed on the front surface of the frame 416.

As illustrated in FIG. 16, the frame 416 includes a horizontally-long frame portion 416a (a picture frame portion) extending along the peripheral portions of the light guide plate 419 and the optical member 415. The frame portion 416a holds the peripheral portion of the light guide plate 419 from the front side for about an entire periphery. As illustrated in FIG. 18, a frame-side reflection sheet 424 is attached to a back surface of one of long edge sections of the frame portion 416a, that is, a surface opposed to the light guide plate 419 and the LED board 418 (the LEDs 417). The frame-side reflection sheet 424 includes a white surface having high light reflectivity. The frame-side reflection sheet 424 has a length to extend for about an entire length of the long edge section of the frame portion 416a. The frame-side reflection sheet 424 directly contact the end of the light guide plate 419 on the LED 417 side to collectively cover the end and the LED board 418 from the front side. The frame portion 416a of the frame 416 is disposed between the optical member 415 (the plate surface wavelength converting sheet 420) and the light guide plate 419. The frame portion 416a supports the peripheral portion of the optical member 415 from the rear side to maintain the optical member 415 and the light guide plate 419 away from each other by the frame portion 416a. Cushioning members are disposed on back surfaces of three other edge sections of the frame portion 416a of the frame 416 other than the long edge section on which the frame-side reflection sheet 424 is disposed (on the light guide plate 419 side). The cushions are made of PORON (registered trademark), for example. The frame 416 includes a liquid crystal panel supporting portion 416b that project from the frame portion 416a toward the front side and supports the peripheral portion of the liquid crystal panel 411 from the rear side.

The LEDs 417 and the LED board 418 on which the LEDs 417 have configurations similar to those of the LEDs 17 and the LED board 18 in the first embodiment.

The light guide plate 419 is made of synthetic resin (e.g., acrylic resin such as PMMA) which has a refractive index sufficiently higher than that of the air and is substantially transparent (with high light transmissivity). As illustrated in FIGS. 16 and 17, the light guide plate 419 has a horizontally-long rectangular shape similar to the liquid crystal panel 411 and the chassis 414 in the plan view. The light guide plate 419 is formed in a plate shape with a thickness larger than that of the optical member 415. As illustrated in FIGS. 18 and 19, the light guide plate 419 is disposed directly below the liquid crystal panel 411 and the optical member 415 in the chassis 414. A first long end surface of the long end surfaces of the peripheral surfaces (on the lower side in FIGS. 16 and 17, the left side in FIG. 18) is opposed to the LEDs 417 on the LED board 418 disposed one of the long ends of the chassis 414. The light guide plate 419 receives the light rays emitted by the LEDs 417 in the Y-axis direction, transmits the light rays therethrough, and directs the light rays toward the optical member 415 (the front side).

As illustrated in FIGS. 18 and 19, the front plate surface of the light guide plate 419 is configured as a light exiting plate surface 419a (a light exiting surface) through which the light rays traveling through the light guide plate 419 exit toward the optical member 415 and the liquid crystal panel 411. The long end surfaces of the peripheral surfaces of the light guide plate 419 adjacent to the plate surface have elongated shapes along the X-axis direction (a direction in which the LEDs 417 are arranged, the longitudinal direction of the LED board 418). The first long end surfaces (on the lower side in FIGS. 16 and 17) is disposed to the LEDs 417 (the LED board 418) with a predefined distance therebetween. The first long end surface is a light entering end surface 419b (a light entering surface) through which the light rays emitted by the LEDs 417 directly enters. Because the light entering end surface 419b is opposed to the LEDs 417, it may be referred to as "an LED opposed end surface (a light source opposed end surface)." The light entering end surface 419b is a surface parallel to the X-axis direction and the Z-axis direction and substantially perpendicular to the light exiting plate surface 419a. The peripheral surfaces of the light guide plate 419 other than the light entering end surface 419b (a second long end surface and short end surfaces) are non-light-entering end surfaces 419d through which the light rays emitted by the LEDs 417 do not directly enter. Because the non-light-entering surfaces 419d are not opposed to the LEDs 417, they may be referred to as "LED non-opposed end surfaces (light source non-opposed end surfaces)." The non-light-entering end surfaces 419d include a non-light-entering opposite end surface 419d1 and a pair of non-light-entering lateral end surfaces 419d2. The non-light-entering opposite end surface 419d1 is the long end surface of the light guide plate 419 on the opposite side from the light entering end surface 419b, that is, the second long end surface of the light guide plate 419. The non-light-entering lateral end surfaces 419d2 are the short end surfaces of the light guide plate 419 adjacent to the light entering end surface 419b and the non-light-entering opposite end surface. In this embodiment, the LED non-opposed end surfaces are referred to as "the non-light-entering end surfaces 419d." However, some light rays may enter therethrough. For example, light rays that leak from the non-light-entering end surface 419d to the outside may be reflected by the sides 414c of the chassis 414 and returned to the light guide plate 419. Such light rays may enter the light guide plate 419 through the non-light-entering end surface 419d.

A plate surface reflection sheet 425 (a plate surface reflection member) is disposed on an opposite plate surface 419c of the light guide plate 419 on the side opposite from the light exiting plate surface 419a to cover the opposite plate surface 419c on the rear side. The plate surface reflection sheet 425 is made of synthetic resin (e.g., foamed PET) including a white surface having high light reflectivity. The plate surface reflection sheet 425 reflects light rays traveling through the light guide plate 419 and reach the opposite plate surface 419c to direct the light rays to the front side, that is, toward the light exiting plate surface 419a. The plate surface reflection sheet 425 is disposed to cover substantially an entire area of the opposite plate surface 419c of the light guide plate 419. The plate surface reflection sheet 425 includes an extended portion that overlaps the LED board 418 (the LEDs 417) in the plan view. The extended portion and the frame-side reflection sheet 424 on the front side sandwich the LED board 418 (the LEDs 417). According to the configuration, the light rays from the LEDs 417 are repeatedly reflected by the reflection sheets 424 and 425 and thus the light entering end surface 419b efficiently receives the light rays. A light reflecting pattern (not illustrated) are formed on the opposite plate surface 419c of the light guide plate 419 for reflecting the light rays inside the light guide plate 419 toward the light exiting plate surface 419a to increase the light rays exiting through the light exiting plate surface 419a. The light reflecting pattern includes light reflectors. The light reflectors in the light reflecting pattern are light reflecting dots with distribution density that changes according to a distance from the light entering end surface 419b (the LEDs 417). Specifically, the distribution density of the light reflecting dots of the light reflectors becomes higher as the distance from the light entering end surface 419b in the Y-axis direction becomes larger (closer to the non-light-entering opposite end surface 419d1). The distribution density becomes lower as the distance to the light entering end surface 419b becomes smaller (farther from the non-light-entering opposite end surface). According to the configuration, the light rays from the light exiting plate surface 419a are evenly distributed within a plane.

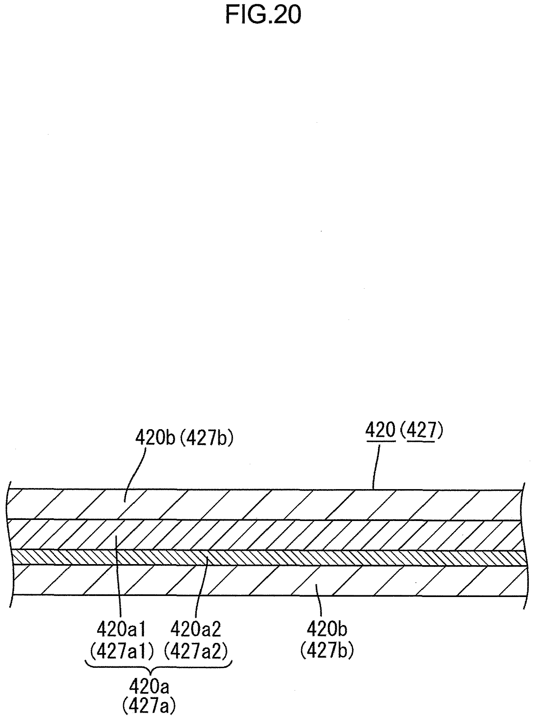

The plate surface wavelength converting sheet 420 has a configuration similar to that of the phosphor sheet 150 in the first embodiment. As illustrated in FIG. 20, the plate surface wavelength converting sheet 420 includes a wavelength converting layer 420a (a phosphor film) and a pair of protective layers 420b (protective films). The wavelength converting layer 420a contains phosphors (wavelength converting substances) for performing the wavelength conversion on the light rays from the LEDs 417. The protective layers 420b sandwich the wavelength converting layer 420a in the front-rear direction to protect the wavelength converting layer 420a. In the wavelength converting layer 420a, red phosphors and green phosphors are dispersed. The red phosphors emit red light rays (visible light rays in a specific wavelength range to exhibit red) when exited by single color of blue light rays that is excitation light rays. The green phosphors emit green light rays (visible light rays in a specific wavelength range to exhibit blue) when exited by single color of blue light rays that is excitation light rays. The plate surface wavelength converting sheet 420 performs the wavelength conversion on the light rays emitted by the LEDs 417 (the blue light rays, the primary light rays) into secondary light rays (green light rays and red light rays) which exhibits color (yellow) which makes a complementary color pair with the color of light rays emitted by the LEDs 417 (blue). The plate surface wavelength converting sheet 420 is prepared by applying a phosphor layer 420a2 including the red phosphors and the green phosphors dispersed therein to a base 420a1 (a phosphor base) made of substantially transparent synthetic resin and in a film form. The protective layers 420b are made of substantially transparent synthetic resin and in film forms. The protective layers 420b have high moisture resistance.

More specifically, the phosphors contained in the wavelength converting layer 420a are down conversion type (down shifting type) phosphors, excitation wavelengths of which are shorter than fluorescence wavelengths. The down conversion type phosphors convert excitation light rays having shorter wavelengths and high energy levels into fluorescence light rays having longer wavelengths and lower energy levels. In comparison to a configuration in which up conversion type phosphors, the excitation wavelengths of which are longer than the fluorescent wavelengths (e.g., about 28 % of quantum efficiency), the quantum efficiency (light conversion efficiency) is higher, which is about 30 % to 50 %. The phosphors are quantum dot phosphors. The quantum dot phosphors in this embodiment are core-shell type quantum dot phosphors. Each core-shell type quantum dot phosphor includes a quantum dot and a shell that is made of a semiconductor material having a relatively large bandgap and covering the quantum dot. An example of the core-shell type quantum dot phosphor is Lumidot (trademark) CdSe/ZnSj manufactured by Sigma-Aldrich Japan LLC.

As illustrated in FIGS. 18 and 19, in the edge-light type backlight unit 412 in this embodiment, some of light rays exiting from the light guide plate 419 through the light exiting plate surface 419a are not converted to light rays with other wavelengths by the plate surface wavelength converting sheet 420 and such light rays may not be included in exiting light from the backlight unit 412. The light rays may be retroreflected and returned to the light guide plate 419, and then included in the exiting light from the backlight unit 412. The number of times at which the retroreflected light rays are reflected tends to be smaller in the outer area than the center portion of the light guide plate 419, namely, the number of times at which the retroreflected light rays pass through the plate surface wavelength converting sheet 420 tends to be smaller. Therefore, the retroreflected light rays are less likely to be converted to light rays with other wavelengths by the plate surface wavelength converting sheet 420. The color of the retroreflected light rays exiting from the peripheral portion of the light guide plate 419 (including the non-light-entering end surfaces 419d) are closer to the color of the light from the LEDs 417, that is, closer to blue in comparison to the color of the retroreflected light rays exiting from the center portion of the light guide plate 419. Some light rays transmitting through the light guide plate 419 may not exit through the light exiting plate surface 419a. Some light rays may exit through the non-light-entering end surfaces 419d. Especially, some of the light rays emitting by the LEDs 417 entering the light guide plate 419 through the light entering end surface 419b and transmitting through the light guide plate 419 exit through the non-light-entering surfaces 419d. Such light rays exhibit blue. The light rays exiting from the peripheral portion of the light guide plate 419 are less likely to be converted to light rays with other wavelengths by the plate surface wavelength converting sheet 420 according to the known technology. If the light rays leak to the outside via the gap between a cushion 426 and the light guide plate 419, the light exiting from the backlight unit 412 may be bluish only in the peripheral portion. Namely, the color of the light exiting from the peripheral portion of the backlight unit 412 and the color of the light exiting from the center portion of the backlight unit 412 tend to be different.

As illustrated in FIGS. 17 to 19, the backlight unit 412 in this embodiment includes an end surface wavelength converting sheets 427 (an end surface wavelength converting member) and an end surface reflection sheets 428 (an end surface reflection member). The end surface wavelength converting sheets 427 are disposed to overlap the non-light-entering end surfaces 419d of the light guide plate 419. Each end surface wavelength converting sheet 427 contains phosphors to convert the light rays from the LEDs 417 to light rays with other wavelengths. Each end surface reflection sheet 428 is disposed on a side opposite from the non-light-entering end surface 419d side relative to the corresponding end surface wavelength converting sheet 427 to overlap the end surface wavelength converting sheet 427. The end surface reflection sheets 428 reflect the light rays that have passed through the end surface wavelength converting sheets 427. Each end surface wavelength converting sheets 427 contains phosphors (green phosphors and red phosphors) which emit secondary light rays exhibiting the same color as or a similar color to the color of the secondary light rays obtained through the wavelength conversion by the plate surface wavelength converting sheet 420, that is, a color (yellow) which makes a complementary color pair with the color of light rays emitted by the LEDs 417 (the blue light rays, the primary light rays). According to the configuration, the light rays in the peripheral portions of the light guide plate 419 and exiting through the non-light-entering end surfaces 419d are less likely to be converted to light rays with other wavelengths by the phosphors contained in the end surface wavelength converting sheets 427. Some blue light rays emitted by the LEDs 417 and transmitting through the light guide plate 419 after entering the light guide plate 419 through the light entering end surface 419b may exit through the non-light-entering end surface 419d. Some retroreflected light rays are bluish because the number of times at which the light rays are reflected is small (a containing rate of the blue light rays is high). When such light rays pass through the end surface wavelength converting sheets 27, such light rays are converted to light rays with other wavelengths by the green phosphors and the red phosphors contained in the end surface wavelength converting sheets 427, that is, to green light rays and red light rays. The light rays passed through the end surface wavelength converting sheets 427 are reflected by the end surface reflection sheets 428 each disposed on the side opposite from the non-light-entering end surface 419d relative to the corresponding end surface wavelength converting sheet 427 to overlap the end surface wavelength converting sheet 427 and returned to the end surface wavelength converting sheet 427. The light rays are converted to light rays with other wavelengths. The light rays enter through the non-light-entering end surfaces 419d and exit through the light exiting plate surface 419a. Even if the light rays are retroreflected for the smaller number of times in the peripheral portion of the light guide plate 419 is small, the light rays are properly converted to light rays with other wavelengths by the end surface wavelength converting sheets 427 after exited through the non-light-entering end surfaces 419d. Furthermore, the light rays are returned to the light guide plate 419 by the end surface reflection sheets 428 so that the light rays do not exit to the outside through the non-light-entering end surfaces 419d. According to the configuration, a difference between the color of the light exiting from the center portion of the backlight unit 412 and the color of the light exiting from the peripheral portion of the backlight unit 412 is less likely to occur. Therefore, color unevenness is less likely to occur and high light use efficiency can be achieved. In FIG. 17, the end surface wavelength converting sheets 427 and the end surface reflection sheets 428 are indicated with fine dots and coarse dots, respectively, to distinguish the end surface wavelength converting sheets 427 from the end surface reflection sheets 428.

Each end surface wavelength converting sheet 427 has a configuration similar to that of the plate surface wavelength converting sheet 420 described earlier. As illustrated in FIG. 20, the end surface wavelength converting sheet 427 includes a wavelength converting layer 427a and a pair of protective layers 427b. The wavelength converting layer 427a contains phosphors to convert the light rays from the LEDs 417 to light rays with other wavelengths. The protective layers 427b sandwich the wavelength converting layer 427a from the front-rear direction to protect the wavelength converting layer 427a. In FIG. 20, detailed cross-sectional configurations of the plate surface wavelength converting sheet 420 and the end surface wavelength converting sheets 427 are commonly illustrated. Reference numbers related to the configuration of the end surface wavelength converting sheets 427 are enclosed in parentheses. As illustrated in FIGS. 18 and 19, each end surface reflection sheet 428 has a configuration similar to that of the plate surface reflection sheet 425 described earlier. The end surface reflection sheet 428 is made of synthetic resin (e.g., foamed PET) with a white surface having high light reflectivity.

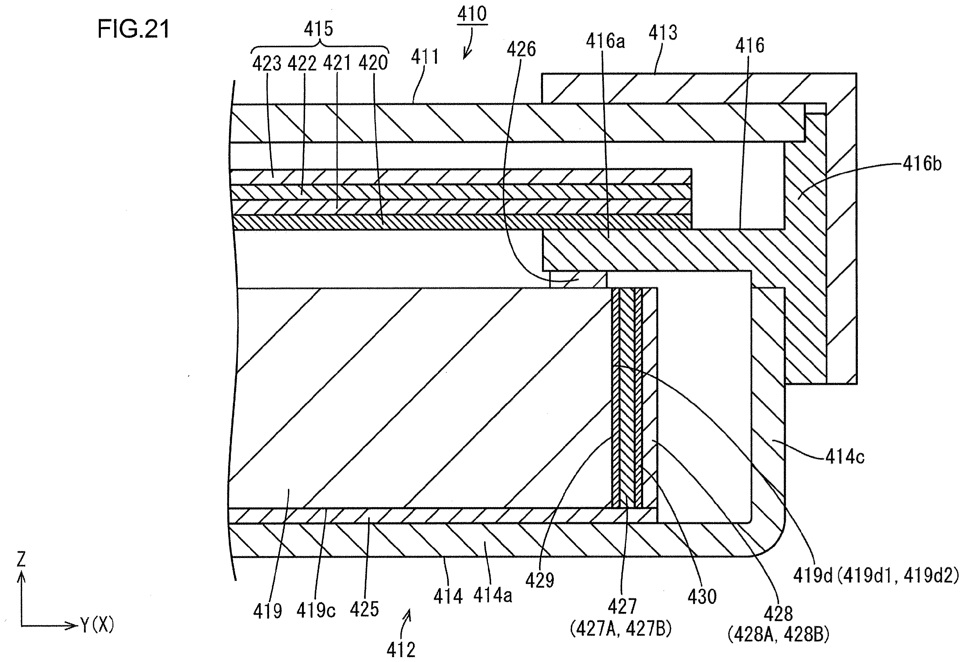

As illustrated in FIG. 21, the end surface wavelength converting sheets 427 are bonded to the non-light-entering end surfaces 419d of the light guide plate 419 with light guide plate-side adhesive layers 429 and provided integrally with the light guide plate 419. A surface boundary such as an air layer is less likely to be created between each non-light-entering end surface 419d of the light guide plate 419 and the corresponding end surface wavelength converting sheet 427. Therefore, the light rays exiting through the non-light-entering end surfaces 419d are less likely to be improperly refracted before reaching the end surface wavelength converting sheets 427. Because the light rays exiting from the light guide plate 419 through the non-light-entering end surfaces 419d properly pass through the end surface wavelength converting sheets 427, high wavelength converting efficiency can be achieved. This is preferable for reducing the color unevenness. The end surface wavelength converting sheets 427 are bonded to the end surface reflection sheets 428 with end surface reflection sheet-side adhesive layers 430 (end surface reflection member-side adhesive layers) and provided integrally with the end surface reflection sheets 428. A surface boundary such as an air layer is less likely to be created between each end surface wavelength converting sheet 427 and the corresponding end surface reflection sheet 428. Therefore, the light rays exiting through the end surface wavelength converting sheets 427 are less likely to be improperly refracted before reaching the end surface reflection sheets 428. Because the light rays transmitting through the end surface wavelength converting sheets 427 are properly reflected by the end surface reflection sheets 428, high light use efficiency can be achieved.

As illustrated in FIGS. 17 to 19, each end surface wavelength converting sheets 427 is disposed to cover the corresponding non-light-entering end surface 419d of the light guide plate 419 for the entire length of the non-light-entering end surface 419d in the height direction (the Z-axis direction) and for the entire length of the non-light-entering end surface 419d in the length direction (the X-axis direction or the Y-axis direction). Namely, each end surface wavelength converting sheet 427 has an area about the same as an area of the corresponding non-light-entering end surface 419d or larger. Each end surface reflection sheet 428 is disposed to cover the corresponding end surface wavelength converting sheet 427 for the entire length of the end surface wavelength converting sheet 427 in the width direction (the Z-axis direction) and for the entire length of the end surface wavelength converting sheet 427 in the length direction (the X-axis direction or the Y-axis direction). Namely, each end surface reflection sheet 428 has an area about the same as the area of the end surface wavelength converting sheet 427 or larger.

As illustrated in FIGS. 17 to 19, three end surface wavelength converting sheets 427 are disposed to a non-light-entering opposite end surface 419d1 and the non-light-entering lateral end surfaces 419d2 of the non-light-entering end surfaces 419d of the light guide plate 419, respectively, on the outer sides. The end surface wavelength converting sheets 427 include an opposite end surface wavelength converting sheet 427A and lateral end surface wavelength converting sheets 427B. The opposite end surface wavelength converting sheet 427A overlaps the non-light-entering opposite end surface 419d1. The lateral end surface wavelength converting sheets 427B overlap the non-light-entering lateral end surfaces 419d2, respectively. Three end surface reflection sheets 428 are disposed to overlap the end surface wavelength converting sheets 427, respectively, on the outer sides.

As illustrated in FIGS. 17 to 19, the end surface wavelength converting sheets 427 are disposed over the entire areas of the non-light-entering end surfaces 419d of the light guide plate 419. Furthermore, the end surface reflection sheets 428 are disposed over the entire areas of the end surface wavelength converting sheets 427. Some of the light rays transmitting through the light guide plate 419 exit through the non-light-entering opposite end surface 419d1 of the non-light-entering end surfaces 419d of the light guide plate 419 and some of the light rays exit through the non-light-entering lateral end surfaces 419d2. According to the configuration, the light rays exiting through the non-light-entering opposite end surface 419d1 and the non-light-entering lateral end surfaces 419d2 are efficiently converted to light rays with other wavelengths by the phosphors in the end surface wavelength converting sheets 427. The end surface reflection sheets 428 are disposed on the side opposite from the non-light-entering opposite end surface 419d1 side relative to the end surface wavelength converting sheets 427 that are disposed over the non-light-entering opposite end surface 419d1. Therefore, the light rays exiting through the non-light-entering opposite end surface 419d1 and the non-light-entering lateral end surfaces 419d2 are reflected by the end surface reflection sheets 428 and returned to the light guide plate 419. This configuration is preferable for reducing the color unevenness.

Next, functions of this embodiment having the configuration will be described. When the liquid crystal display device 410 having the configuration described above is turned on, the driving of the liquid crystal panel 411 is controlled by the panel controller circuit on the control circuit board, which is not illustrated. The LED driver circuit on the LED driver circuit board, which is not illustrated, supplies driving power to the LEDs 417 on the LED board 418 to control the driving of the LEDs 417. The light from the LEDs 417 are guided by the light guide plate 419 to travel to the liquid crystal panel 411 via the optical member 415. With the light, a specific image is displayed on the liquid crystal panel 411. Functions of the backlight unit 412 will be described in detail.

When the LEDs 417 are turned on, the light rays emitted by the LEDs 417 enter the light guide plate 419 through the light entering end surface 419b as illustrated in FIG. 18. The space provided between the LEDs 417 and the light entering end surface 419b is closed with the frame-side reflection sheet 424 on the front side and the extended portion of the plate surface reflection sheet 425 on the rear side. Therefore, the light rays are repeatedly reflected by portions of the reflection sheets 424 and 425 opposed to each other. The light rays enter through the light entering end surface 419b with efficiency. The light rays entering through the light entering end surface 419b may be totally reflected by the interface between the light guide plate 419 and the air layer on the outside or reflected by the plate surface reflection sheet 425 to transmit through the light guide plate 419. The light rays transmitting through the light guide plate 419 are reflected by the light reflectors of the light reflecting pattern to different directions. The light rays enter the light exiting plate surface 419a with incidence smaller than the critical angle. More light rays exit through the light exiting plate surface 419a. The optical effects are exerted on the light rays exiting from the light guide plate 419 through the light exiting plate surface 419a and passing through the optical members 415. The light rays on which the optical effects are exerted are applied to the liquid crystal panel 411. Some of the light rays are retroreflected by the optical member 415 and returned to the light guide plate 419. The retroreflected light rays exit through the light exiting plate surface 419a and provided as emitting light of the backlight unit 412.

Next, optical effects of the optical member 415 will be described in detail. The blue light rays exiting from the light guide plate 419 through the light exiting plate surface 419a are converted into the green light rays and the red light rays (secondary light) by the green phosphors and the red phosphors contained in the plate surface wavelength converting sheet 420 that is disposed on the front side relative to the light exiting plate surface 419a with the distance therebetween as illustrated in FIG. 18. With the green light rays and the red light rays obtained through the wavelength conversion, that is, the yellow light rays (secondary light) and the blue light from the LEDs 417 (primary light), light rays in substantially white are obtained. Light collecting effects are isotropically exerted on the blue light rays (primary light) from the LEDs 417 and the green light rays and the red light rays obtained through the wavelength conversion (secondary light) with respect to the X-axis direction and the Y-axis direction (isotropic light collecting effects) by the micro lens sheet 421. Then, light collecting effects are selectively exerted on the light rays with respect to the Y-axis direction by the prism sheet 422 (anisotropic light collecting effects). The light rays exiting from the prism sheet 422 to the reflective type polarizing sheet 423 and specific polarized light rays (p-wave) are selectively passed to exit toward the liquid crystal panel 411. Different specific polarized light rays (s-wave) are selectively reflected to the rear side. The s-wave reflected by the reflective type polarizing sheet 423 or the light rays reflected to the rear side without light collecting effects by the prism sheet 422 or the micro lens sheet 421 are returned to the light guide plate 419. While transmitting through the light guide plate 419, the light rays are reflected again by the plate surface reflection sheet 425 to exit again through the light exiting plate surface 419a to the front side.

As illustrated in FIGS. 18 and 19, the light rays transmitting through the light guide plate 419 include the retroreflected light rays that are reflected after exiting through the light exiting plate surface 419a and returned to the light guide plate 419. The number of reflection of the retroreflected light rays, that is, the number of times at which the retroreflected light rays pass through the plate surface wavelength converting sheet 420 tends to be smaller in the center portion of the light guide plate 419 than the peripheral portion of the light guide plate 419. Therefore, the retroreflected light rays exiting from the peripheral portion of the light guide plate 419 (including the peripheral surfaces) tend to be bluish closer to the color of the blue light from the LEDs 417 in comparison to the retroreflected light exiting from the center portion of the light guide plate 419. Some of the blue light rays emitted by the LEDs 417 and transmitting through the light guide plate 419 (primary light) may not exit through the light exiting plate surface 419a and may exit the light guide plate 419 through the non-light-entering end surfaces 419d of the peripheral surfaces.

As illustrated in FIG. 21, the backlight unit 412 in this embodiment includes the end surface wavelength converting sheets 427 and the end surface reflection sheets 428. The end surface wavelength converting sheets 427 are disposed over the non-light-entering end surfaces 419d of the light guide plate 419. The end surface wavelength converting sheets 427 contain the phosphors (the green phosphors and the red phosphors) which emit the secondary light (the green light and the blue light). The secondary light exhibits the color the same as or similar to the secondary light obtained through the wavelength conversion by the plate surface wavelength converting sheet 420, that is, the color (yellow) which makes the complementary color pair with the color of the light emitted by the LEDs 417 (the blue light, the primary color). The end surface reflection sheets 428 are disposed on the sides opposite from the non-light-entering end surface 419d sides relative to the end surface wavelength converting sheets 427 over the end surface wavelength converting sheets 427. The wavelength of the light rays in the peripheral portion of the light guide plate 419 and exiting through the non-light-entering end surfaces 419d can be converted by the phosphors contained in the end surface wavelength converting sheets 427. Some of the blue light rays emitted by the LEDs 417 enter the light guide plate 419 through the light entering end surface 419b, transmit through the light guide plate, and exit through the non-light-entering end surfaces 419d. Some of the retroreflected light rays are bluish (high blue light component rate) because the number of times of the reflection is small. When passing through the end surface wavelength converting sheets 427, those light rays are converted to the green light rays and the red light rays (the light rays in the color that makes the complementary color pair with the color of the primary light rays, the light rays in the color the same as or similar to the color of the secondary light rays regarding the plate surface wavelength converting sheet 420) by the green phosphors and the red phosphors contained in the end surface wavelength converting sheets 427.

The light rays passed through the end surface wavelength converting sheets 427 are reflected by the end surface reflection sheets 428 disposed on the opposite side from the non-light-entering end surface 419d sides relative to the end surface wavelength converting sheets 427 over the end surface wavelength converting sheets 427. The light rays are returned to the end surface wavelength converting sheets 427 and the wavelengths of the light rays are converted. The light rays enter through the non-light-entering end surfaces 419d and exit through the light exiting plate surface 419a. Even though the number of reflection of the light rays in the peripheral portion of the light guide plate 419 when they are retroreflected is small, the wavelength of the light rays are properly converted by the end surface wavelength converting sheets 427 after exiting through the non-light-entering end surfaces 419d. Furthermore, the light rays are returned to the light guide plate 419 by the end surface reflection sheets 428 so that the light rays exiting through the non-light-entering end surfaces 419d do not exit to the outside. Even if the light rays exiting through the non-light-entering end surfaces 419d leak to the outside through the gap between the cushion 426 and the light guide plate 419, the difference in color between the light exiting from the center portion of the backlight unit 412 and the light exiting from the peripheral portion of the backlight unit 412 is less likely to occur. This configuration is preferable for reducing the color unevenness.

As illustrated in FIG. 21, the end surface wavelength converting sheets 427 are bonded to the non-light-entering end surfaces 429d of the light guide plate 419 via the light guide plate-side adhesive layers 429. The end surface wavelength converting sheets 427 are provided integrally with the light guide plate 419. The non-light-entering end surfaces 419d of the light guide plate 419 and the end surface wavelength converting sheets 427 are less likely to have interfaces such as air layers therebetween. Therefore, the light rays exiting through the non-light-entering end surfaces 419d are less likely to be improperly refracted before reaching the end surface wavelength converting sheets 427. The light rays exiting from the light guide plate 419 through the non-light-entering end surfaces 419d are more likely to pass through the end surface wavelength converting sheets 427. Higher wavelength converting efficiency can be achieved. This configuration is preferable for reducing the color unevenness. The end surface wavelength converting sheets 427 are bonded to the end surface reflection sheets 428 via the end surface reflection sheet-side adhesive layers 430 (the end surface reflecting member-side adhesive). The end surface wavelength converting sheets 427 are provided integrally with the end surface reflection sheets 428. The end surface wavelength converting sheets 427 and the end surface reflection sheets 428 are less likely to have interfaces such as air layers therebetween. The light rays passing through the end surface wavelength converting sheets 427 are less likely to be improperly refracted before reaching the end surface reflection sheets 428. The light rays passing through the end surface wavelength converting sheets 427 are more likely to be reflected by the end surface reflection sheets 428. Higher wavelength converting efficiency can be achieved.

Furthermore, as illustrated in FIGS. 18 and 19, the entire areas of the non-light-entering end surfaces 419d of the light guide plate 419 (the non-light-entering opposite end surface 419d1 and a pair of the non-light-entering lateral end surfaces 419d2) are covered with the end surface wavelength converting sheets 427. The entire areas of the end surface wavelength converting sheets 427 are covered with the end surface reflection sheets 428. Therefore, the wavelengths of the light rays exiting through the non-light-entering end surfaces 419d are converted with high wavelength converting efficiency and returned to the light guide plate 419. This configuration is preferable for further reducing the color unevenness.

### <Eighth Embodiment>

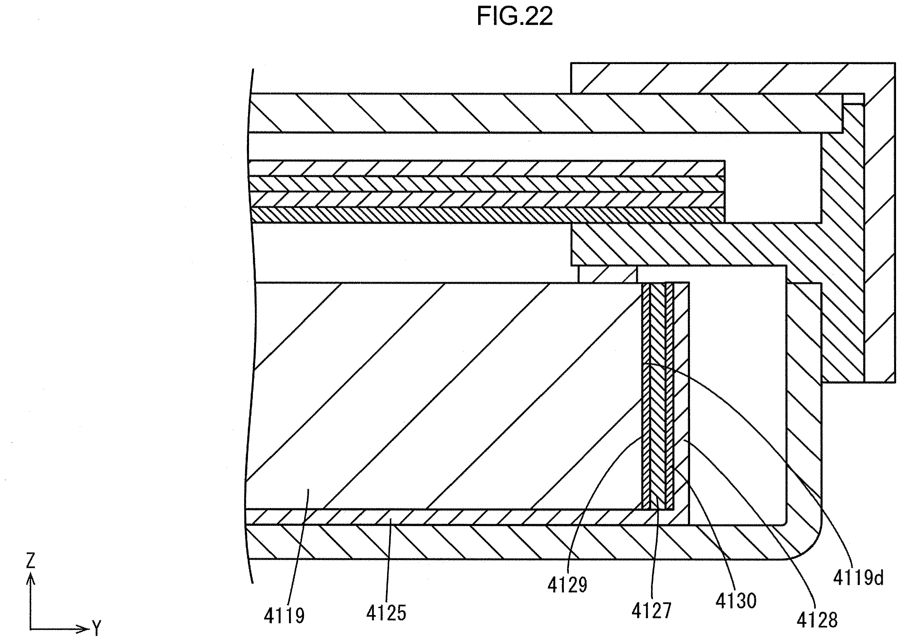

An eighth embodiment of the present invention will be described with reference to FIG. 22. The eighth embodiment includes a plate surface reflection sheet 4125 and an end surface reflection sheets 4128 that are integrated. Configurations, functions, and effects similar to those of the seventh embodiment will not be described.

As illustrated in FIG. 22, the end surface reflection sheets 4128 are integrally formed with the plate surface reflection sheet 4125 in this embodiment. Namely, the end surface reflection sheets 4128 project at about right angle from outer edges of the plate surface reflection sheet 4125 toward the front side. The end surface reflection sheets 4128 are disposed over end surface wavelength converting sheets 4127 that are over non-light-entering end surfaces 4119d on the outer sides (the sides opposite from the non-light-entering end surfaces 4119d). The plate surface reflection sheet 4125 includes extended portions that extend outward from the non-light-entering end surfaces 4119d of a light guide plate 4119 in an unfolded state (before bending the end surface reflection sheets 4128). The extended portions are configured as the end surface reflection sheets 4128. Because the end surface reflection sheets 4128 and the plate surface reflection sheet 4125 are provided as a single component, the number of components can be reduced. Furthermore, because the end surface reflection sheets 4128 and the plate surface reflection sheet 4125 are less likely to have gaps therebetween, leak of light from the light guide plate 4119 is less likely to occur. The end surface wavelength converting sheets 4127 are bonded to the end surface reflection sheets 4128 (the extended portions of the plate surface reflection sheet 4125) via end surface reflection sheet-side adhesive layers 4130 and bonded to the non-light-entering end surfaces 4119d of the light guide plate 4119 via light guide plate-side adhesive layers 4129.

As described above, in this embodiment, the end surface reflection sheets 4128 are integrally formed with the plate surface reflection sheet 4125. Because the end surface reflection sheets 4128 and the plate surface reflection sheet 4125 are provided as a single component, the number of components can be reduced. Furthermore, the end surface reflection sheets 4128 and the plate surface reflection sheet 4125 are less likely to have gaps therebetween. Therefore, leak of light from the light guide plate 4119 is less likely to occur.

### <Ninth Embodiment>

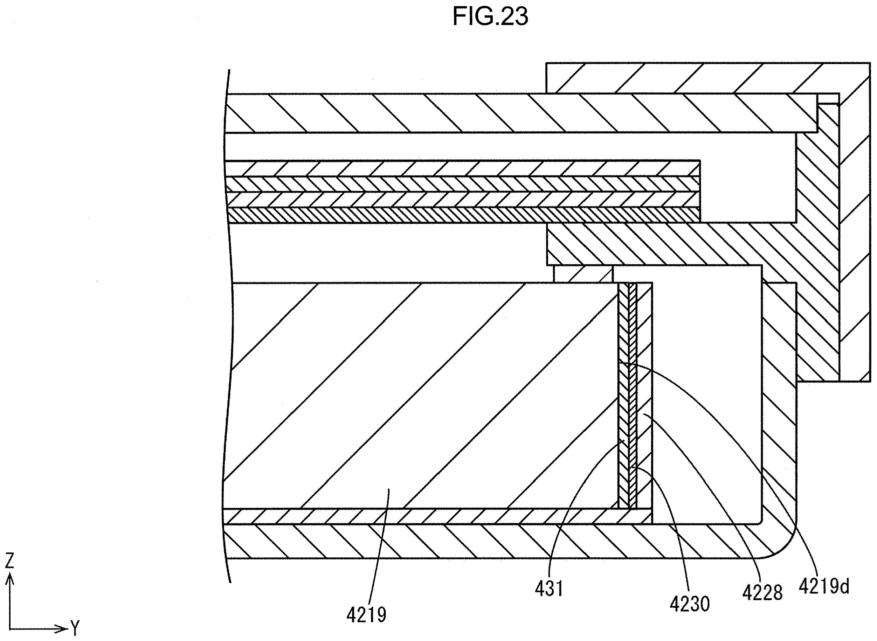

A ninth embodiment of the present invention will be described with reference to FIG. 23. The ninth embodiment includes end surface wavelength converting members 431 instead of the end surface wavelength converting sheets 4127 in the eighth embodiment. Configurations, functions, and effects similar to those of the eighth embodiment will not be described.

As illustrated in FIG. 23, the end surface wavelength converting members 431 in this embodiment are directly applied to non-light-entering end surfaces 4219d of a light guide plate 4219 and integrally provided with the light guide plate 4219. The end surface wavelength converting members 431 are made of fluorescent paint (fluorescent dispersion liquid) containing red phosphors and green phosphors dispersed in a binder. The red phosphors and the green phosphors emit red light and green light, respectively, when excited by a single color of blue light from LEDs that are not illustrated. Specifically, the fluorescent paint is applied to the non-light-entering end surfaces 4219d of the light guide plate 4219 with substantially even thickness. The end surface wavelength converting members 431 are integrally formed with the non-light-entering end surfaces 4219d of the light guide plate 4219 without the light guide plate-side adhesive layers 429 (see FIG. 21) in the seventh embodiment or the interfaces such as the air layers. The end surface wavelength converting members 431 are bonded to end surface reflection sheets 4228 via end surface reflection sheet-side adhesive layers 4230. The following phosphors may be preferable for the phosphors contained in the fluorescent paint of the end surface wavelength converting members 431. The green phosphor may be (Ca, Sr, Ba)₃SiO₄:Eu²⁺, β-SiAlON:Eu²⁺, Ca₃Sc₂Si₃O₁₂:Ce³⁺. The red phosphor may be (Ca, Sr, Ba)₂SiO₅N₈:Eu²⁺, CaAlSiN₃:Ce²⁺ or a complex fluoride fluorescent material (e.g., manganese-activated potassium fluorosilicate (K₂TiF₆)).

As described above, in this embodiment, the end surface wavelength converting members 431 are applied to the non-light-entering end surfaces 4219d of the light guide plate 4219. According to the configuration, the end surface wavelength converting members 431 and the non-light-entering end surfaces 4219d of the light guide plate 4219 are integrated without interfaces such as the air layers.

### <Tenth Embodiment>

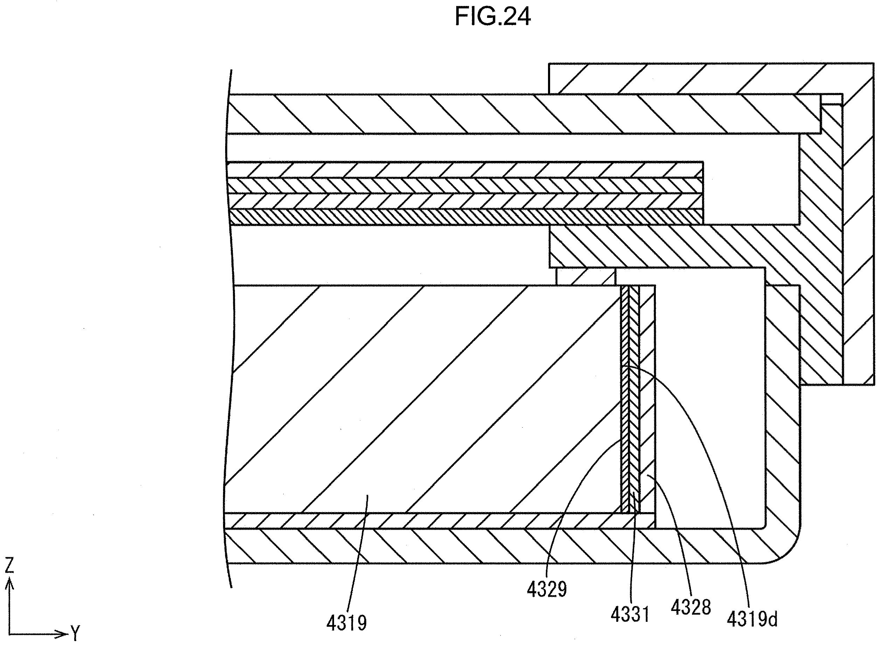

A tenth embodiment of the present invention will be described with reference to FIG. 24. The tenth embodiment includes end surface wavelength converting members arranged differently from those of the ninth embodiment. Configurations, functions, and effects similar to those of the ninth embodiment will not be described.

As illustrated in FIG. 24, end surface wavelength converting members 4331 in this embodiment are directly applied to end surface reflection sheets 4328 and provided integrally with the end surface reflection sheets 4328. Specifically, the end surface wavelength converting members 4331 made of fluorescent paint are applied to surfaces of the end surface reflection sheets 4328 with substantially even thickness. The end surface wavelength converting members 4331 and the end surface reflection sheets 4328 are integrated without the end surface reflection sheet-side adhesive layers 430 (see FIG. 21) in the seventh embodiment or the air layers. Furthermore, the end surface wavelength converting members 4331 are bonded to a non-light-entering end surfaces 4319d of a light guide plate 4319 via light guide plate-side adhesive layers 4329. In comparison to the configuration of the ninth embodiment, the end surface wavelength converting members 4331 are more easily set.

As described above, in this embodiment, the end surface wavelength converting members 4331 are applied to the surfaces of the end surface reflection sheets 4328. According to the configuration, the end surface wavelength converting members 4331 and the end surface reflection sheets 4328 can be integrated without the interfaces such as the air layers. In comparison to a configuration in which the end surface wavelength converting members are applied to the non-light-entering end surfaces 4319d of the light guide plate 4319 to integrate, the end surface wavelength converting members 4331 are more easily set.

### <Eleventh Embodiment>

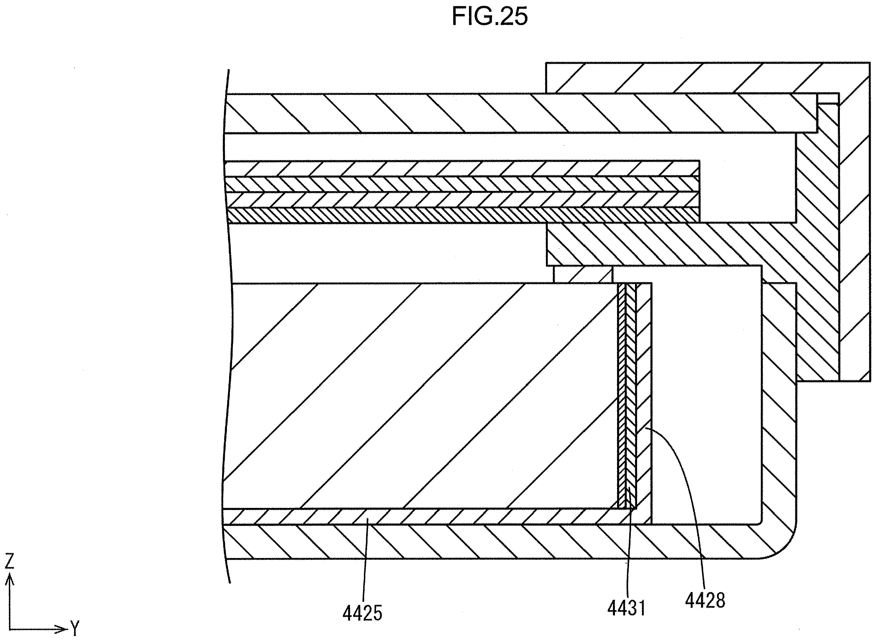

An eleventh embodiment of the present invention will be described with reference to FIG. 25. The eleventh embodiment has a configuration including the configuration of the tenth embodiment combined into the configuration of the eighth embodiment. Configurations, functions, and effects similar to those of the eighth and the tenth embodiments will not be described.

As illustrated in FIG. 25, end surface reflection sheets 4228 in this embodiment are integrally formed with a plate surface reflection sheet 4425. Furthermore, end surface wavelength converting members 4431 are directly applied to surfaces of the end surface reflection sheets 4228 such that the end surface reflection sheets 4228 and the end surface wavelength converting members 4431 are integrated.

### <Twelfth Embodiment>

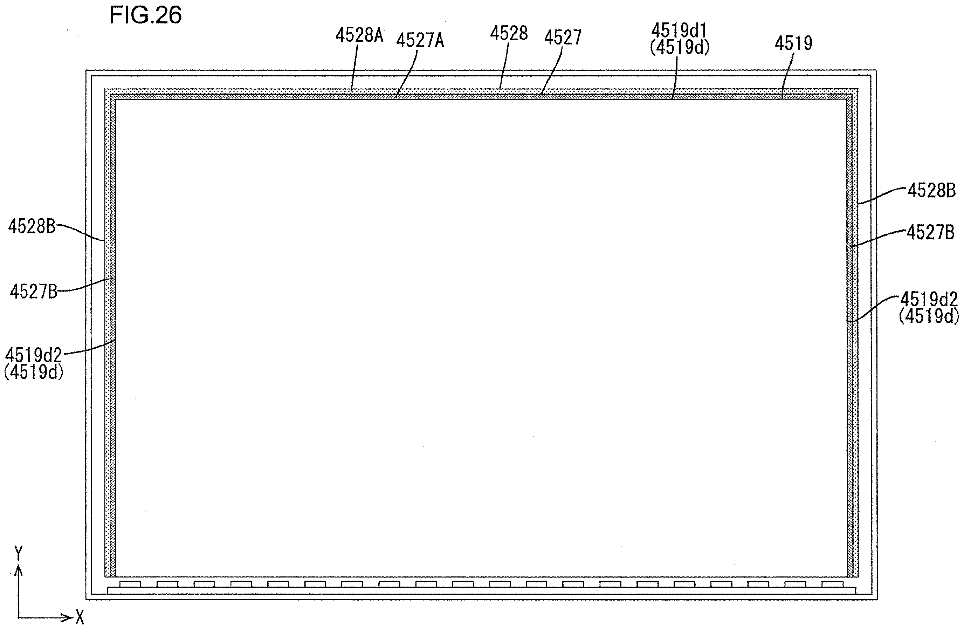

A twelfth embodiment of the present invention will be described with reference to FIG. 26. The twelfth embodiment includes end surface wavelength converting sheets and the end surface reflection sheets that are integrated, which is different from the seventh embodiment. Configurations, functions, and effects similar to those of the seventh embodiment will not be described.

As illustrated in FIG. 26, end surface wavelength converting sheets 4527 include opposite end surface wavelength converting sheet 4527A and a pair of lateral end surface wavelength converting sheets 4527B that continue from one another to be provided as a signal component. An opposite end surface wavelength converting sheet 452A is over a non-light-entering opposite end surface 4519d1 of a light guide plate 4519. The lateral end surface wavelength converting sheets 4527B are over non-light-entering lateral end surfaces 4519d2 of a light guide plate 4529, respectively. Namely, the end surface wavelength converting sheets 4527 are disposed to cover entire areas of the non-light-entering end surfaces 4519d that extend along in a peripheral direction of the light guide plate 4519. A end surface reflection sheets 4528 include an opposite end surface reflection sheet 4528A and a pair of lateral end surface reflection sheets 4528B. The opposite end surface reflection sheet 4528A is over the opposite end surface wavelength converting sheet 4527A. The lateral end surface wavelength converting sheets 4527B are over the lateral end surface wavelength converting sheets 4527B, respectively. The opposite end surface reflection sheet 4528A and the lateral end surface wavelength converting sheets 4527B continue from one another to be provided as a single component. Namely, the end surface reflection sheets 4528 are disposed to cover entire areas of the end surface wavelength converting sheets 4527 that extend along the peripheral direction of the light guide plate 4519.

### <Thirteenth Embodiment>

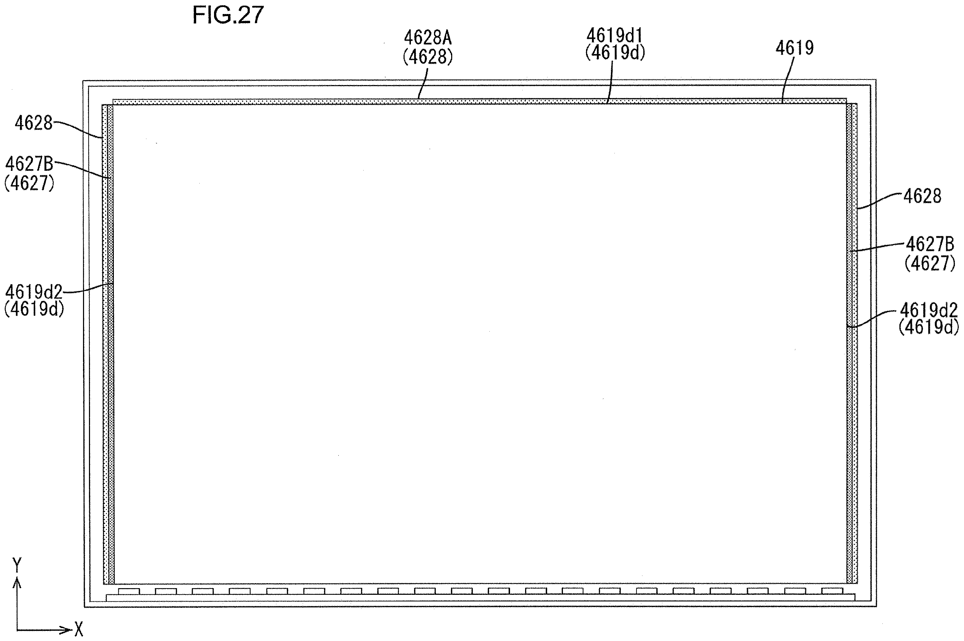

A thirteenth embodiment of the present invention will be described with reference to FIG. 27. The thirteenth embodiment includes the different number of end surface wavelength converting sheets from that of the seventh embodiment. Configurations, functions, and effects similar to those of the seventh embodiment will not be described.

As illustrated in FIG. 27, end surface wavelength converting sheets 4627 in this embodiment are disposed to overlap only non-light-entering lateral end surfaces 4619d2 but not to overlap a non-light-entering opposite end surface 4619d1 of non-light-entering end surfaces 4619d of a light guide plate 4619. The end surface wavelength converting sheets 4627 in this embodiment include a pair of lateral end surface wavelength converting sheets 4627B. An opposite end surface reflection sheet 4628A of end surface reflection sheets 4628 is bonded to the non-light-entering opposite end surface 4619d1 of the light guide plate 4619 with an adhesive layer that is not illustrated.

### <Fourteenth Embodiment>

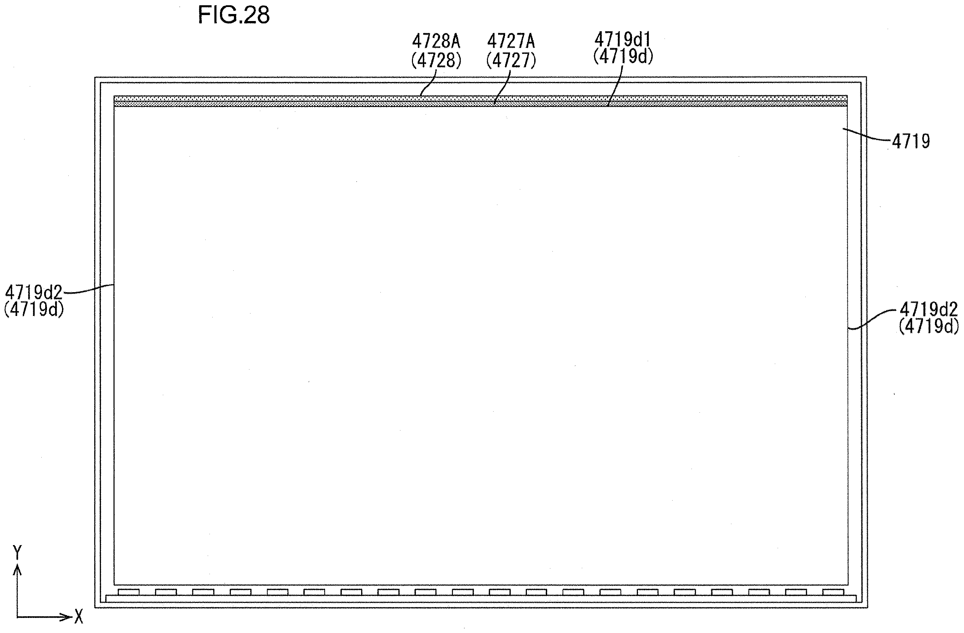

A fourteenth embodiment of the present invention will be described with reference to FIG. 28. The fourteenth embodiment includes the different number of an end surface wavelength converting sheet and the different number of an end surface reflection sheet from those of the seventh embodiment. Configurations, functions, and effects similar to those of the seventh embodiment will not be described.

As illustrated in FIG. 28, end surface wavelength converting sheets 4727 in this embodiment are disposed over non-light-entering opposite end surface 4719d1 but not over non-light-entering lateral end surfaces 4719d2. An end surface wavelength converting sheet 4727 in this embodiment includes only an opposite end surface wavelength converting sheet 4727A. An end surface reflection sheet 4728 includes only an opposite end surface reflection sheet 4728A disposed over the opposite end surface wavelength converting sheet 4727A.

### <Fifteenth Embodiment>

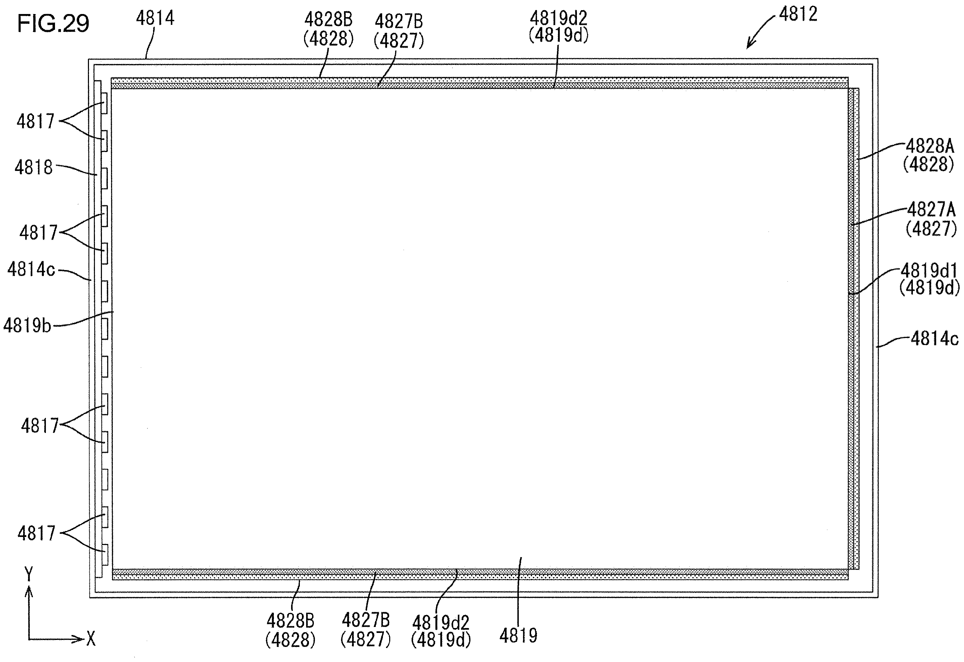

A fifteenth embodiment of the present invention will be described with reference to FIG. 29. The fifteenth embodiment includes LEDs and an LED board arranged differently from those of the seventh embodiment. Configurations, functions, and effects similar to those of the seventh embodiment will not be described.

As illustrated in FIG. 29, a backlight unit 4812 in this embodiment includes LEDs 4817 and an LED board 4818 disposed on a first short edge side of a chassis 4814 (on the left in FIG. 29) . Specifically, the LED board 4818 is attached to a sidewall 4814c of sidewalls 4814c of the chassis 4814 on the first short edge side (on the left in FIG. 29). The LEDs 4817 are mounted on the LED board 4818. The LEDs 4817 are opposed to a first short end surface of peripheral surfaces of a light guide plate 4819. In this embodiment, the first short end surface of the peripheral surfaces of the light guide plate 4819 is configured as a light entering end surface 4819b through which light from the LEDs 4817 enters. Other three end surfaces (a second short end surface and a pair of long end surfaces) are configured as non-light-entering end surfaces 4819d. Among the non-light-entering end surfaces 4819d, the second short end surface is configured as a non-light-entering opposite end surface 4819d1 that is arranged on a side opposite from the light entering end surface 4819b. The long end surfaces are configured as non-light-entering lateral end surfaces 4819d2 that are adjacent to a light entering end surfaces 4819b.

End surface wavelength converting sheets 4827 include an opposite end surface wavelength converting sheet 4827A and a pair of lateral end surface wavelength converting sheets 4827B. The opposite end surface wavelength converting sheet 4827A is disposed over the second short end surface of the peripheral surfaces of the light guide plate 4819, that is, the non-light-entering opposite end surface 4819d1. The lateral end surface wavelength converting sheets 4827B is disposed over the long end surfaces, that is, the non-light-entering lateral end surfaces 4819d2. End surface reflection sheets 4828 include an opposite end surface reflection sheet 4828A and a pair of opposite end surface reflection sheets 4828B. The opposite end surface reflection sheet 4828A is disposed over the opposite end surface wavelength converting sheet 4827A on the outer side. The opposite end surface reflection sheets 4828B is disposed over the lateral end surface wavelength converting sheets 4827B on the outer sides. According to the configuration, the same functions and effects as those of the seventh embodiment are achieved.

### <Sixteenth Embodiment>

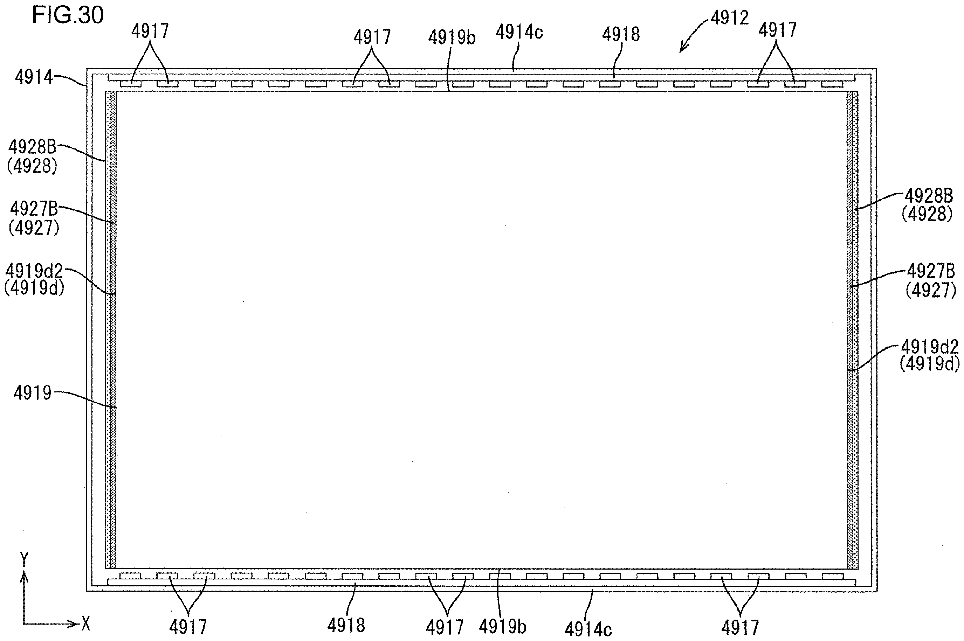

A sixteenth embodiment of the present invention will be described with reference to FIG. 30. The sixteenth embodiment includes a double-edge lighting type backlight unit, which is different from the seventh embodiment. Configurations, functions, and effects similar to those of the seventh embodiment will not be described.

As illustrated in FIG. 30, a backlight unit 4912 in this embodiment includes LEDs 4917 and LED boards 4918 are disposed on long sides of a chassis 4914. Specifically, LED boards 4918 are attached to a first long sidewall 4914c of the chassis 4914 (on the lower side in FIG. 30) and a second long sidewall 4914c (on the upper side in FIG. 30). The LEDs 4917 mounted on the LED boards 4918 are opposed to long end surfaces of peripheral surfaces of a light guide plate 4919. In this embodiment, the long end surfaces of the peripheral surfaces of the light guide plate 4919 are configured as light entering end surfaces 4919b through which light from the LEDs 4917 enters. Short end surfaces are configured as non-light-entering end surfaces. Non-light-entering end surfaces 4919d in this embodiment do not include the non-light-entering opposite end surface 419d1 in the seventh embodiment (see FIG. 17). The non-light-entering end surfaces 4919d include only non-light-entering lateral end surfaces 4919d2 adjacent to the light entering end surfaces 4919b. In the backlight unit 4912 in this embodiment, the light guide plate 4919 is sandwiched between the LED boards 4918 on which the LEDs 4917 are mounted from the sides with respect to the short-side direction (the Y-axis direction). Namely, the backlight unit 4912 is a double-edge lighting type backlight unit.

End surface wavelength converting sheets 4927 do not include the opposite end surface wavelength converting sheet 427A in the seventh embodiment (see FIG. 17). The end surface wavelength converting sheets 4927 include only a pair of lateral end surface wavelength converting sheets 4927B. The lateral end surface wavelength converting sheets 4927B are disposed over the short end surfaces, that is, the non-light-entering lateral end surfaces 4919d2. End surface reflection sheets 4928 do not include an opposite end surface reflecting sheets 428A in the seventh embodiment (see FIG. 17). The end surface reflection sheets 4928 include only a pair of opposite end surface reflection sheets 4928B. The opposite end surface reflection sheets 4928B are disposed over the lateral end surface wavelength converting sheets 4927B on the outer sides. According to the configuration, functions and effects similar to those of the seventh embodiment are achieved.

### <Seventeenth Embodiment>

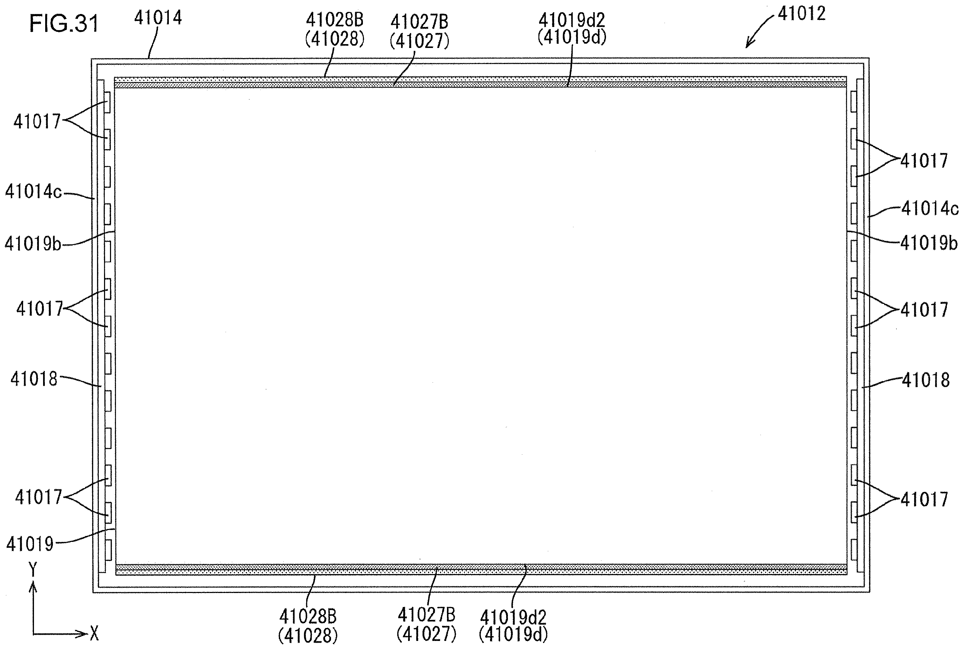

A seventeenth embodiment of the present invention will be described with reference to FIG. 31. The seventeenth embodiment includes LEDs and LED boards arranged differently from those of the sixteenth embodiment. Configurations, functions, and effects similar to those of the sixteenth embodiment will not be described.

As illustrated in FIG. 31, a backlight unit 41012 in this embodiment includes LEDs 41017 and LED boards 41018 disposed on short sides of a chassis 41014. Specifically, LED boards 41018 are attached to a first short sidewall 41014c of the chassis 41014 (on the left side in FIG. 31) and a second short sidewall 41014c (on the right side in FIG. 31). The LEDs 41017 mounted on the LED boards 41018 are opposed to short end surfaces of peripheral surfaces of the light guide plate 41019. The short end surfaces of the peripheral surfaces of the light guide plate 41019 are configured as light-entering end surfaces 41019b through which light from the LEDs 41017 enters. The long end surfaces are configured as non-light-entering end surfaces 41019d (a pair of non-light-entering lateral end surfaces 41019d2). In the backlight unit 41012 in this embodiment, the light guide plate 41019 is sandwiched between the LED boards 41018 on which the LEDs 41017 are mounted from the sides with respect to the long-side direction along the long sides of a light guide plate 41010 (the X-axis direction). Namely, the backlight unit 41012 is a double-edge lighting type backlight unit.

End surface wavelength converting sheets 41027 include only a pair of lateral end surface wavelength converting sheets 41027B. The lateral end surface wavelength converting sheets 41027B are disposed over the long end surfaces, that is, the non-light-entering lateral end surfaces 41019d2. End surface reflection sheets 41028 include only a pair of opposite end surface reflection sheets 41028B. The opposite end surface reflection sheets 41028B are disposed over the lateral end surface wavelength converting sheets 41027B on the outer sides. According to the configuration, functions and effects similar to those of the seventh embodiment are achieved.

### <Eighteenth Embodiment>

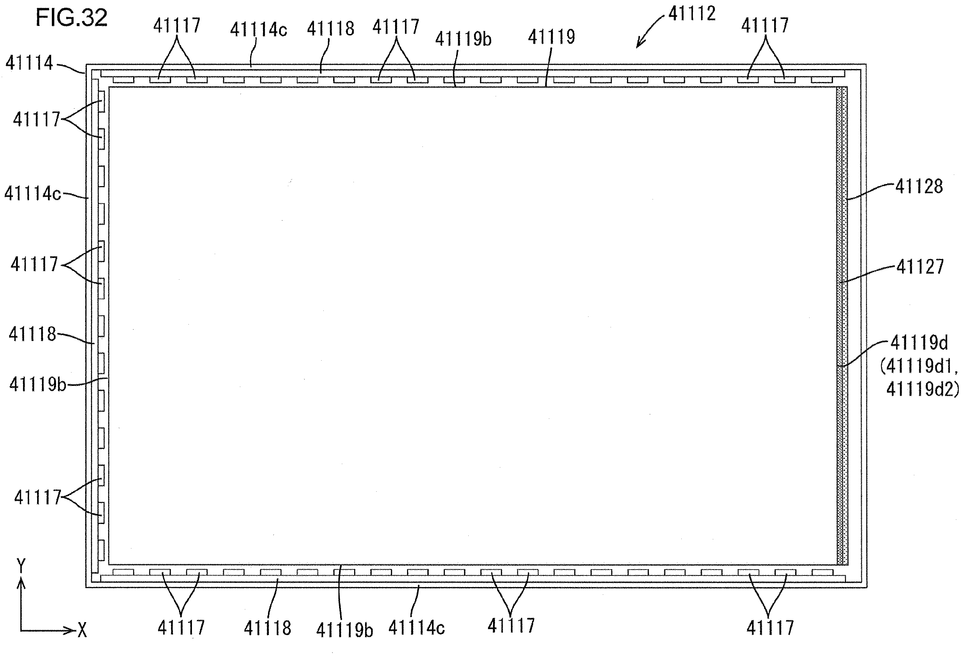

An eighteenth embodiment of the present invention will be described with reference to FIG. 32. The eighteenth embodiment includes LEDs and LED boards, the numbers of which are different from those of the sixteenth embodiment. Configurations, functions, and effects similar to those of the sixteenth embodiment will not be described.

As illustrated in FIG. 32, a backlight unit 41112 in this embodiment includes LEDs 41117 and LED boards 41118 disposed on long sides and a first short side (on the left side in FIG. 32) of a chassis 41114. Specifically, the LED boards 41118 are attached to a first long sidewall 41114c (on the lower side in FIG. 32), a second long sidewall 41114c (on the upper side in FIG. 32), and a first short sidewall 4111c of the chassis 41114. The LEDs 41117 mounted on the LED boards 41118 are opposed to long end surfaces and a first short end surfaces of peripheral surfaces of a light guide plate 41119. In this embodiment, a non-light-entering end surface 41119d could be a non-light-entering opposite end surface 41119d1 relative to a short light entering end surface 41119b and could be a non-light-entering lateral end surface 41119d2 relative to the long light entering end surfaces 41119b. Only one end surface wavelength converting sheet 41127 is disposed over the non-light-entering end surface 41119d. Only one end surface reflection sheet 41128 is disposed over the end surface wavelength converting sheet 41127 on the outer side. The backlight unit 41112 in this embodiment is a triple-edge lighting type backlight unit in which light entering the light guide plate 41119 is provided by the LEDs 41117 mounted on three LED boards 41118 that are disposed along three sides of the light guide plate 41119.

### <Nineteenth Embodiment>

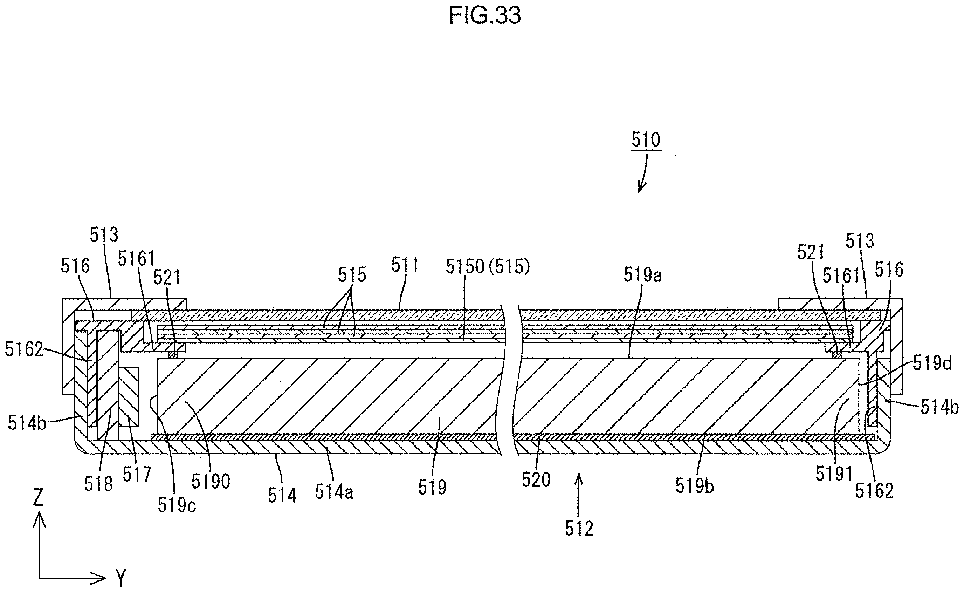

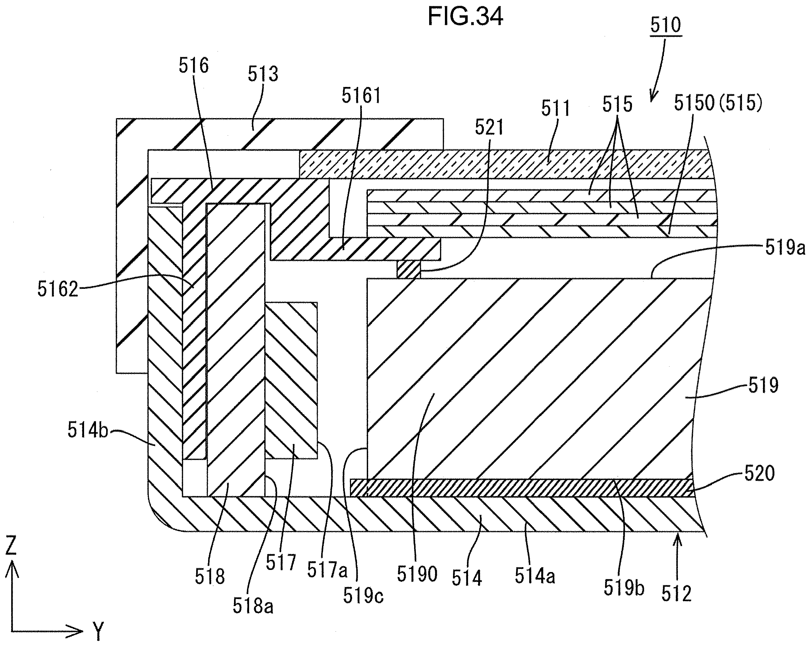

A nineteenth embodiment of the present invention will be described with reference to FIGS. 33 to 38.

A liquid crystal display device 510 according to this embodiment has a horizontally-long rectangular overall shape that extends in horizontal direction. As illustrated in Fig. 33, the liquid crystal display device 510 includes a liquid crystal panel 511, a lighting unit 512 (a backlight unit), and a bezel 513. The liquid crystal panel 511 is a display panel. The lighting unit is an external light source for supplying light to the liquid crystal panel 511. The bezel 513 has a frame shape and holds the liquid crystal panel 511 and the lighting unit 512. The liquid crystal panel 511 has a configuration similar to that of the liquid crystal panel 11 in the first embodiment.

As illustrated in FIG. 33, the lighting unit 512 includes a chassis 514, optical members 515, a frame 516, LEDs 517, an LED board 518, a light guide plate 519, a reflection sheet 520, and complementary color members 523. The chassis 514, the optical members 515, the frame 516, the LEDs 517, the LED board 518, and the light guide plate 519 have configurations similar to those of the chassis 14, the optical member 15, the frame 16, the LEDs 17, the LED board 18, and the light guide plate 19 in the first embodiment. The complementary color members 523 are disposed between ends of the light guide plate 519 and the reflection sheet 520.

A front surface 519a of the light guide plate 519 is configured as a light exiting surface 519a through which light exits toward the liquid crystal panel 511. The optical members 515 are disposed between the light exiting surface 519a and the liquid crystal panel 511 and supported by the frame 516. A first long end surface of the light guide plate 519 is configured as a light entering surface 519c through which light from the LEDs 517 enters. An end of the light guide plate 519 including the light entering surface 519c may be referred to as a light entering end 5190.

A second long end surface 519d of the light guide plate 519, two short end surfaces 519e and 519f of the light guide plate 519 are not opposed to a light source (the LEDs 517) and thus they may be referred to as "light source non-opposed surfaces." The light source non-opposed surface (the long end surface 519d) opposite from the light entering surface 519c may be referred to as "an opposite-side light source non-opposed surface." In this specification, ends 5191, 5192, and 5193 of the light guide plate including the light source non-opposed surfaces may be referred to as "light source non-opposed ends" and an end 5191 of the light guide plate 519 including the opposite-side light source non-opposed surface may be referred to as "an opposite-side light source non-opposed portion." Furthermore, the ends 5192 and 5193 of the light guide plate including adjacent end surfaces 519e and 519f (short end surfaces) which are the light source non-opposed surfaces adjacent to the light entering surface 519c may be referred to as "light source non-opposed adjacent ends).

The optical members 515 have horizontally-long substantially rectangular shape similar to the liquid crystal panel 511 in a plan view. Examples (optical sheets) of the optical members 515 include a diffuser sheet, a lens sheet, and a reflective type polarizing sheet. The optical members 515 in this embodiment includes a phosphor sheet 5150 containing quantum dot phosphors (an example of a wavelength converting member) as a necessary component (an optical sheet). The phosphor sheet 5150 is disposed the closest to the light exiting surface 519a among the optical members 515. The phosphor sheet 5150 has a substantially rectangular shape similar to the liquid crystal panel 511 in the plan view. The phosphor sheet 5150 passes some light rays from the LEDs 517 in the thickness direction and absorbs some light rays from the LEDs 517. The phosphor sheet 5150 converts the absorbed light rays into light rays in a different wavelengths range (secondary light) and releases the light rays. The phosphor sheet 5150 may include a wavelength converting layer, supporting layers and barrier layers. The supporting layers sandwich the wavelength converting layer. The barrier layers are over the respective supporting layers on the outer sides to sandwich the wavelength converting layer and the supporting layers.

The wavelength converting layer contains an acrylic resin as a binder resin and the quantum dot phosphors (an example of phosphors) dispersed in the acrylic resin. The acrylic resin is transparent and has light transmissivity. The acrylic resin has adhesiveness for the supporting layers. The supporting layers are sheet shaped members made of polyester resin such as polyethylene terephthalate (PET). The quantum dot phosphors are phosphors having high quantum efficiency. The quantum dot phosphors include semiconductor nanocrystals (e.g., diameters in a range from 2 nm to 10 nm) which tightly confine electrons, electron holes, or excitons with respect to all direction of a three dimensional space to have discrete energy levels. A peak wavelength of emitting light (a color of emitting light) is freely selectable by changing the dot size.

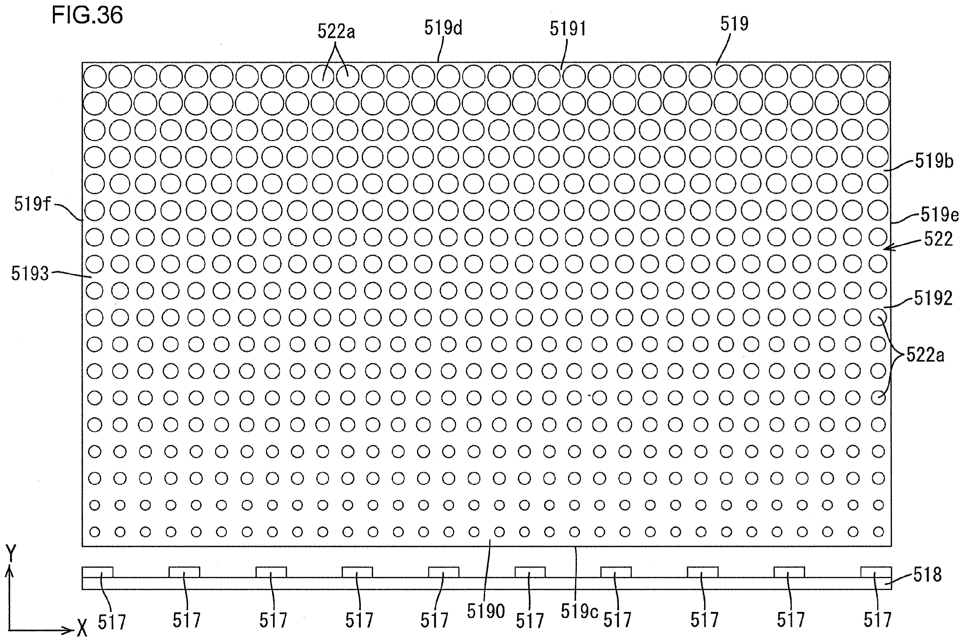

FIG. 36 is a plan view schematically illustrating a positional relationship between the LEDs 517 and the light guide plate 519 viewed from the back side. As illustrated in FIG. 36, a light reflecting and scattering pattern 522 is formed on a back surface 519b of the light guide plate 519. The light reflecting and scattering pattern 522 includes dots 522a each having light reflectivity and light scattering properties. Each dot 522a is a white coating formed in a circular shape. The dots 522a are formed on the back surface 519b of the light guide plate 519 by a known method such as a printing technology. In the light reflecting and scattering pattern 522, the dots 522a closer to the LEDS 517 (i.e., closer to the light entering surface 519c) are smaller and in lower density (per unit area). As a distance from the LEDs 517 increases, the size of the dots 522a increases and the density of the dots 522a increases. When the light rays entering the light guide plate 519 through the light entering surface 519c reach the dots 522a, the light rays are reflected or scattered by the dots 522a. Then, the light rays exit through the light exiting surface 519a.

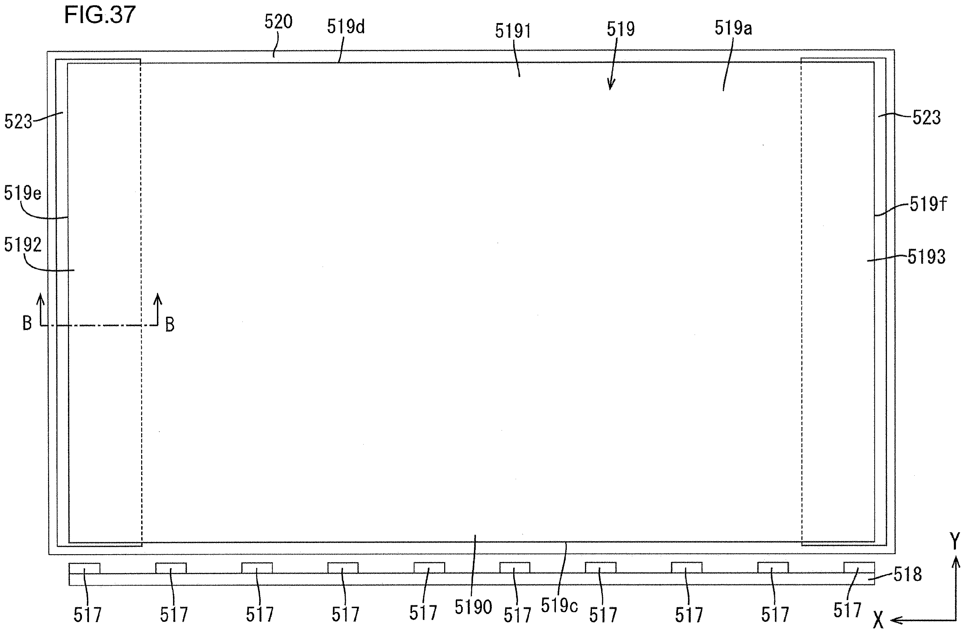

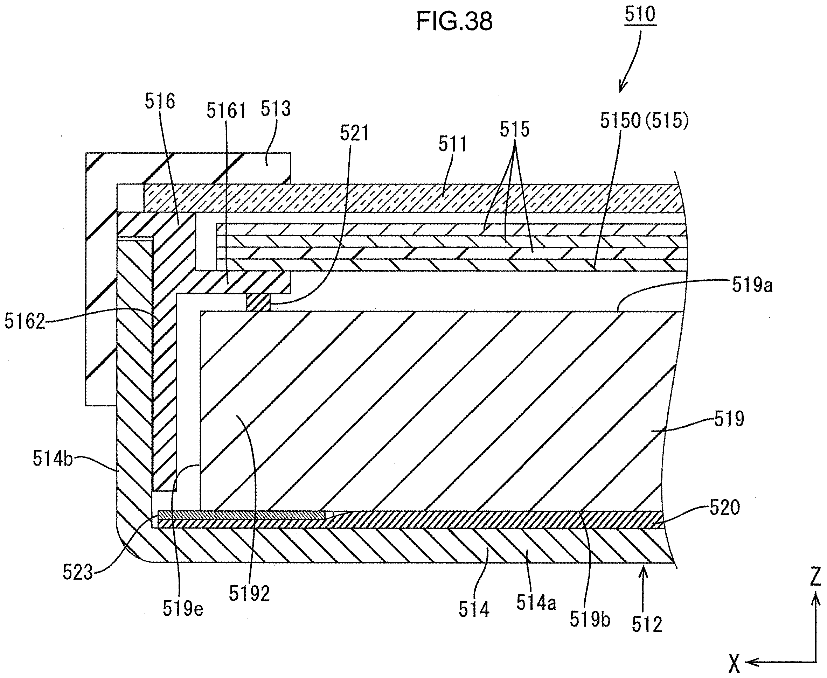

Next, the complementary color members 523 will be described with reference to FIGS. 37 and 38. FIG. 37 is a plan view schematically illustrating positional relationships among the LEDs 517, the light guide plate 519, the complementary color members 523, the reflection sheet 520 viewed from the front side. FIG. 38 is a magnified cross-sectional view illustrating the light source non-opposed adjacent end 5192 and therearound of the liquid crystal display device 510. FIG. 38 is a cross-sectional view along line B-B in FIG. 37.

Each complementary color member 523 is a sheet shaped member that exhibits a color (yellow in this embodiment) which makes a complementary color pair with blue (reference color) exhibited by light emitted by the LEDs 517 (primary light, blue light). The complementary color member 523 in this embodiment (an example of a first complementary color member) has light transmissivity similar to the phosphor sheet 5150. The complementary color member 523 has a function for absorbing some light rays emitted by the LEDs 517 (primary light, blue light), converting the light rays into light rays in a different wavelength range (secondary light), and releasing the light rays. The complementary color member 523 contains phosphors that emit light rays in a different wavelength range when excited by the light rays emitted by the LEDs 517 (primary light, blue light).

Each complementary color member 523 in this embodiment has a configuration similar to that of the phosphor sheet 5150. The complementary color member 523 may include a wavelength converting layer, supporting layers, and barrier layers. The supporting layers sandwich the wavelength converting layer. The barrier layers are over the supporting layers on the outer sides to sandwich the wavelength converting layer and the supporting layers. The wavelength converting layer of the complementary color member 523 includes an acrylic resin as a binder resin and quantum dot phosphors scattered in the acrylic resin. The supporting layers of the complementary color member 523 are sheet shaped (film shaped) members made of polyester resin such as PET similar to the supporting layers of the phosphor sheet 5150.

As illustrated in FIGS. 37 and 38, the complementary color members 523 are disposed between the back surface 519b (the opposite surface) and the reflection sheet 520 to overlap ends 5192 and 5193 of the light guide plate 519 (the light source non-opposed adjacent ends) on the back surface 519b (the opposite surface) of the light guide plate 519. The complementary color members 523 are disposed to cover the ends 5192 and 5193 (the light source non-opposed adjacent ends) on the left and the right side of the light entering surface 519c from the back surface 519b side (the opposite surface side), respectively. Portions of the complementary color members 523 project outward from the respective ends 5192 and 5193 (the light source non-opposed adjacent ends). The back surfaces of the ends 5192 and 5193 of the light guide plate 519 (the light source non-opposed adjacent ends) are completely covered with the complementary color members 523.

In such a lighting unit 512, when power is supplied to the LEDs 517, the LEDs 517 are turned on. The light rays emitted by the LEDs 517 (primary light, blue light) enter the light guide plate 519 through the light entering surface 519c. The light rays in the light guide plate 519 transmit through the light guide plate 519 while repeatedly reflected. During the transmission through the light guide plate 519, the light rays reaching the light reflecting and scattering pattern 522 (the dots 522a) on the back surface 519b are directed toward the light exiting surface 519a, and then to the phosphor sheet 5150 via the light exiting surface 519a.

As described earlier, some blue light rays pass through the phosphor sheet 5150 but some blue light rays are converted into yellow light rays with the different wavelength and released. The light rays (the blue light rays, the yellow light rays) exiting from the phosphor sheet 5150 may reach the other optical members 515 (the optical sheets) over the phosphor sheet 5150 or the reflection sheet 520 on the back surface 519b side. Such light rays are retroreflected for several times and pass through the phosphor sheet 5150 for several times. The light rays exiting from the optical members 515 form a planar light that travels toward the back surface of the liquid crystal panel 511.

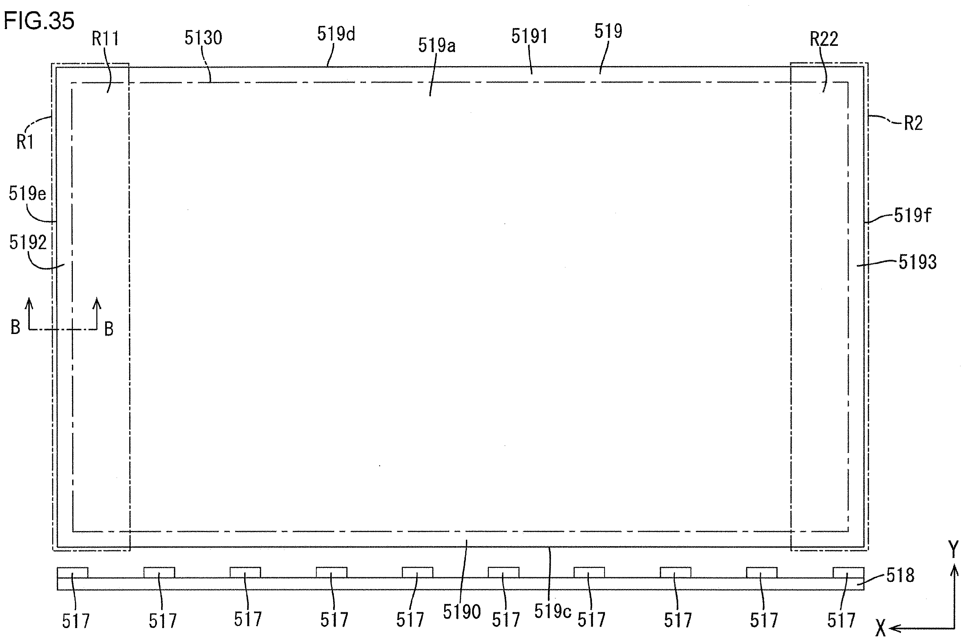

FIG. 35 illustrates the light guide plate 519 viewed from the light exiting surface 519a side. The light rays exiting from regions R1 and R2 of the light exiting surface 519a having the rectangular shape closer to the short end surfaces 519e and 519f (the light source non-opposed surfaces) adjacent to the light entering surface 519c are retroreflected for the smaller number of times in comparison to the light rays exiting from the center region of the light exiting surface 519a. Light is supplied to the center region of the light exiting surface 519a mainly by the LEDs 517 in the middle of line of the LEDs 517. Light is supplied to the regions R1 and R2 of the light exiting surface 519a on the left side and the right side by the LEDs 517 closer to the ends of line of the LEDs 517. Although the light rays emitted by the LEDs 517 exhibit orientation distribution with a certain angle, the light rays exhibit high straightforwardness. Therefore, the light is less likely to be supplied to the ends of the light guide plate 519 (the portions on the light source non-opposed surface 519e side and on the light source non-opposed surface 519f side adjacent to the light entering surface 519c) by the LEDs 517 in the middle of the LED board 518.

In FIG. 35, a rectangle 5130 (a chain line) along the outer edges of the light exiting surface 519a indicates an inner edge position of the frame 516 (an inner edge position of a frame body 5161, an inner edge position of the bezel 513). The light rays exiting from the light guide plate 519 through the light exiting surface 519a and reaching the liquid crystal panel 511 (i.e., the light rays emitted by the lighting unit 512) pass inside the inner edges of the frame 516. When the lighting unit 512 is viewed in plan from the light exiting side, a region R11 surrounded by the rectangle 5130 and the region R1 and a region R22 surrounded by the rectangle 5130 and the region R2 are regions in which the number of the retroreflection is smaller in comparison to the center region.

In this embodiment, the complementary color members 523 are disposed between the ends 5192 and 5193 of the light guide plate 519 (the light source non-opposed adjacent ends) and the reflection sheet 520 to overlap at least the portions from which the light rays that are retroreflected for less times exit (the region R11 and the region R22). The region R11 covers an entire area of a portion of the back surface 519b (the opposite surface) of the light guide plate 519 corresponding to the light source non-opposed adjacent ends 5192 when viewed in plan. The region R22 covers an entire area of a portion of the back surface 519b (the opposite surface) of the light guide plate 519 corresponding to the light source non-opposed end 5193 when viewed in plan.

If the complementary color members 523 are removed and light is supplied by the LEDs 517, the percentage of the blue light rays in light exiting from the regions R11 and R12 of the light guide plate 519 is higher than that in light exiting from the center portion. The edge sections of the display surface of the liquid crystal panel 511 (corresponding to the regions R11 and R22) look bluish in comparison to the center section.

In the lighting unit 512 in this embodiment, the complementary color members 523 similar to the phosphor sheet 5150 are disposed on the ends 5192 and 5193 of the light guide plate 519 (the light source non-opposed adjacent portions) on the back surface 519b side (the opposite surface side) with the reflection sheet 520 placed thereon. According to the configuration, the wavelength conversion efficiency for converting the primary light (the blue light) to the secondary light (the red light, the green light) can be improved even through the number of times of the retroreflection is small in the regions R11 and R22 (R1 and R2) of the light exiting surface 519a. In this embodiment, the wavelengths of the light rays exiting from the regions R11 and R22 (R1 and R2) of the light exiting surface 519a are converted by the complementary color members 523 other than the phosphor sheet 5150.

Among the light rays of the primary light (the blue light) entering the light guide plate 519, some of the light rays reaching the complementary color members 523 via the back surface 519b (the opposite surface) are converted into the secondary light rays with other wavelengths (yellow light rays obtained through mixture of the green light rays and the red light rays) by the phosphors in the complementary color members 523. The secondary light rays obtained through the wavelength conversion by the complementary color members 523 reaching the reflection sheet 520 are reflected by the reflection sheet 520 and returned to the light guide plate 519. The secondary light rays reaching the complementary color members 523 and passing through the complementary color members 523 are reflected by the reflection sheet 520 and returned to the light guide plate 519.

As described above, the complementary color members 523 are disposed on the ends 5192 and 5192 of the light guide plate 519 on the left side and the right side (the light source non-opposed adjacent ends) on the back surface 519b with the reflection sheet 520 placed thereon. According to the configuration, the percentage of the light rays in yellow (complementary color light rays) which makes a complementary color pair with blue can be increased and the percentage of the light rays in blue (the blue light rays) can be reduced in the regions R11 and R22 (R1 and R2). Therefore, light rays in whitish color exit not only from the center regions but also from the ends of the lighting unit 512. In the lighting unit 512, tinting the light rays of the planar exiting light in the ends (on the light source non-opposed adjacent ends 5192 side and the light source non-opposed adjacent ends 5193 side) more in blue (the color of the primary light) in comparison to the center portion is less likely to occur.

The percentage of the blue light rays in the light exiting from a section of the light exiting surface 519a closer to the long end surface 519d opposite from the light entering surface 519c (the opposite-side light source non-opposed surface) may be higher in comparison to the center section depending on a condition of the light reflecting and scattering pattern 522 formed on the back surface 519b of the light guide plate 519. An area in which the bluish light rays exiting from the section closer to the long end surface 519d (the opposite-side light source non-opposed surface) exit is significantly smaller than areas in which the light rays exiting from the ends of the light guide plate 519 (on the light source non-opposed surface 519e side and the light source non-opposed surface 519f side adjacent to the light entering surface 519c). Furthermore, such light rays can be ignored as a problem in viewing an image displayed on the liquid crystal panel 511.

The percentage of the blue light rays in the light exiting from a section of the light exiting surface 519a closer to the light entering surface 519c may be higher in comparison to the center section depending on a condition of the light reflecting and scattering pattern 522. An area in which the bluish light rays exiting from the section closer to the light entering surface 519c is small. Furthermore, such light rays can be ignored as a problem in viewing an image displayed on the liquid crystal panel 511.

### <Twentieth Embodiment>

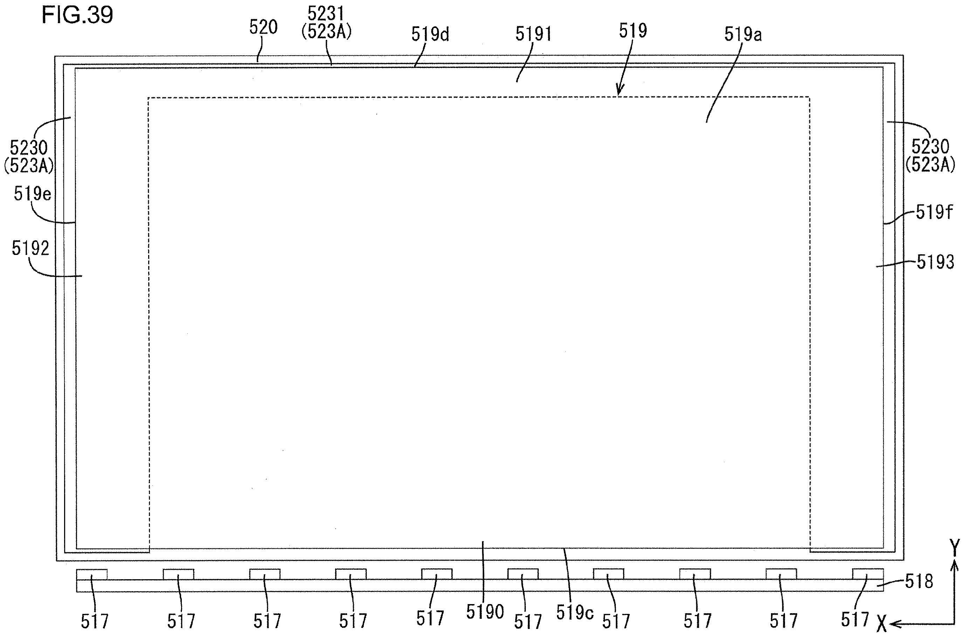

A twentieth embodiment of the present invention will be described with reference to FIG. 39. In this section, a lighting unit (a liquid crystal display unit) including a complementary color member 523A instead of the complementary color members 523 of the nineteenth embodiment will be described. Components that are the same as those of the nineteenth embodiment will be indicated with the same symbols as those of the nineteenth embodiment and will not be described.

FIG. 39 is an explanatory view illustrating positional relationships among the LEDs 517, the light guide plate 519, the complementary color member 523A, and the reflection sheet 520. The complementary color member 523A in this embodiment (an example of a first complementary color member) is made of material the same as that of the nineteenth embodiment. The complementary color member 523A has light transmissivity and a function for absorbing some light rays emitted by the LEDs 517 (primary light rays, blue light rays), converting the light rays into light rays having wavelengths in a different wavelength range (secondary light rays, red light rays, green light rays), and releasing the light rays.

The complementary color member 523A is disposed between the light guide plate 519 and a reflection sheet 521 to overlap not only the ends 5192 and 5193 of the light guide plate 519 on the left side and the right side (the light source non-opposed ends) but also the end 5191 on the side opposite from the light entering end 5190 (the opposite-side light source non-opposed end). The complementary color member 523A includes two short-side complementary color members 5230 and a long-side complementary color member 5231. The short-side complementary color members 5230 are placed in the ends 5192 and 5193 on the left side and the right side (the light source non-opposed ends) similar to the complementary color member 523 in the nineteenth embodiment. The long-side complementary color member 5231 is placed in the end 5191 on the side opposite from the light entering end 5190 (the opposite-side light source non-opposed end). The long-side complementary color member 5231 connects one of the short-side complementary color members 5230 to another. The short-side complementary color members 5230 have shapes the same as the shapes of the complementary color members 523 in the nineteenth embodiment.

In this embodiment, bluish light rays exit from a section of the light guide plate 519 closer to the long end surface 519d (the opposite-side light source non-opposed surface) due to differences in the light reflecting and scattering pattern formed on the back surface of the light guide plate 519. An area in which the bluish light rays exiting from the section closer to the long end surface 519d (the opposite-side light source non-opposed surface) exit is smaller than sections in which the light rays exiting from the ends of the light guide plate 519 (on the light source non-opposed surface 519e side and the light source non-opposed surface 519f side). Therefore, the long-side complementary color member 5231 has a width smaller than that of the short-side complementary color members 230.

As in this embodiment, the complementary color member 523A can be placed on not only the ends 5192 and 5193 on the left side and the right side (the light source non-opposed ends) but also the end 5191 on the side opposite from the light entering end 5190 (the opposite-side light source non-opposed end). In the lighting unit including such a complementary color member 523A, tinting the light rays of the planar exiting light in the ends (on the light source non-opposed adjacent ends 5192 side, the light source non-opposed adjacent ends 5193 side, and the opposite-side light source non-opposed end 5191 side) more in the color of the primary light from the LEDs 517 (blue) in comparison to the center portion is less likely to occur.

### <Twenty-first Embodiment>

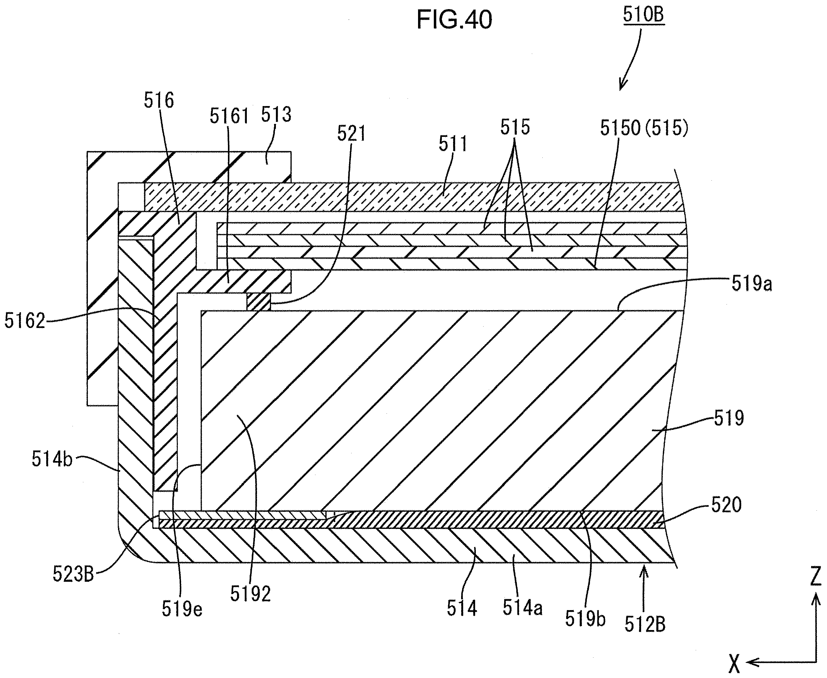

A twenty-first embodiment of the present invention will be described with reference to FIG. 40. In this section, a liquid crystal display device 510B including a lighting unit 512B that includes complementary color members 523B instead of the complementary color members 523 of the nineteenth embodiment described above. FIG. 40 is a magnified cross-sectional view illustrating a light source non-opposed adjacent end 5192 and therearound of the liquid crystal display device 510B according to the twenty-second embodiment. FIG. 40 includes a portion corresponding to a portion of the nineteenth embodiment in FIG. 38.

Similar to the above-described embodiment 519, each complementary color member 523B in this embodiment is a sheet shaped member in the color (yellow in this embodiment) which makes a complementary color pair with blue (reference color) exhibited by light rays (primary light rays, blue light rays) emitted by the LEDs 517. Unlike the nineteenth embodiment, each complementary color member 523B has a function for selectively absorbing light rays from the LEDs 517 (the primary light rays, the blue light rays) . Furthermore, the complementary color member 523B has a function for passing the secondary light rays (green light rays, red light rays) with wavelengths converted by the phosphors contained in the phosphor sheet 5150 (light transmissivity). Yellow cellophane films may be used for the complementary color members 523B.

Similar to the nineteenth embodiment, in this embodiment, the complementary color members 523 are disposed between the ends 5192 and 5193 of the light guide plate 519 (the light source non-opposed ends) and the reflection sheet 520 (see FIG. 35) to overlap at least the regions (the region R11 and the region R22) from which the light rays that are retroreflected for the smaller number of times exit. Some light rays passing through the back surface 519b (the opposite surface) and reaching the complementary color members 523B among the light rays entering the light guide plate 519 are absorbed by the complementary color members 523B. The secondary light rays (the green light rays, the red light rays) reaching the complementary color members 523B and passing through the complementary color members 523B are reflected by the reflection sheet 520 and returned to the light guide plate 19.

In the lighting unit 512B in this embodiment, the complementary color members 523B are disposed on the ends 5192 and 5193 of the light guide plate 519 (the light source non-opposed adjacent portions) on the back surface 519b side (the opposite surface side) with the reflection sheet 520 placed thereon. The complementary color members 523B are configured to selectively absorb the primary light rays (the blue light rays) and selectively pass the secondary light rays (the yellow light rays obtained from the green light rays and the red light rays). According to the configuration, even though the light rays are retroreflected for the smaller number of times in the regions R11 and R22 (R1 and R2) of the light exiting surface 519a, the percentage of the light rays in yellow that makes a complementary color pair with blue (the complementary color light rays) can be increased and the percentage of the light rays in blue (the blue light rays) in the regions R11 and R22 (R1 and R2) of the light exiting surface 519a.

Whitish light rays exit from the ends of the lighting unit 512B as from the center portion. In the lighting unit 512B, tinting the light rays of the planar exiting light in the ends (on the light source non-opposed adjacent ends 5192 side and the light source non-opposed adjacent ends 5193 side) more in the color of the primary light from the LEDs 517 (blue) in comparison to the center portion is less likely to occur. The complementary color members 523B having the function for selectively absorbing the light rays from the LEDs 517 (the primary light rays, the blue light rays) and the function for selectively passing the secondary light rays (the green light rays, the red light rays) (the light transmissivity) may be used.

### <Twenty-second Embodiment>

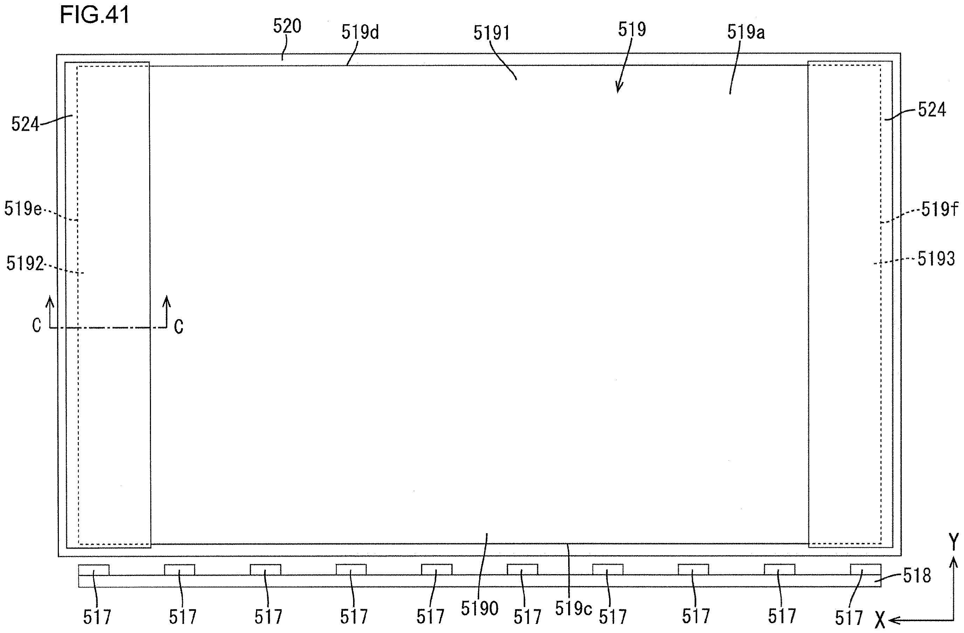

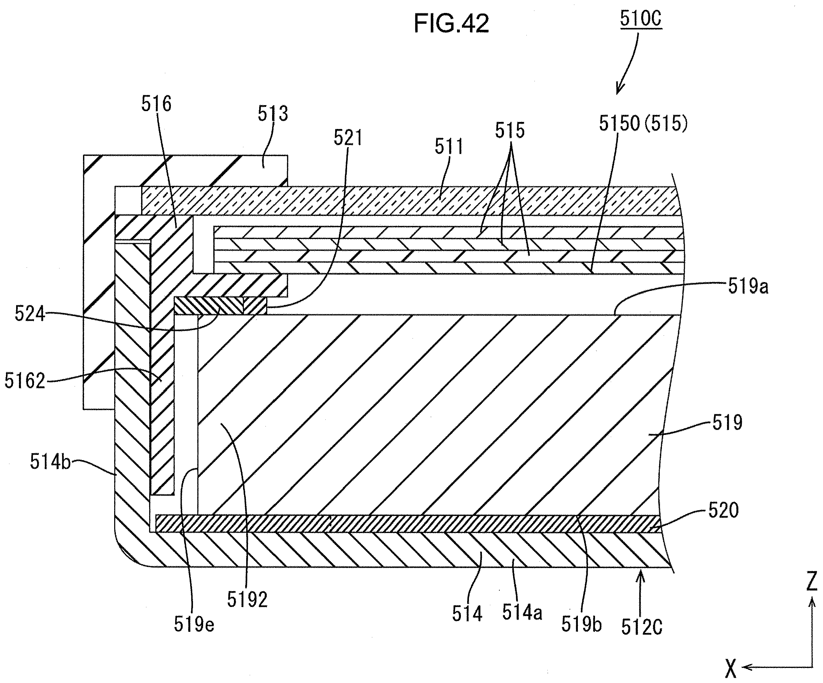

A twenty-second embodiment of the present invention will be described with reference to FIGS. 41 and 42. In this section, a liquid crystal display device 510C including a lighting unit 512C that includes complementary color members 524 (an example of a second complementary color member) instead of the complementary color members 523 of the nineteenth embodiment will be described. FIG. 41 is an explanatory drawing illustrating positional relationships among LEDs 517, a light guide plate 519, complementary color members 524, and the reflection sheet 520 with one another in the lighting unit 512C according to the twenty-second embodiment. FIG. 42 is a magnified cross-sectional view illustrating a light source non-opposed adjacent end 5192 and therearound of the liquid crystal display device 510C according to the twenty-second embodiment. FIG. 42 is a cross-sectional view of a portion corresponding to a portion illustrated in FIG. 41 along line C-C.

The complementary color members 524 in this embodiment are made of the same material as that of the nineteenth embodiment. Namely, each complementary color members 524 has the light transmissivity and the function for absorbing some light rays emitted by the LEDs 517 (the primary light rays, the blue light rays), converting the light rays into the light rays with the wavelengths in the different wavelength range (the red light rays and the green light rays provided as the secondary light rays), and releasing the light rays, similar to the phosphor sheet 5150 in the nineteenth embodiment. Furthermore, each complementary color members 524 has a shape the same as that of the c complementary color members 523 in the nineteenth embodiment.

Unlike the nineteenth embodiment, the complementary color members 524 are disposed between sections of the light exiting surface 519a overlapping the ends of the light guide plate 519 on the left and the right (the light source non-opposed adjacent ends 5192 and 5193) and the phosphor sheet 5150. As illustrated in FIG. 41, portions of the complementary color members 524 project outward from the ends of the light guide plate on the left side and the right side (the light source non-opposed adjacent ends 5192 and 5193).

In this embodiment, the complementary color members 524 are disposed between the ends 5192 and 5193 of the light guide plate 519 (the light source non-opposed ends) and the phosphor sheet 5150 to overlap at least the regions (the region R11 and the region R22) from which the light rays that are retroreflected for the smaller number of times exit. In the lighting unit 512C in this embodiment, the complementary color members 524 similar to the phosphor sheet 5150 are disposed on the ends 5192 and 5193 of the light guide plate 519 (the light source non-opposed ends) on the light exiting surface 519a side. According to the configuration, the wavelength conversion efficiency for converting the primary light (the blue light) to the secondary light (the red light, the green light) can be improved even through the number of times of the retroreflection is small in the regions R11 and R22 (R1 and R2) of the light exiting surface 519a. In this embodiment, the light rays exiting from the regions R11 and R22 (R1 and R2) of the light exiting surface 519a are converted into light rays with other wavelengths by the complementary color members 524 other than the phosphor sheet 5150.

The complementary color members 524 are disposed on the light exiting surface 519a side to overlap the ends 5192 and 5192 of the light guide plate 519 on the left side and the right side (the light source non-opposed ends). According to the configuration, the percentage of the light rays in yellow that makes a complementary color pair with blue (the complementary color light rays) can be increased and the percentage of the light rays in blue (the blue light rays) can be decreased in the regions R11 and R22 (R1 and R2) of the light exiting surface 519a. Therefore, whitish color rays exit from the ends of the lighting unit 512C as from the center portion. Namely, in the lighting unit 512C in this embodiment, tinting the light rays of the planar exiting light in the ends (on the light source non-opposed adjacent ends 5192 side and the light source non-opposed adjacent ends 5193 side) more in the color of the primary light from the LEDs 517 (blue) in comparison to the center portion is less likely to occur. As described above, the complementary color members 524 may be disposed between the light exiting surface 519a of the light guide plate 519 and the phosphor sheet 5150.

### <Twenty-third Embodiment>

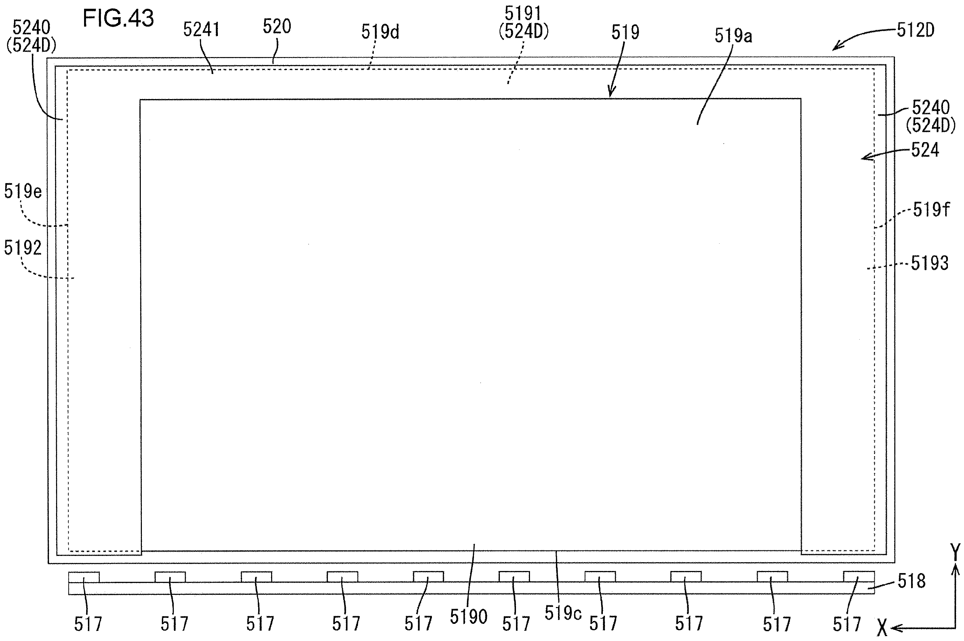

A twenty-third embodiment of the present invention will be described with reference to FIG. 43. In this section, a lighting unit including a complementary color member 524D (an example of a second complementary color member) instead of the complementary color members 524 of the twenty-second embodiment will be described. FIG. 43 is an explanatory drawing illustrating positional relationships among the LEDs 517, the light guide plate 519, the complementary color member 524, and the reflection sheet 520 in the lighting device in the twenty-third embodiment.

The complementary color member 524D is made of the same material that of the twenty-second embodiment. The complementary color member 524D is disposed on the light exiting surface 519a side to overlap not only the ends 5192 and 5193 of the light guide plate 519 on the left side and the right side but also the end 5191 on the side opposite from the light entering end 5190 (the opposite-side light source non-opposed end). The complementary color member 524D includes two short-side complementary color members 5240 and a long-side complementary color member 5241. The short-side complementary color members 5240 are placed on the ends 5192 and 5193 on the left side and the right side (the light source non-opposed portions) similar to the complementary color members 524 in the twenty-second embodiment. The long-side complementary color member 5241 is placed on the end 5191 on the side opposite from the light entering end 5190 (the opposite-side light source non-opposed end). The long-side complementary color member 5241 connects one of the short-side complementary color members 5230 to another. Each short-side complementary color member 5240 has a shape the same as that of the complementary color member 524 in the twenty-second embodiment.

In this embodiment, bluish light rays exit from a section of the light guide plate 519 closer to the long end surface 519d (the opposite-side light source non-opposed surface) due to differences in the light reflecting and scattering pattern formed on the back surface of the light guide plate 519. An area in which the bluish light rays exiting from the section closer to the long end surface 519d (the opposite-side light source non-opposed surface) exit is smaller than sections in which the light rays exiting from the ends of the light guide plate 519 (on the light source non-opposed surface 519e side and the light source non-opposed surface 519f side). Therefore, the long-side complementary color member 5241 has a width smaller than that of the short-side complementary color members 240.

As in this embodiment, the complementary color member 524D can be placed on not only the ends 5192 and 5193 of the light guide plate 519 on the left side and the right side (the light source non-opposed ends) but also the end 5191 on the side opposite from the light entering end 5190 (the opposite-side light source non-opposed end). In the lighting unit including such a complementary color member 524D, tinting the light rays of the planar exiting light in the ends (on the light source non-opposed adjacent ends 5192 side, the light source non-opposed adjacent ends 5193 side, and the opposite-side light source non-opposed end 5191 side) more in the color of the primary light from the LEDs 517 (blue) in comparison to the center portion is less likely to occur.

### <Twenty-fourth Embodiment>

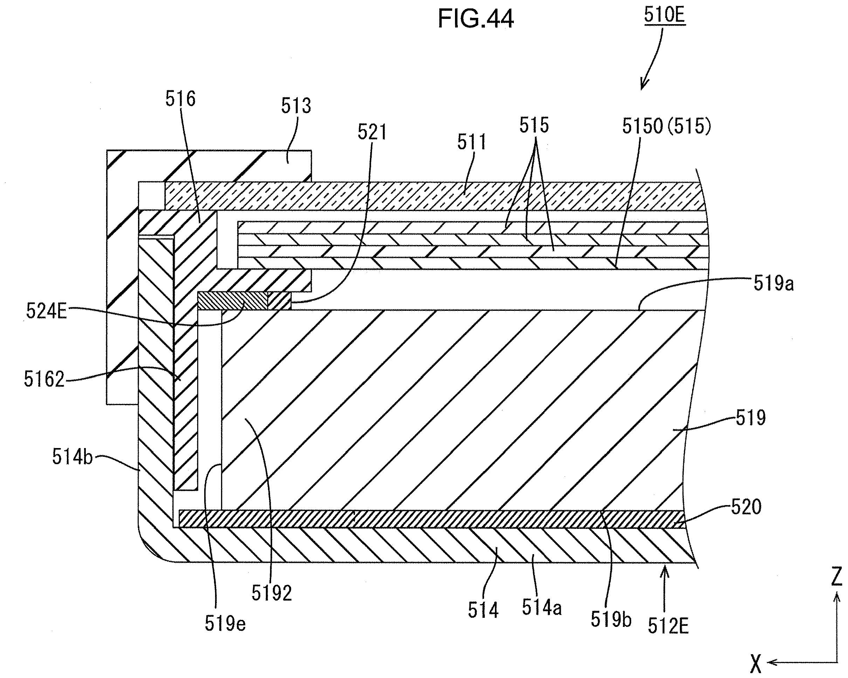

A twenty-fourth embodiment of the present invention will be described with reference to FIG. 44. In this section, a lighting unit 512E including complementary color members 524E (an example of a second complementary color member) instead of the complementary color members 524 of the twenty-second embodiment described above. FIG. 44 is a magnified cross-sectional view illustrating a light source non-opposed adjacent end 5192 and therearound of a liquid crystal display device 510E according to the twenty-fourth embodiment. FIG. 44 includes a portion corresponding to a portion of the twenty-second embodiment in FIG. 42.

Similar to the twenty-second embodiment, each complementary color member 524E in this embodiment is a sheet shaped member in the color (yellow in this embodiment) which makes a complementary color pair with blue (the reference color) exhibited by light rays emitted by the LEDs 517 (primary light rays, blue light rays). Unlike the twenty-second embodiment, each complementary color member 524E has a function for selectively absorbing light rays from the LEDs 517 (the primary light rays, the blue light rays). Furthermore, the complementary color member 524E has a function for passing the secondary light rays (green light rays, red light rays) with wavelengths converted by the phosphors contained in the phosphor sheet 5150 (light transmissivity). Yellow cellophane films may be used for the complementary color members 524E similar to the twenty-first embodiment.

Similar to the twenty-second embodiment, in this embodiment, the complementary color members 524E are disposed between the ends 5192 and 5193 of the light guide plate 519 (the light source non-opposed ends) and the phosphor sheet 5150 to overlap at least the regions (the region R11 and the region R22) from which the light rays that are retroreflected for the smaller number of times exit. Some light rays passing through the light exiting surface 519a and reaching the complementary color member 524E among the primary light rays (blue light rays) entering the light guide plate 519 are absorbed by the complementary color member 524E. The secondary light rays (green light rays, red light rays) reaching the complementary color member 524E pass through the complementary color member 524E and reach the phosphor sheet 5150.

In the lighting unit 512E in this embodiment, the complementary color member 524E are disposed on the ends 5192 and 5193 of the light guide plate 519 (the light source non-opposed ends) on the light exiting surface 519a side. The complementary color member 524E has the function for selectively absorbing the primary light rays (the blue light rays) and selectively passing the secondary light rays (the yellow light rays obtained from the green light rays and the red light rays). According to the configuration, the percentage of the light rays in yellow that makes a complementary color pair with blue can be increased and the percentage of the light rays in blue (the blue light rays) can be reduced in the regions R11 and R22 (R1 and R2) even through the number of times of the retroreflection is small in the regions R11 and R22 (R1 and R2) of the light exiting surface 519a.

Whitish light rays exit from the ends of the lighting unit 512E as from the center portion. In the lighting unit 512E, tinting the light rays of the planar exiting light in the ends (on the light source non-opposed adjacent ends 5192 side and the light source non-opposed adjacent ends 5193 side) more in the color of the primary light from the LEDs 517 (blue) in comparison to the center portion is less likely to occur. The complementary color members 524E having the function for selectively absorbing the light rays from the LEDs 517 (the primary light rays, the blue light rays) and the function for selectively passing the secondary light rays (the green light rays, the red light rays) (the light transmissivity) may be used.

### <Twenty-fifth Embodiment>

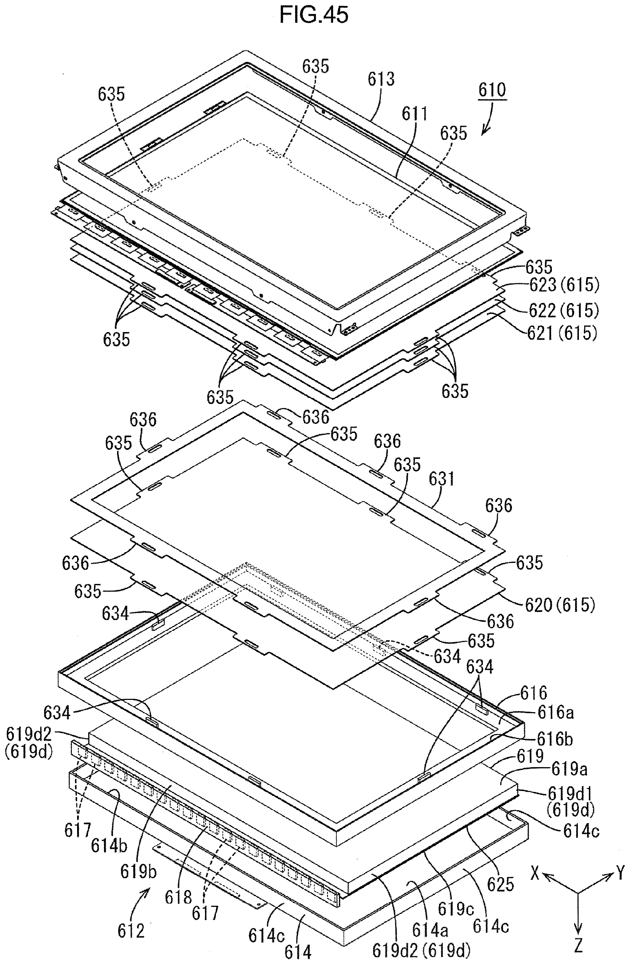

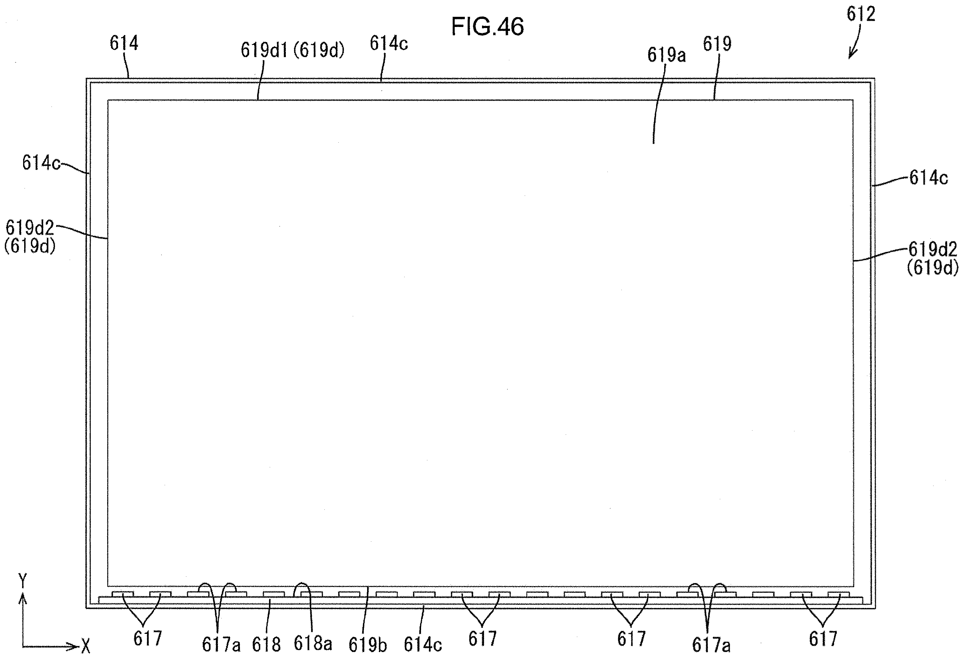

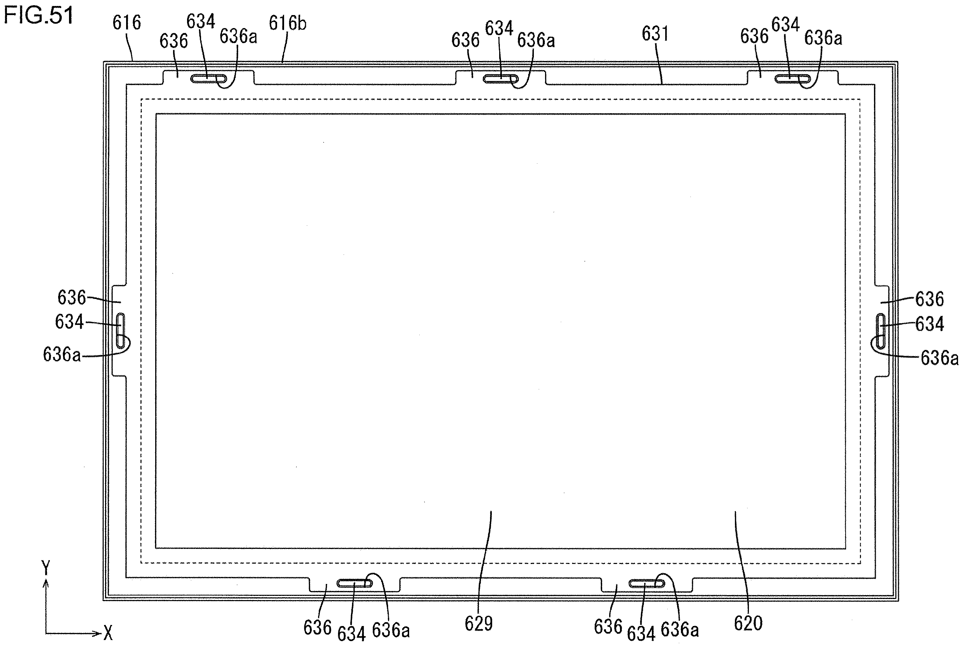

A twenty-fifth embodiment of the present invention will be described with reference to FIGS. 45 to 55. A liquid crystal panel 611 included in a liquid crystal display device 610 according to the twenty-fifth embodiment has a configuration similar to that of the liquid crystal panel 11 of the first embodiment.

As illustrated in FIG. 45, a backlight unit 612 includes a chassis 614, optical members 615 (optical sheets), LEDs 617 that are a light source, an LED board 618 on which the LEDs 617 are mounted, a light guide plate 619, and a frame 616. The light guide plate 619 is configured to direct light from the LEDs 617 to the optical members 615 (the liquid crystal panel 611). The frame 616 holds the light guide plate 619 from the front side and supports the optical members 615 from the rear side. The configurations of the chassis 614, the LEDs 617, the LED board 618, and the light guide plate 619 are similar to those of the chassis 14, the LEDs 17, the LED board 18, and the light guide plate 19 in the first embodiment.

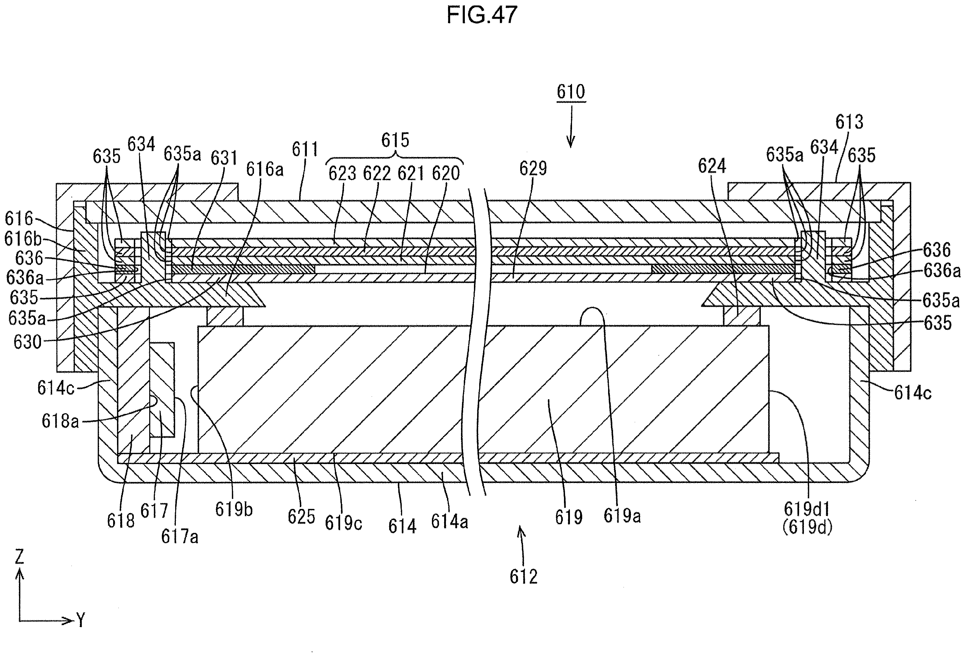

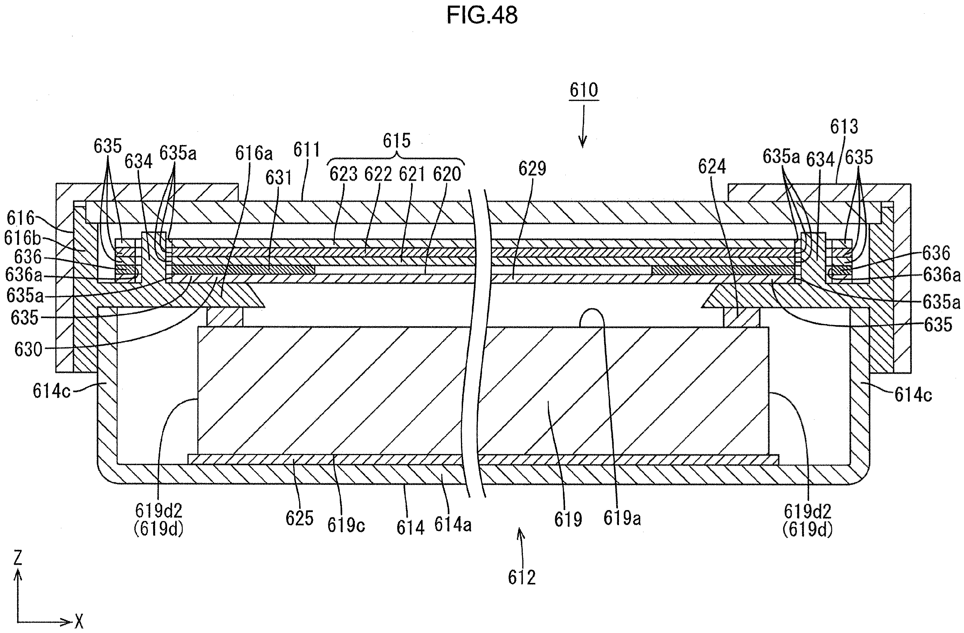

As illustrated in FIG. 45, the optical members 615 include four sheets. Specifically, the optical members 615 include a wavelength converting sheet 620 (a wavelength converting member), a micro lens sheet 621, a prism sheet 622, and a reflective type polarizing sheet 623. The wavelength converting sheet 620 is configured to convert some light rays emitted by the LEDs 617 (primary light rays) into light rays with other wavelengths (secondary light rays). The micro lens sheet 621 is configured to exert isotropic light collecting effects on light rays. The prism sheet 622 is configured to exert anisotropic light collecting effects on light rays. The reflective type polarizing sheet 623 is configured to polarize and reflect the light rays. As illustrated in FIGS. 47 and 48, he wavelength converting sheet 620, the micro lens sheet 621, the prism sheet 622, and the reflective type polarizing sheet 623 of the optical members 615 are placed on top of each other in this sequence from the rear side with ends of the optical members 615 placed on the front surface of the frame 616.

As illustrated in FIG. 45, the frame 616 includes a horizontally-long frame portion 616a (a picture frame portion, a frame shaped supporting portion) which extends along the outer edges of the light guide plate 619 and the optical members 615. An peripheral portion of the light guide plate 619 is held with the frame portion 616a from the front side for about an entire periphery. The frame portion 616a of the frame 616 is disposed between the optical member 615 (the wavelength converting sheet 20) and the light guide plate 619. The frame portion 616a receives the peripheral portions of the optical members 615 from the rear side to support them. According to the configuration, the optical members 615 are held at a position away from the light guide plate 619 by a distance corresponding to the frame portion 616a. A cushion 624 is disposed on the back surface of the frame portion 616a of the frame 616 (on the light guide plate 619 side). The cushion 624 are made of PORON (registered trademark), for example. The cushion 624 has a frame shape to extend for an entire periphery of the frame portion 616a. The frame 616 includes a liquid crystal panel supporting portion 616b that project frontward from the frame portion 616a to support an peripheral portion of the liquid crystal panel 611 from the rear side.

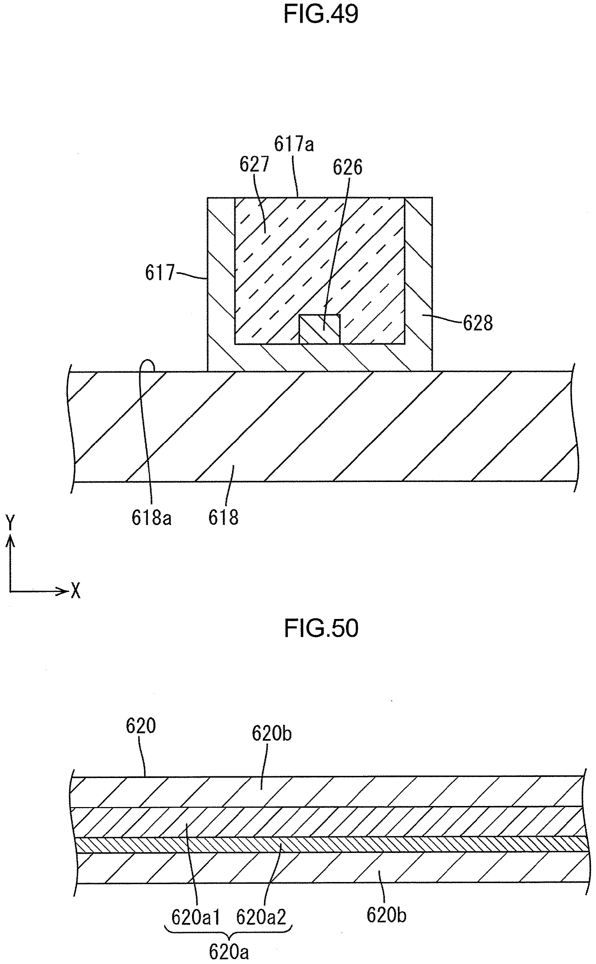

As illustrated in FIGS. 47 and 48, the peripheral portion of the wavelength converting sheet 620 is placed directly on the frame portion 616a of the frame 616 from the front side. As illustrated in FIG. 50, the wavelength converting sheet 620 includes at least a wavelength converting layer 620a (a phosphor film) and a pair of protective layers 620b (protective films). The wavelength converting layer 620a contains phosphors (wavelength converting substances) for converting the light rays from the LEDs 617 into light rays with other wavelengths. The protective layers 620b sandwich the wavelength converting layer 620a from the front and the rear sides to protect the wavelength converting layer 620a. In the wavelength converting layer 620a, red phosphors and green phosphors are dispersed. The red phosphors emit red light rays (visible light rays in a specific wavelength range corresponding to the color range of red) when excited by a single color of blue light rays from the LEDs 617. The green phosphors emit green light rays (visible light rays in a specific wavelength range corresponding to the color range of green) when excited by the blue light rays from the LEDs 617. According to the configuration, the wavelength converting sheet 620 converts the light rays emitted by the LEDs 617 (the blue light rays, the primary light rays) into secondary light rays in a color (yellow) which makes a complementary color pair with the color (blue) of the emitted light rays (green light rays and red light rays). The wavelength converting layer 620a includes a base 620a1 (a phosphor base) and a phosphor layer 620a2 applied to the base 620a1. The base 620a1 is a film made of substantially transparent synthetic resin. The phosphor layer 620a2 includes the red phosphors and the green phosphors dispersed therein. The protective layer 620b is a film made of substantially transparent synthetic resin having high resistance to moisture. As described above, the wavelength converting sheet 620 has the configuration similar to that of the wavelength converting sheet 420 in the seventh embodiment (see FIG. 20).

As illustrated in FIGS. 47 and 48, a gap tends to be created between components in an outer area of the backlight unit 612. Light may leak through such a gap. The light leaking through the gap in the outer area of the backlight unit 612 may include many primary light rays before the wavelength conversion by the wavelength converting sheet 620, that is, blue light rays emitted by the LEDs 617. In comparison to the center portion, the peripheral portion looks bluish similar to the color of light emitted by the LEDs 617, that is, color evenness may be observed.

As illustrated in FIGS. 47, 48, and 51, the backlight unit 612 in this embodiment includes a retroreflector 631. The retroreflector 631 is disposed to at least partially overlap a peripheral portion 630 of the wavelength converting sheet 620 that includes the peripheral portion 630 and a center portion 629. The retroreflector 631 does not overlap the center portion 629. The retroreflector 631 is configured to retroreflect some light rays to the side opposite from the light exiting side, that is, to the rear side. According to the configuration, some light rays around the peripheral portion of the wavelength converting sheet 620 are retroreflected to the rear side by the retroreflector 631. The light rays retroreflected to the rear side by the retroreflector 631 are more likely to pass through the wavelength converting sheet 620 and converted into light rays with other wavelengths. Therefore, even if light leaks through the gap between the components in the outer area of the backlight unit 612, exiting light is less likely to be bluish similar to the color of light emitted by the LEDs 617 (the primary light) in the outer area of the backlight unit 612 and thus the color unevenness is less likely to occur in the exiting light.

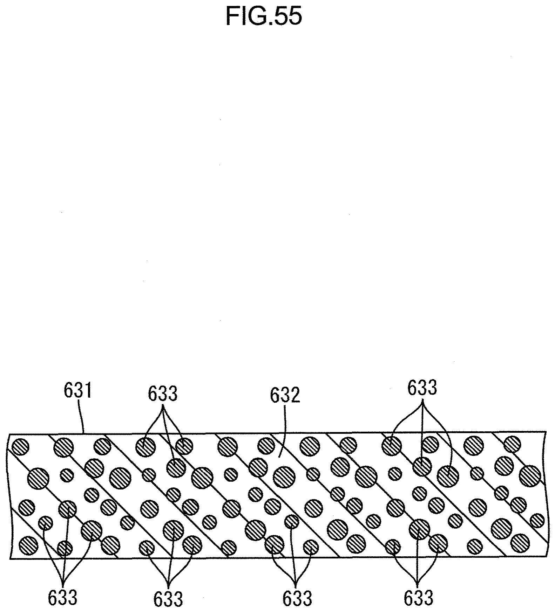

As illustrated in FIG. 55, the retroreflector 631 includes a base 632 that is a sheet (or a film) and a large number of light scattering particles 633 (light diffusing particles) dispersed in the base 632 for scattering and reflecting (diffusely reflecting) light rays. The retroreflector 631 has the configuration similar to a configuration of a light scattering reflecting sheet (a light diffusing reflecting sheet), which is one kind of ordinary optical members. Namely, the retroreflector 631 can be produced using such an ordinary optical member. This configuration is preferable for reducing the production cost. The base 632 of the retroreflector 631 is mainly made of substantially transparent synthetic rein having high light transmissivity such as acrylic resin, polyurethane, polyester, silicone resin, epoxy resin, and ultraviolet curing resin. The light scattering particles 633 of the retroreflector 631 is made of white or substantially transparent material. The material may be inorganic material such as silica, aluminum hydroxide, and zinc oxide or organic material such as acrylic resin, polyurethane, and polystyrene. The retroreflector 631 includes a surface for scattering and reflecting the light rays (Lambertian reflectance). The light scattering particles 633 scatter and reflect the light rays without absorbing. Some light rays of the scattered and reflected light rays are retroreflected to the rear side. High light use efficiency can be achieved and thus chronological reduction in performance is less likely to occur. Each light scatting particle 633 has a spherical shape. The light scattering particles 633 are scatted in the base 632 with a predefined concentration distribution.

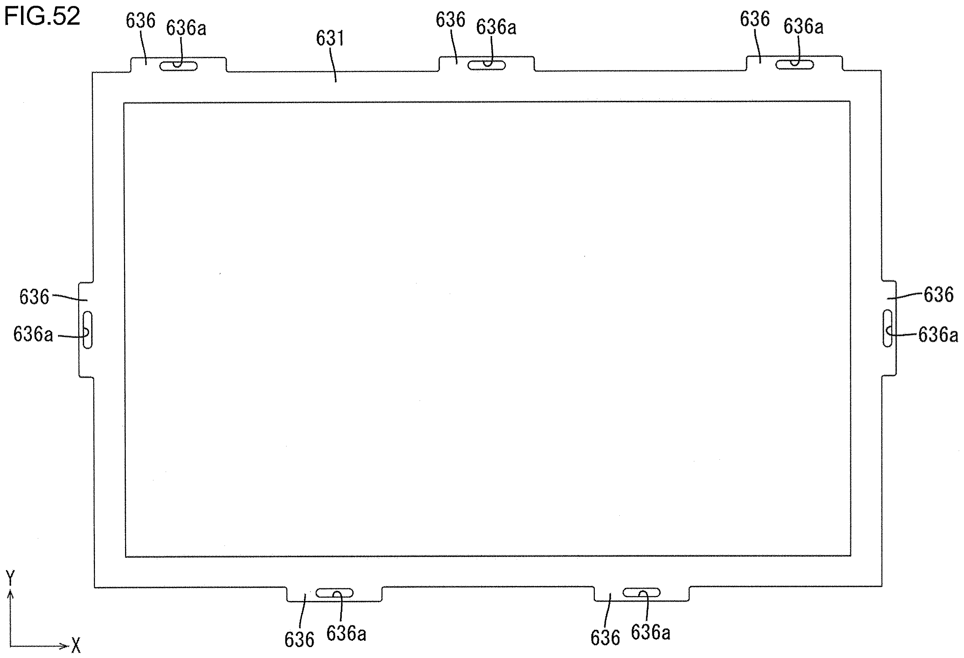

As illustrated in FIGS. 47 and 48, the retroreflector 631 is disposed to overlap the wavelength converting sheet 620 on the light exiting side, that is, on the front side. According to the configuration, the light rays passed through the wavelength converting sheet 620 and retroreflected by the retroreflector 631 pass through the wavelength converting sheet 620 immediately after retroreflected. Namely, the light rays pass through the wavelength converting sheet 620 for the larger number of times. The light rays are more likely to be converted to light rays with other wavelengths. This configuration is more preferable for reducing the color unevenness. As illustrated in FIG. 52, the retroreflector 631 has a horizontally-long rectangular overall shape in a plan view to extend for an entire periphery of the peripheral portion 630 of the wavelength converting sheet 620. The retroreflector 631 is disposed to overlap the peripheral portion 630 of the wavelength converting sheet 620 for the entire periphery of the peripheral portion 630. The retroreflector 631 overlaps a section of the peripheral portion 630 of the wavelength converting sheet 620 parallel to the non-light-entering end surface 619d, which is the peripheral surface of the light guide plate 619. The retroreflector 631 further overlaps a section of the peripheral portion 630 of the wavelength converting sheet 620 parallel to the light entering end surface 619b. According to the configuration, some of the light rays in an area around the section of the peripheral portion 630 of the wavelength converting sheet 620 parallel to the non-light-entering end surface 619d of the light guide plate 619 and some of the light rays in an area around the section of the peripheral portion 630 parallel to the light entering end surface 619b of the light guide plate 619 are retroreflected to the rear side by the retroreflector 631. The light rays transmitting through the light guide plate 619 may exit through the non-light-entering end surface 619d of the light guide plate 619 or through the light entering end surface 619b and the light rays leak through the gap between the components of the backlight unit 612. Even in such a case, the color unevenness can be properly reduced. Furthermore, regardless of the location of the gap between the components of the backlight unit 612 on the periphery, the color unevenness resulting from the leak of light through the gap can be properly reduced.

As illustrated in FIGS. 47, 48, and 51, the retroreflector 631 includes a section that overlaps the frame portion 616a of the frame 616 and a section disposed inner than the inner edge of the frame portion 616a of the frame 616. The frame portion 616a supports the peripheral portion of the light guide plate 619 from the front side. The retroreflector 631 is disposed to cross the inner edge of the frame portion 616a. The inner edge of the frame portion 616a of the frame 616 is at a boundary between an effective light exiting area and a non-effective light exiting area. The retroreflector 631 is disposed in an area of the light exiting plate surface 619a of the light guide plate 619 across the boundary between effective light exiting area and the non-effective light exiting area. According to the configuration, some of the light rays in the effective light exiting area inside the inner edge of the frame portion 616a of the frame 616 can be retroreflected to the rear side by the retroreflector 631. The light rays in the area around the peripheral portion 630 of the wavelength converting sheet 620 can be efficiently retroreflected. Therefore, the color unevenness resulting from the leak of light through a gap between the frame 616 and the light guide plate 619 or a gap between the frame 616 and the wavelength converting sheet 620 can be properly reduced.

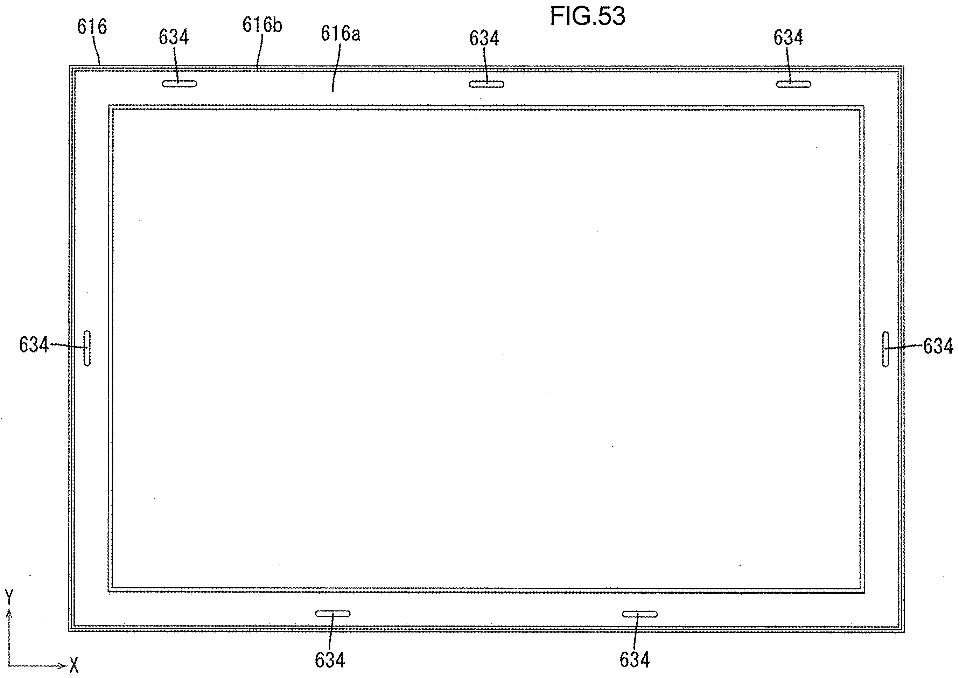

The retroreflector 631 having the configuration described above is positioned relative to the frame 616 together with the optical members 615 (including the wavelength converting sheet 620). A positioning structure will be described in detail. As illustrated in FIGS. 47, 48, and 53, the frame 616 includes positioning portions 634 for positioning the optical members 615 and the retroref lector 631. The positioning portions 634 protrude from the front surface of the frame portion 616a of the frame 616 to the front side. Each positioning portion 634 has a horizontally-long or a vertically long oval shape in a plan view. A dimension of each positioning portion 634 in a direction in which the positioning portion 634 projects from the frame portion 616a is larger than a total thickness of the optical members 615 and the retroref lector 631. The positioning portions 634 are arranged at intervals along the periphery of the frame portion 616a. Specifically, three positioning portions 634 are provided in a first long edge section of the frame portion 616a (on the upper side in FIG. 53), two positioning portions 634 are provided in a second long edge section of the frame portion 616a (on the lower side in FIG. 53, and one positioning portion 634 is provided in each short edge section of the frame portion 616a. A total of seven positioning portions 634 are arranged asymmetrically with respect to the vertical direction as illustrated in FIG. 53.

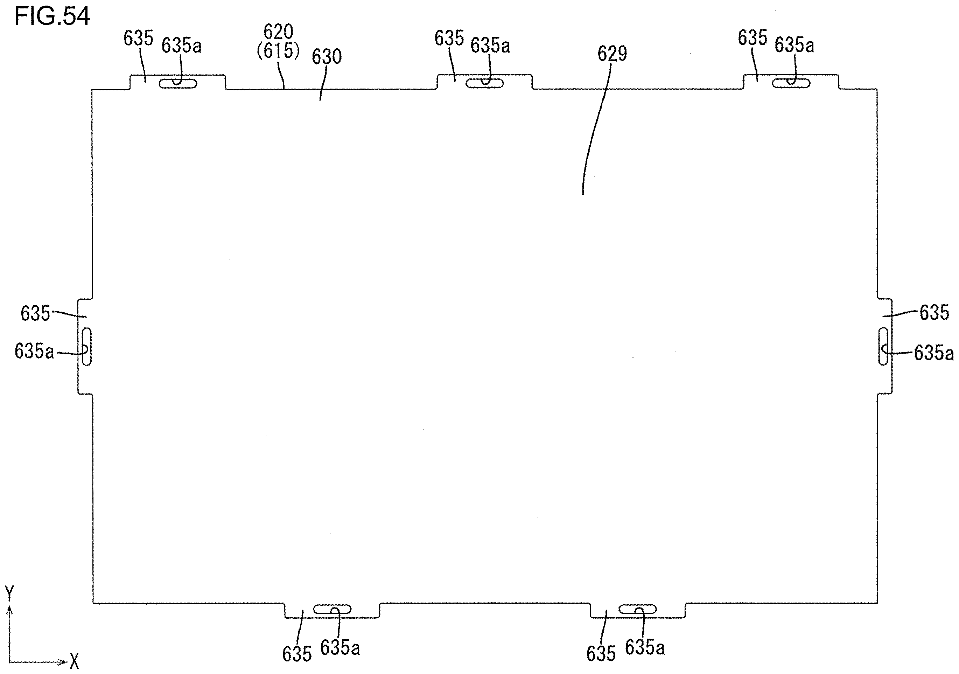

The optical members 615 include first mating positioning portions 635 positioned with the positioning portions 634 of the frame 616. As illustrated in FIG. 54, the first mating positioning portions 635 project (extend) outward from sections of the outer edges of the optical members 615 parallel to the plate surfaces of the optical members 615. Each of the wavelength converting sheet 620, the micro lens sheet 621, the prism sheet 622, and the reflective type polarizing sheet 623 of the optical members 615 includes the first mating positioning portions 635. Positions of the first mating positioning portions 635 arranged at intervals along the periphery of the optical members 615 in the plan view correspond to the positions of the positioning portions 634 of the frame 616. The arrangement of the first mating positioning portions 635 is asymmetric with respect to the vertical direction as illustrated in FIG. 54. Each first mating positioning portion 635 has a horizontally-long or a vertically-long rectangular shape in the plan view. A size of each mating positioning portion 635 in the plan view is significantly larger than that of the corresponding positioning portion 634. Each first mating positioning portion 635 includes a first positioning hole 635a at the center. The corresponding positioning portion 634 can be passed through the first positioning hole 635a. The first positioning hole 635a has a horizontally-long or a vertically-long rectangular shape similar to that of the first mating positioning portion 635 and slightly smaller than the positioning portion 634 in the plan view. As illustrated in FIGS. 47, 48, and 51, at least portions of outer peripheries of the positioning portions 634 are in contact with inner peripheries (hole edges) of the first positioning holes 635a of the first mating positioning portions 635. In this condition, the optical members 615 is positioned relative to the frame 616 with respect to a direction parallel to the plate surface thereof (the X-axis direction and the Y-axis direction).

The retroreflector 631 includes second mating positioning portions 636 that are positioned with the positioning portions 634 of the frame 616. As illustrated in FIG. 52, the second mating positioning portions 636 project (extend) outward from sections of the outer end of the retroreflector 631 parallel to the plate surface of the retroreflector 631. The second mating positioning portions 636 are arranged at intervals along the periphery of the retroreflector 631. The arrangement of the second mating positioning portions 636 in the plan view is similar to that of the positioning portions 634 of the frame 616 (the arrangement of the first mating positioning portions 635 of the optical members 615). The arrangement of the second mating positioning portions 636 is asymmetric with respect to the vertical direction. Each second mating positioning portion 636 has a horizontally-long or a vertically-long rectangular shape in the plan view. The size of the second mating positioning portion 636 in the plan view is significantly larger than the positioning portion 634 and about the same as the first mating positioning portion 635. Each mating positioning portion 636 includes a second positioning hole 636a at the center. The corresponding positioning portion 634 can be passed through the second positioning hole 636a. The second positioning hole 636a has a horizontally-long or a vertically-long rectangular shape similar to the second mating positioning portion 636 in the plan view. The size of the second positioning hole 636a in the plan view is slightly smaller than that of the positioning portion 634 and about the same as that of the first positioning hole 635a. When the second mating positioning portions 636 are arranged to correspond with the first mating positioning portions 635 in the plan view, the second positioning hole 636a correspond with the first positioning holes 635a such that the inner walls of the second positioning holes 636a are flush with the inner wall of the respective first positioning holes 635a (see FIGS. 47 and 48). As illustrated in FIGS. 47, 48, and 51, at least portions of outer peripheries of the positioning portions 634 are in contact with inner peripheries (hole edges) of the second positioning holes 636a of the second mating positioning portions 636. In this condition, the retroreflector 631 is positioned relative to the frame 616 with respect to a direction parallel to the plate surface thereof (the X-axis direction and the Y-axis direction). Because the retroreflector 631 is positioned using the positioning portions 634 that are shared with the optical members 615, the position of the retroreflector 631 relative to the wavelength converting sheet 620 is maintained with high positioning accuracy without using an adhesive or other methods. Furthermore, this configuration is preferable for simplifying the positioning structure.

This embodiment has the configuration described above. Next, the functions of this embodiment will be described. In the production of the liquid crystal display device 610 having the configuration described above, the liquid crystal panel 611 and the backlight unit 612 are produced and bound together with the bezel 613. A method of producing the backlight unit 612 will be described. In the production of the backlight unit 612, the reflection sheet 625, the light guide plate 619, and the LED board 618 are placed in the chassis 614 through a light exiting portion 614b, and the frame 616 is attached to the chassis 614. The optical members 615 and the retroreflector 631 are attached to the frame 616 that is attached to the chassis 614. Specifically, the wavelength converting sheet 620, the retroreflector 631, the micro lens sheet 621, the prism sheet 622, and the reflective type polarizing sheet 623 are placed in this sequence on the frame portion 616a of the frame 616.

During the attachment of the wavelength converting sheet 620, the positioning portions 634 of the frame 616 are aligned with the first positioning holes 635a of the respective first mating positioning portions 635 at the peripheral portion of the wavelength converting sheet 620 and inserted in the first positioning holes 635a. The outer peripheries of the positioning portions 634 are brought into contact with the inner walls (the hole edges) of the respective positioning holes 635a (see FIGS. 47, 48, and 51). Shift of the position of the wavelength converting sheet 620 is restricted in directions parallel to the plate surface of the wavelength converting sheet 620. The wavelength converting sheet 620 is positioned. During the attachment of the retroreflector 631 to the wavelength converting sheet 620 on the front side, the positioning portions 634 of the frame 616 are inserted in the second positioning holes 636a of the respective second mating positioning portions 636 at the outer end of the retroreflector 631. Outer edges of the positioning portions 634 are bought into contact with the inner walls (the hole edges) of the respective second positioning holes 636a (see FIGS. 47, 48, and 51). In this condition, the second positioning holes 636a are at the positions corresponding with the first positioning holes 635a in the plan view. Shifts of the positions of the retroreflector 631 and the wavelength converting sheet 620 are restricted in directions parallel to their plate surfaces. The retroreflector 631 is positioned together with the wavelength converting sheet 620. The optical members 615 other than the wavelength converting sheet 620 (the micro lens sheet 621, the prism sheet 622, and the reflective type polarizing sheet 623) are positioned in the same manner using the positioning portions 634 and the first mating positioning portions 635. Alternatively, the optical members 615 and the retroreflector 631 are bound are attached to the frame 616 before attaching the frame 616 to the chassis 614 and a unit including the frame 616, the optical members 615, and the retroreflector 631 may be collectively attached to the chassis 614.

When the liquid crystal display device 610 produced as describe above is turned on, the driving of the liquid crystal panel 611 is controlled by a panel control circuit in a control circuit board, which is not illustrated. Furthermore, driving power is supplied to the LEDs 617 on the LED board 618 by an LED driver circuit in an LED driver circuit board, which is not illustrated, and the driving of the LEDs 617 is controlled. The light emitted by the LEDs 617 is guided by the light guide plate 619 to the liquid crystal panel 611 via the optical members 615. A predefined image is displayed on the liquid crystal panel 611. Functions of the backlight unit 612 will be described in detail.

When the LEDs 617 are turned on, the blue light rays emitted by the LEDs 617 enter the light guide plate 619 through the light entering end surface 619b as illustrated in FIG. 47. The light rays that have entered through the light entering end surface 619b may be totally reflected off the interface between the light guide plate 619 and the outside air layer or reflected by the reflection sheet 625 while transmitting through the light guide plate 619. The light rays are reflected and scattered. The light rays enter the light exiting plate surface 619a with incidences smaller than the critical angle and thus the light rays are more likely to exit through the light exiting plate surface 619a. The light rays that have exited from the light guide plate 619 through the light exiting plate surface 619a are directed to the liquid crystal panel 611 after the optical effects are exerted thereon while passing through the optical members 615. Some of the light rays are retroreflected by the optical members 615 and returned to the light guide plate 619 and exit through the light exiting plate surface 619a as retroreflected light rays. The retroreflected light rays are included in the light exiting from the backlight unit 612.

Next, the optical effects of the optical members 615 will be described in detail. Some of the blue light rays exiting from the light guide plate 619 through the light exiting plate surface 619a are converted into the green light rays and the red light rays (the secondary light rays) by the green phosphors and the red phosphors contained in the wavelength converting sheet 620 that is disposed on the front side relative to the light exiting plate surface 619a with the gap as illustrated in FIG. 47. Illumination light in substantially white is obtained from the green light rays and the red light rays obtained through the wavelength conversion and the blue light rays from the LEDs 617. The isotropic light collecting effects are exerted on the blue light rays from the LEDs 617 and the green light rays and the red light rays obtained through the wavelength conversion by the wavelength converting sheet 620 with respect to the X-axis direction and the Y-axis direction by the micro lens sheet 621. Then, the selective light collecting effects (the anisotropic light collecting effects) are exerted on those light rays with respect to the Y-axis direction by the prism sheet 622. Specific polarized light rays (p-wave) among the light rays that have exited from the prism sheet 622 pass through the reflective type polarizing sheet 623 and exit toward the liquid crystal panel 611. Other specific polarized light rays (s-wave) are selectively returned to the rear side. The s-wave reflected by the reflective type polarizing sheet 623 or the light rays reflected to the rear side without the light collecting effect exerted by the prism sheet 622 and the micro lens sheet 621 are returned to the light guide plate 619. While traveling through the light guide plate 619, the light rays may be reflected again by the reflection sheet 625. Then, the light rays exit to the front side through the light exiting plate surface 619a.

The light rays emitted by the LEDs 617 travel through the light exiting path described above and exit from the backlight unit 612. In the outer area of the backlight unit 612, a gap may be created between the components and thus the light may leak through such a gap. Specifically, a gap may be created between the light guide plate 619 and the cushion 624 (the frame 616) or between the frame 616 and the optical members 615 due to backlash. If such a gap is created, the blue light rays that have not been converted by the wavelength converting sheet 620 may leak through the gap. If that occurs, the color in the outer area of the backlight unit 612 looks more bluish than the color in the center area, that is, the color unevenness may be observed. As illustrated in FIGS. 47, 48, and 51, the wavelength converting sheet 620 in this embodiment is disposed over the retroreflector 631 to overlap the peripheral portion 630 but not the center portion 629. Therefore, the some of the light rays around the peripheral portion 630 are retroreflected to the rear side by the retroreflector 631. The light rays retroreflected by the retroreflector 631 may include the leaking light rays and the blue light rays that have not been converted other than the leaking light rays. The light rays retroreflected to the rear side by the retroreflector 631 are more likely to pass the wavelength converting sheet 620 and thus more likely to be converted to light rays with other wavelengths. Therefore, even if leaking of light through the gap occurs, the light rays exiting from the peripheral portion of the backlight unit 612 are less likely to be in a color similar to the color of the light rays from the LEDs 617, that is, less likely to be in blue. The color unevenness can be reduced. Furthermore, the retroreflector 631 is disposed to overlap the wavelength converting sheet 620 on the front side. Therefore, the light rays retroreflected by the retroreflector 631 immediately enter the wavelength converting sheet 620. The light rays are more likely to be converted to light rays with other wavelengths. According to the configuration, the light rays pass through the wavelength converting sheet 620 for the larger number of times. Therefore, the light rays are more likely to be converted to the light rays with the other wavelengths. This configuration is more preferable for reducing the color unevenness.

The blue light rays that have not converted and traveling through the light guide plate 619 may exit the light guide plate 619 through the peripheral surfaces. The leaking light through the gap between the components of the backlight unit 612 includes such light rays. Especially, the light rays are more likely to exit thought the non-light-entering end surface 629d among the peripheral surfaces of the light guide plate 619. As illustrated in FIGS. 47 and 48, the retroreflector 631 is disposed to overlap the section of the peripheral portion 630 of the wavelength converting sheet 620 parallel to the non-light-entering end surface 619d of the light guide plate 619. Therefore, some of the light rays around the section of the peripheral portion 630 of the wavelength converting sheet 620 parallel to the non-light-entering end surface 619d of the light guide plate 619 are retroreflected to the rear side by the retroreflector 631. Even if the light rays traveling through the light guide plate 619 exit from the light guide plate 619 through the non-light-entering end surface 619d and leak through the gap between the components of the backlight unit 612, the color unevenness is properly reduced. Furthermore, the retroreflector 631 is disposed to overlap the section of the peripheral portion 630 of the wavelength converting sheet 620 parallel to the light-entering end surface 619b of the light guide plate 619 in addition to the section of the peripheral portion 630 of the wavelength converting sheet 620 parallel to the non-light-entering end surface 619d of the light guide plate 619. Therefore, the light rays around the section of the peripheral portion 630 of the wavelength converting sheet 620 parallel to the light-entering end surface 619b of the light guide plate 619 are retroreflected to the rear side by the retroreflector 631. Even if the light rays traveling through the light guide plate 619 exit from the light guide plate 619 through the light-entering end surface 619b and leak through the gap between the components of the backlight unit 612, the color unevenness is properly reduced. Because the retroreflector 631 is disposed to extend for the entire periphery of the peripheral portion 630 of the wavelength converting sheet 620, the color unevenness resulting from the light leaking through the gap between the components of the backlight unit 612 which is created at any positions on the periphery can e properly reduced.

As illustrated in FIGS. 47, 48, and 51, the retroreflector 631 includes the section that overlaps the frame portion 616a of the frame 616 that supports the end of the light guide plate 619 from the front side and the section located inner than the inner edge of the frame portion 616a of the frame 616. Some of the light rays in the effective light exiting area inside the inner edge of the frame portion 616a of the frame 616 can be retroreflected to the rear side by the retroreflector 631. According to the configuration, the light rays around the peripheral portion 630 of the wavelength converting sheet 620 are more efficiently retroreflected. Therefore, the color unevenness resulting from the light leaking through the gap between the frame 616 and the light guide plate 619 or the gap between the frame 616 and the wavelength converting sheet 620 can be properly reduced.

### <Twenty-sixth Embodiment>

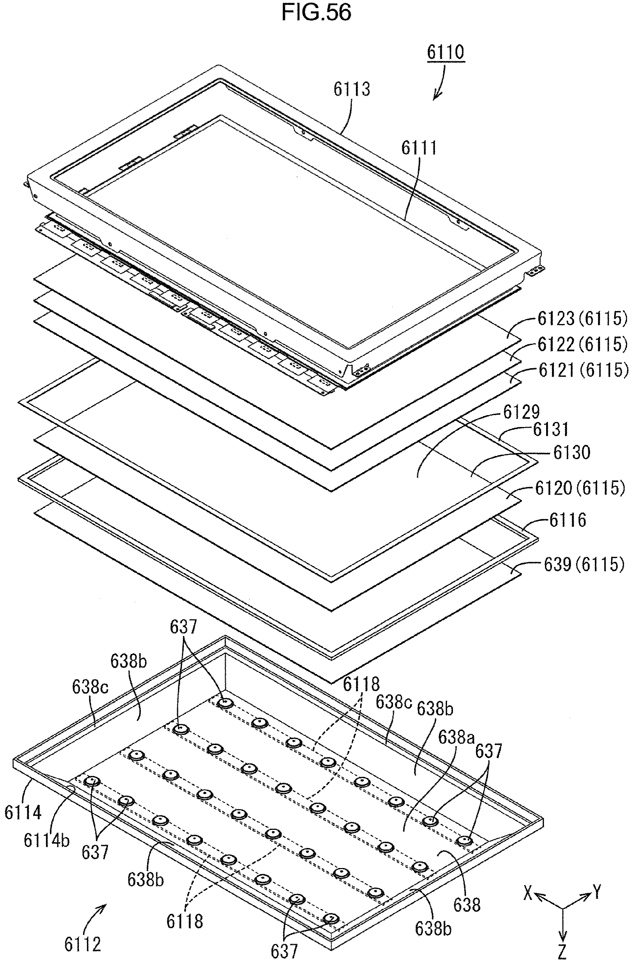

A twenty-sixth embodiment of the present invention will be described with reference to FIGS. 56 to 61. The twenty-sixth embodiment includes a direct type backlight unit 6112. Configurations, functions, and effects similar to those of the twenty-fifth embodiment will not be described.

As illustrated in FIG. 56, a liquid crystal display device 6110 according to this embodiment includes a liquid crystal panel 6111, the direct type backlight unit 6112, and a bezel 6113 that binds the liquid crystal panel 6111 and the backlight unit 6112. The configuration of the liquid crystal panel 6111 is similar to that of the twenty-fifth embodiment and will not be described. The configuration of the direct type backlight unit 6112 will be described.

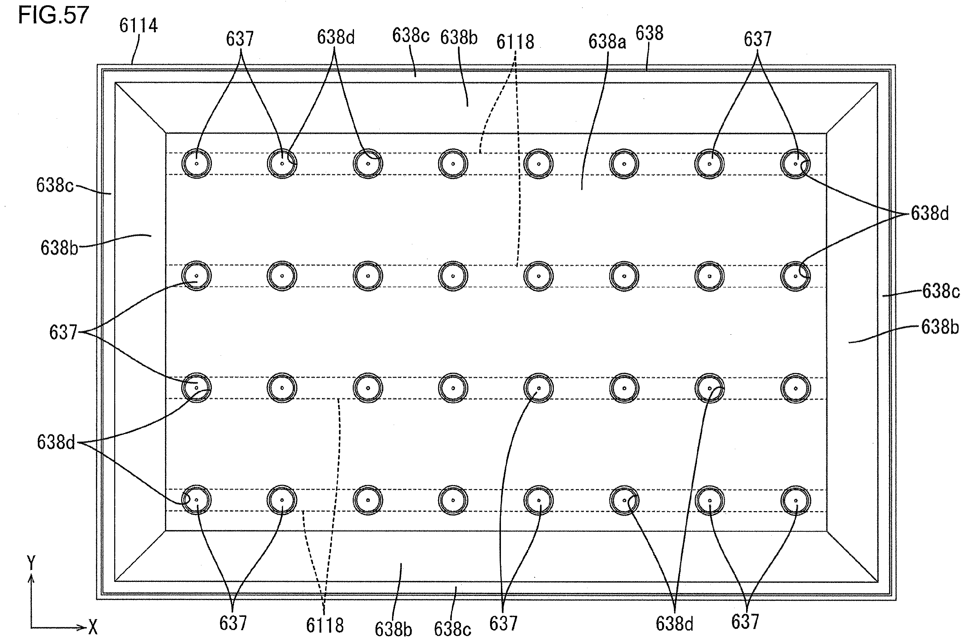

As illustrated in FIG. 57, the backlight unit 6112 includes a chassis 6114, optical members 6115, and a frame 6116. The chassis 6114 has a box-like shape. The chassis 6114 includes a light exiting portion 6114b that opens to the outside on the front side, that is, on the light exiting side (the liquid crystal panel 6111 side). The optical members 6115 are disposed to cover the light exiting portion 6114b of the chassis 6114. The frame 6116 is disposed along outer edges of the chassis 6114. The frame 6116 and the chassis 6114 sandwich peripheral portions of the optical members 6115 to hold the peripheral portions therebetween. In the chassis 6114, LEDs 6117, LED boards 6118, and diffuser lenses 637 (light sources) are disposed. The LEDs 6117 are disposed immediately below the optical members 6115 (the liquid crystal panel 6111) and opposed to the optical members 6115. The LEDs 6117 are mounted on the LED boards 6118. The diffuser lenses 637 are mounted to the LED boards 6118 at positions corresponding to the LEDs 6117. Furthermore, in the chassis 6114, a reflection sheet 638 is disposed. The reflection sheet 638 reflects light rays inside the chassis 6114 toward the optical members 6115. Because the backlight unit 6112 in this embodiment is the direct type backlight unit, the light guide plate 619 (see FIG. 47) used in the edge-light type backlight unit 612 in the twenty-fifth embodiment is not included in the backlight unit 6112. This embodiment does not include the cushion 624 and the liquid crystal panel supporting portions 616b (see FIG. 47) included in the twenty-fifth embodiment. In this regard, the configuration of the frame 6116 is different from that of the twenty-fifth embodiment. Next, components of the backlight unit 6112 will be described in detail.

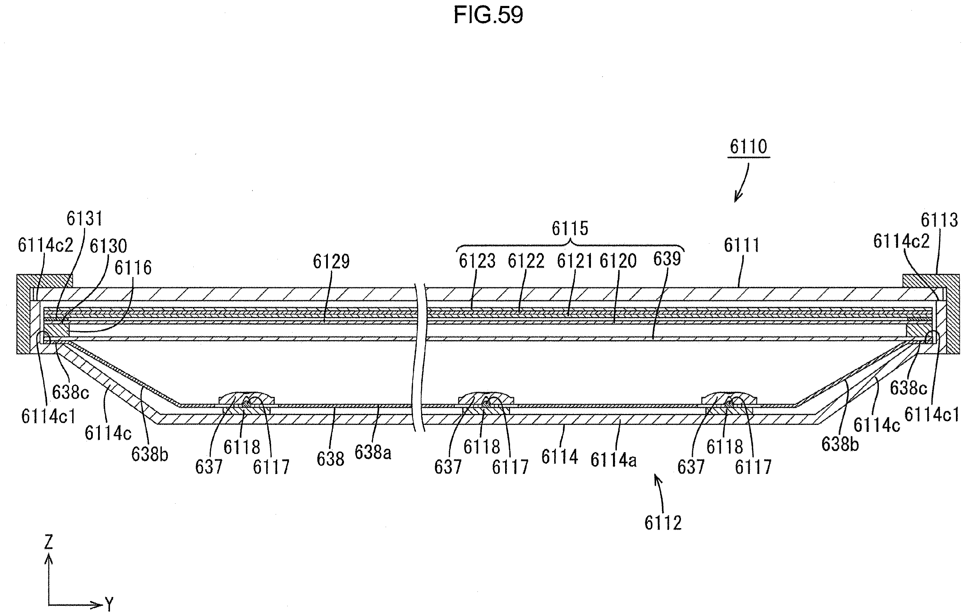

The chassis 6114 is made of metal. The chassis 6114 has a shallow box-like overall shape with an opening on the front side. As illustrated in FIGS. 57 and 59, the chassis 6114 includes a bottom 6114a and sidewalls 6114c. The bottom 6114a has a horizontally-long rectangular shape similar to the liquid crystal panel 6111. The sidewalls 6114c project frontward (toward the light exiting side) from the outer edges of the bottom 6114a, respectively. The long edges and the short edges of the chassis 6114 correspond with the X-axis direction (the horizontal direction) and the Y-axis direction (the vertical direction), respectively. The bottom 6114a is disposed on the rear side relative to the LED boards 6118, that is, on the side opposite from the light exiting surface 6117a side (the light exiting side) relative to the LEDs 6117. The sidewalls 6114c form a tubular shape continuing from the outer edges of the bottom 6114a for the entire periphery of the bottom 6114a. A dimension of the opening is larger on the opening edge side on the front (the light exiting portion 6114b side, the side opposite from the bottom 6114a side). The sidewalls 6114c include first steps 6114c1 and second steps 6114c2. The first steps 6114c1 are located lower and the second steps 6114c2 are located higher. Outer ends of the optical members 6115 (specifically, a diffuser plate 639) and the reflection sheet 638, which will be described later, are placed on the first steps 6114c1. The peripheral portion of the liquid crystal panel 6111 is placed on the second steps 6114c2. The frame 6116 and the bezel 6113 are fixed to the sidewalls 6114c.

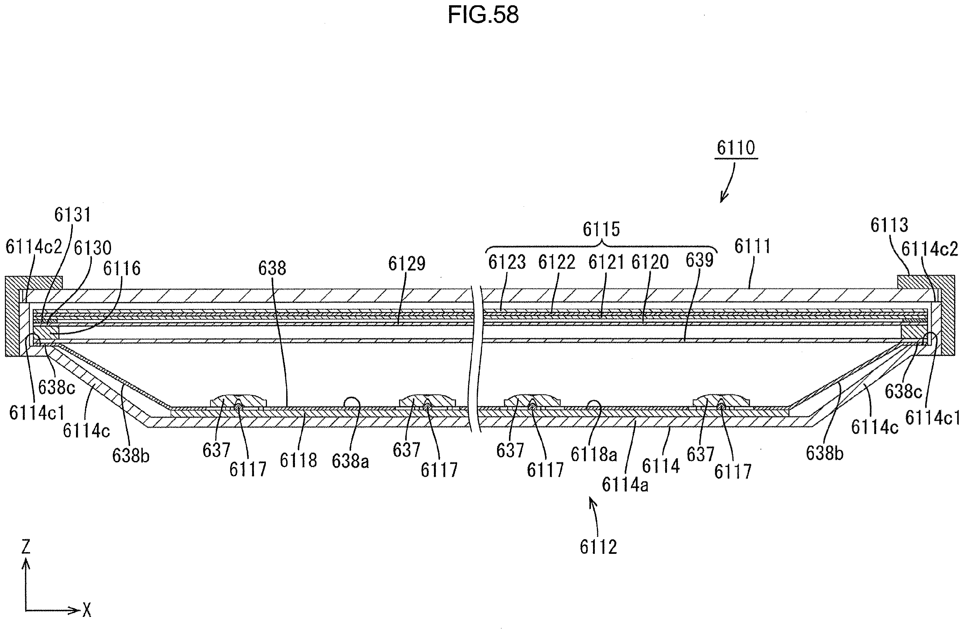

As illustrated in FIGS. 58 and 59, the optical members 6115 include a wavelength converting sheet 6120, a micro lens sheet 6121, a prism sheet 6122, a reflective type polarizing sheet 6123, which are similar to those in the twenty-fifth embodiment, and the diffuser plate 639. The diffuser plate 639 has a thickness larger than thickness of other optical members 6120 to 6123. The diffuser plate 639 is disposed on the rearmost, namely, the closest to the LEDs 6117 and the diffuser lenses 637. The peripheral portion of the diffuser plate 639 is placed directly on the first steps 6114c1 of the sidewalls 6114c of the chassis 6114. The optical members 6115 are disposed to cover the light exiting portion 6114b of the chassis 6114, that is, on an exit side of the light exiting path relative to the LEDs 6117 and the diffuser lenses 637. Therefore, optical effects are exerted on the light rays from the LEDs 617 and the diffuser lenses 637 in a process to exit through the light exiting portion 6114b. The optical members 6120 to 6123 other than the diffuser plate 639 have the configurations similar to those of the twenty-fifth embodiment.

Next, the LED boards 6118 on which the LEDs 6117 are mounted will be described. The LEDs 6117 mounted on the LED boards 6118 have the configurations similar to those of the twenty-fifth embodiment. As illustrated in FIGS. 57 to 59, each LED board 6118 has a horizontally-long rectangular shape in a plan view. The LED boards 6118 are held in the chassis 6114 such that the LED boards 6118 extend along the bottom 6114a with the long-side directions and the short-side directions correspond with the X-axis direction and the Y-axis direction, respectively. The LEDs 6117 are surface mounted on plate surfaces of the LED boards 6118 facing the front side (plate surfaces facing the optical member 6115 side). The plate surfaces are referred to as mounting surfaces 6118a. The LEDs 6117 are linearly arranged at intervals within the plane of the mounting surface 6118a of each LED board 6118. The LEDs 6117 are electrically connected to each other with a wiring pattern formed on the mounting surface 6118a within the plate of the mounting surface 6118a. Specifically, eight LEDs 6117 are arranged on the mounting surface 6118a of each LED board 6118 along the long-side direction (the X-axis direction) of the LED board 6118. The intervals of the LEDs 6117 on the LED board 6118 are substantially constant. The LEDs 6117 are arranged at about equal intervals in the X-axis direction.

As illustrated in FIG. 57, the LED boards 6118 having the configurations described above are arranged in the Y-axis direction within the chassis 6114. The LED boards 6118 are arranged parallel to each other with the long-side directions and the short-side direction aligned with each other. Specifically, four LED boards 6118 are arranged along the Y-axis direction within the chassis 6114. The arrangement direction of the LED boards 6118 corresponds with the Y-axis direction. The intervals of the LED boards 6118 adjacent to one another in the Y-axis direction are substantially constant. The LEDs 6117 are arranged at about equal intervals in the X-axis direction (a row direction) and the Y-axis direction (a column direction) within a plane of the bottom 6114a of the chassis 6114 to form a grid in a plan view. Specifically, eight LEDs 6117 along the long-side direction (the X-axis direction) by four LEDs 6117 along the short-side direction (the Y-axis direction) are arranged within the plane of the bottom 6114a of the chassis 6114 to form a grid in the plan view. The optical members 6115 disposed to cover the light exiting portion 6114b of the chassis 6114 are opposed to the light emitting surfaces 6117a of all LEDs 6117 with a predetermined gap on the front side. The LED boards 6118 include connectors to which wiring members (not illustrated) are connected. Driving power is supplied from an LED driver board (a light source driver board), which is not illustrated, to the LED boards 6118 via the wiring members.

The diffuser lenses 637 are made of substantially transparent synthetic resin (e.g., polycarbonate, acrylic) having high light transmissivity and a refractive index larger than that of the air. As illustrated in FIGS. 57 to 59, each diffuser lens 637 has a predefined thickness and a round shape in the plan view. The diffuser lenses 637 are attached to the LED boards 6118 to cover the light emitting surfaces 6117a of the LEDs 6117 from the front side (the light exiting side), respectively. Namely, the diffuser lenses 637 are attached to the LED boards 6118 to overlap the LEDs 6117, respectively in the plan view. The number and the arrangement of the diffuser lenses 637 in the backlight unit 6112 are the same as the number and the arrangement of the LEDs 6117 that are described earlier. The diffuser lenses 637 are configured to diffuse and pass the light rays emitted by the LEDs 6117 and having high directivity. The directivity of the light rays emitted by the LEDs 6117 is reduced when passing through the diffuser lenses 637 and then the light rays are directed to the optical members 6115. Even if the LEDs 6117 are arranged at larger intervals, each area between the adjacent LEDs 6117 is less likely to be recognized as a dark spot. Namely, the diffuser lenses 637 perform optical functions as fake light sources for diffusing the light rays from the LEDs 6117. According to the configuration, the number of the LEDs 6117 can be reduced. The diffuser lenses 637 are disposed substantially concentrically with the respective LEDs 6117 in the plan view.

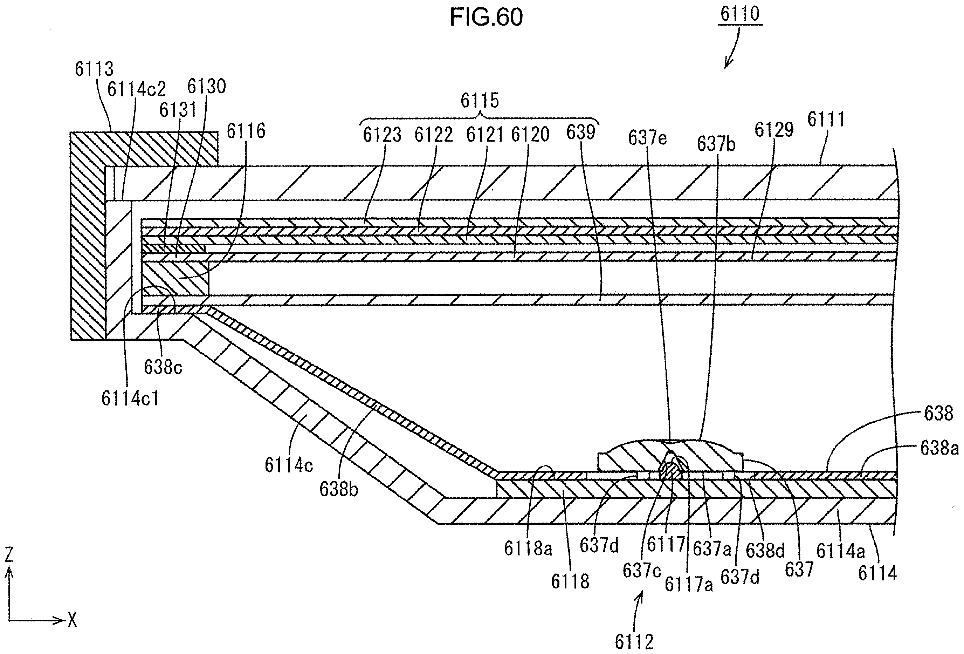

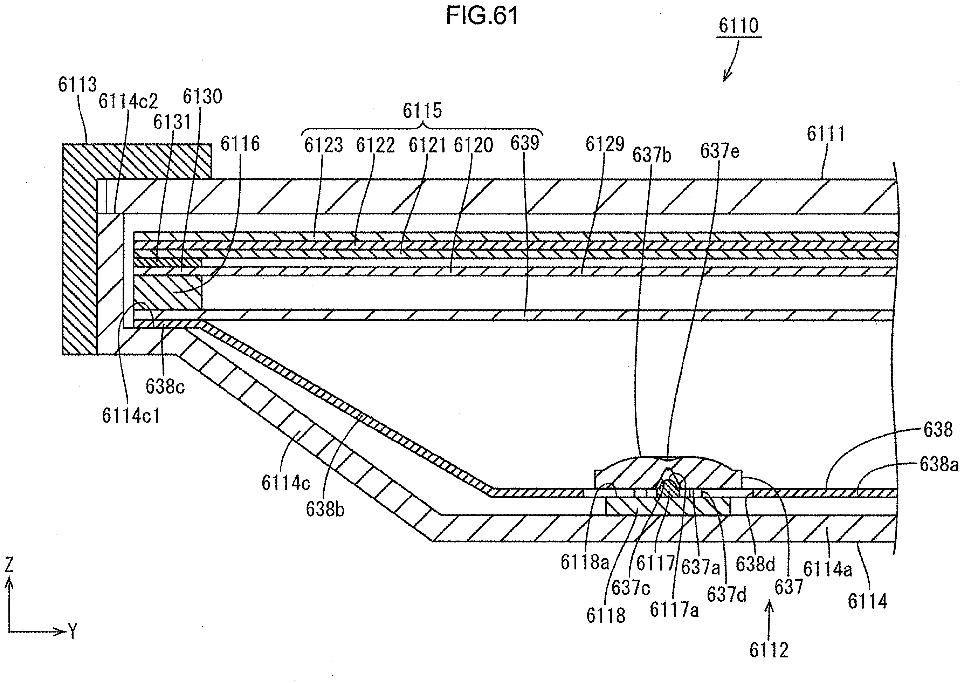

As illustrated in FIGS. 60 and 61, the diffuser lenses 637 include surfaces facing the rear side and opposed to the LED boards 6118 (the LEDs 6117) . The surfaces are referred to as light entering surfaces 637a through which the light rays from the LEDs 6117 enter. The diffuser lenses 637 include surfaces facing the front side and opposed to the optical members 6115. The surfaces are referred to as light exiting surfaces 637b (light emitting surfaces) through which the light rays exit. The light entering surfaces 637a are basically parallel to the plate surfaces of the LED boards 6118 (the X-axis direction and the Y-axis direction). The diffuser lenses 637 include light entering-side recesses 637c in areas overlapping the LEDs 6117 in the plan view, that is, the light entering surfaces 637a include sloped surfaces that are angled relative to optical axes of the LEDs 6117 (the Z-axis direction). Each light entering-side recess 637c has a cone shape with a V shape cross section. The light entering-side recesses 637c are formed substantially concentrically with the respective diffuser lenses 637. The light rays emitted by the LEDs 6117 entering the light entering-side recesses 637c are refracted at wide angles by the sloped surfaces and enter the diffuser lenses 637. Mounting legs 637d protrude from the light entering surfaces 637a. The mounting legs 637d are mounting structures for mounting the diffuser lenses 637 to the LED boards 6118. Each light exiting surface 637b is a spherical surface of a flattened sphere. According to the configuration, the light rays refracted and exiting from the diffuser lens 637 spread in wide angles. The diffuser lenses 637 include substantially cone shaped light exiting-side recesses 637e in areas of the light exiting surfaces 637b overlapping the LEDs 6117 in the plan view. With the light exiting-side recesses 637e, many light rays from the LEDs 6117 are refracted with wide angles and exit.

The reflection sheet 638 includes a white surface having high light reflectivity. As illustrated in FIGS. 56 to 59, the reflection sheet 638 has a size to cover a substantially entire area of the inner surface of the chassis 6114, that is, to collectively cover all the LED boards 6118 that are two-dimensionally arranged along the bottom 6114a. The reflection sheet 638 reflects the light rays inside the chassis 6114 toward the front (the light exiting side, the optical member 6115 side). The reflection sheet 638 has a cone-like overall shape. The reflection sheet 638 includes a bottom-side reflecting portion 638a, four projected reflecting portions 638b, and extended portions 638c (peripheral portions). The bottom-side reflecting portion 638a extends along the LED boards 6118 and the bottom 6114a. The bottom-side reflecting portion 638a has a size to collectively cover substantially entire areas of the LED boards 6118. The projected reflecting portions 638b project frontward from the outer edges of the bottom-side reflecting portion 638a. The projected reflecting portions 638b are angled to the bottom-side reflecting portion 638a. The extended portions 638c extend outward from the outer edges of the projected reflecting portions 638b. The extended portions 638c are placed on the first steps 6114c1.

As illustrated in FIGS. 57 to 59, the bottom-side reflecting portion 638a of the reflection sheet 638 is disposed over the front surfaces of the LED boards 6118, that is, the mounting surfaces 6118a of the LED boards 6118 on the front side. Because the bottom-side reflecting portion 638a extends parallel to the plate surfaces of the bottom 6114a of the chassis 6114 and the optical members 6115, a distance between the bottom-side reflecting portion 638a and the optical member 6115 in the Z-axis direction is substantially constant for the entire area in the plane. The bottom-side reflecting portion 638a includes insertion holes 638d (light source insertion holes) at positions overlapping the LEDs 6117 in the plan view, respectively. The insertion holes 638d are through holes through which the respective LEDs 6117 and the respective diffuser lenses 637 are inserted. The insertion holes 638d are arranged in the X-axis direction and the Y-axis direction in a matrix to correspond to the LEDs 6117 and the diffuser lenses 637. The bottom-side reflecting portion 638a is disposed to overlap the LEDs 6117 and the diffuser lenses 637 in the plan view and thus referred to as "an LED arranged area (a light source arranged area)" of the reflection sheet 638. The projected reflecting portions 638b linearly extend from bases of projection to distal ends. The projected reflecting portions 638b are angled to the plate surfaces of the bottom-side reflecting portion 638a and the optical member 6115. A distance between each projected reflecting portion 638b and the optical member 6115 in the Z-axis direction continuously and gradually decreases from the base of projection to the distal end. The distance is the maximum at the base of projection (about equal to the distance between the bottom-side reflecting portion 638a and the optical member 6115 in the Z-axis direction). The distance is the minimum at the distal end. The projected reflecting portions 638b are disposed not to overlap the LEDs 6117 in the plan view and referred to as "LED non-arranged areas (light source non-arranged areas)" of the reflection sheet 638.

As illustrated in FIGS. 60 and 61, a retroreflector 6131 in this embodiment is disposed outer than the outer edges of the projected reflecting portions 638b of the reflection sheet 638 such that the retroreflector 6131 does not overlap the projected reflecting portions 638b. Specifically, the retroreflector 6131 id disposed not to overlap a center portion 6129 of the wavelength converting sheet 6120 but to overlap the peripheral portion 6130 for the entire periphery on the front side. The retroreflector 6131 is disposed to overlap the extended portions 638c that are located outer than the projected reflecting portions 638b of the reflection sheet 638 in the plan view. According to the configuration, some of light rays around the peripheral portion 6130 of the wavelength converting sheet 6120 are retroreflected to the rear side by the retroreflector 6131. The retroreflected light rays are more likely to pass through the wavelength converting sheet 6120 again and more likely to be converted to light rays with other wavelengths. Even if light rays leak through a gap between the sidewall 6114c of the chassis 6114 and the extended portion 638c of the reflection sheet 638 or through a bap between the diffuser plate 639 and the extended portion 638c, the light rays exiting from the peripheral portion of the backlight unit 6112 are less likely to be in a color similar to the color of the light rays from the LEDs 6117, that is, less likely to be bluish. This configuration can reduce the color unevenness.

Some of the light rays that have passed through the wavelength converting sheet 6120 are not directly included in the emitting light from the backlight unit 6112. Such light rays may be retroreflected to the reflection sheet 638 and included in the emitting light from the backlight unit 6112. The light lays tend to be retroreflected for the larger number of times in the peripheral portion in which the projected reflecting portions 638b are disposed than in the center portion in which the bottom-side reflecting portion 638a of the reflection sheet 638 is disposed. The retroreflected light rays in the peripheral portion pass through the wavelength converting sheet 6120 for the larger number of times. Namely, the retroreflected light rays in the peripheral portion are more likely to be converted to the light rays with other wavelengths. The retroreflector 6131 is disposed outer than the outer edges of the projected reflecting portions 638b not to overlap the projected reflecting portions 638b. Therefore, the light rays reflected by the projected reflecting portions 638b are less likely to be retroreflected for the excessive number of times. Therefore, the emitting light rays from the backlight unit 6112 around the projected reflecting portions 638b are less likely to be in a color similar to the color that makes the complementary color pair with the color of light rays emitted by the LEDs 6117 (a color of light rays converted to light rays with other wavelengths by the wavelength converting sheet 6120), that is, less likely to be yellowish. This configuration is preferable for reducing the color unevenness. Furthermore, the retroreflector 6131 is disposed to extend for the entire periphery of the peripheral portion 6130 of the wavelength converting sheet 6120. Even if a gap is created between the components of the backlight unit 6112, regardless of the location of the gap between the components of the backlight unit 612 on the periphery, the color unevenness resulting from the leak of light through the gap can be properly reduced.

This embodiment has the configuration described above. Next, functions of this embodiment will be described. When the liquid crystal display device 6110 having the configuration described above is turned on, the driving of the liquid crystal panel 6111 is controlled by the panel controller circuit of the controller board that is not illustrated. Furthermore, driving power is supplied from the LED driver circuit of the LED driver circuit board that is not illustrated to the LEDs 6117 on the LED boards 6118 and the driving of the LEDs 6117 is controlled. As illustrated in FIGS. 58 and 59, the light rays from the LEDs 6117 that are turned on are directly applied to the optical members 6115 or reflected by the reflection sheet 638 and indirectly applied to the optical members 6115. After the predefined optical effects are exerted by the optical members 6115, the light rays are applied to the liquid crystal panel 6111 and used for displaying an image in the display are of the liquid crystal panel 6111. Functions of the backlight unit 6112 will be described.

As illustrated in FIGS. 58 and 59, the diffusing effects are exerted on the blue light rays emitted by the LEDs 6117 by the diffuser plate 639 of the optical members 6115 and some of the blue light rays are converted to the green light rays and the red light rays by the wavelength converting sheet 6120. The green light rays and the red light rays (secondary light rays) obtained through the wavelength conversion and the blue light rays (primary light rays) from the LEDs 6117 form substantially white illumination light. The isotropic light collecting effects are exerted on the blue light rays from the LEDs 6117 and the green light rays and the red light rays obtained through the wavelength conversion with respect to the X-axis direction and the Y-axis direction by the micro lens sheet 6121. The selective light collecting effects (the anisotropic light collecting effects) are exerted on the light rays on which the isotropic light collecting effects are exerted by the prism sheet 6122 with respect to the Y-axis direction. Specific polarized light rays (p-wave) among the light rays that have exited from the prism sheet 6122 are selectively passed through the reflective type polarizing sheet 6123 and directed to the liquid crystal panel 6111. Specific polarized light rays (s-wave) other than the specific polarized light rays described above are selectively reflected to the rear side. The s-wave reflected by the reflective type polarizing sheet 6123, the light rays reflected to the rear side without the light collecting effects by the micro lens sheet 6121 or the prims sheet 6122, or the light rays reflected to the rear side by the diffuser sheet 628 are reflected again by the reflection sheet 638 to travel to the front side. According to the direct type backlight unit 6112, the light rays emitted by the LEDs 6117 exit from the backlight unit 6112 without passing through the light guide plate or other members used in the edge light type backlight unit. Therefore, high light use efficiency can be achieved.

The light rays emitted by the LEDs 6117 travel through the light exiting path described above are included in the emitting light from the backlight unit 6112. In the peripheral portion of the backlight unit 6112, a gap may be created between the components of the backlight unit 6112 and light rays may leak through the gap. Specifically, a gap may be created between the sidewall 6114c of the chassis 6114 and the extended portion 638c of the reflection sheet 638 or between the diffuser plate 639 and the extended portion 638c due to backlash between the components. If such a gap is created, the blue light rays that have not been converted by the wavelength converting sheet 6120 may leak. The peripheral portion of the backlight unit 6112 looks more bluish than the center portion, that is, the color unevenness may be observed. As illustrated in FIGS. 60 and 61, the retroreflector 6131 is disposed over the wavelength converting sheet 6120 in this embodiment to overlap the peripheral portion 6130 but not to overlap the center portion 6129. Therefore, some of the light rays around the peripheral portion 6130 are retroref lected to the rear side by the retroref lector 6131. The light rays that are retroreflected by the retroreflector 6131 include the leaking light rays and the blue light rays that are not the leaking light and not yet converted. The light rays that are retroreflected to the rear side by the retroreflector 6131 are more likely to pass through the wavelength converting sheet 6120 and thus more likely to be converted to light rays with other wavelengths. Therefore, even if the leaking of the light rays occurs, the exiting light rays from the peripheral portion of the backlight unit 6112 are less likely to be in the color similar to the color of the light rays emitted by the LEDs 6117, that is, less likely to be bluish. The color unevenness can be reduced.

The distance between each projected reflecting portion 638b of the reflection sheet 638 and the optical member 6115 is smaller than the distance between the bottom-side reflecting portion 638a and the optical member 6115. The light rays reflected by the projected reflecting portions 638b tend to be retroreflected for the larger number of times in comparison to the light rays reflected by the bottom-side reflecting portion 638a. Namely, the light rays reflected by the projected reflecting portions 638b tend to pass through the wavelength converting sheet 6120 for the larger number of times. The retroreflector 6131 is disposed to overlap outer than the outer edges of the projected reflecting portions 638b (to overlap the extended portions 638c) of the reflection sheet 638. Therefore, the light rays reflected by the projected reflection portions 638b are less likely to be excessively retroreflected. The exiting light rays around the projected reflecting portions 638b of the backlight unit 6112 are less likely to be yellowish. This configuration is preferable for reducing the color unevenness.

In this embodiment, as described above, the chassis 6114 includes the bottom 6114a disposed on the side opposite from the light emitting surface 6117a sides of the LEDs 6117. This embodiment includes the reflection sheet 638 (the reflection member) configured to reflect the light rays from the LEDs 6117. The reflection sheet 638 includes at least the bottom-side reflecting portion 638a and the projected reflecting portions 638b. The bottom-side reflecting portion 638a is disposed along the bottom 6114a. The projected reflecting portions 638b project from the bottom-side reflecting portion 638a to the light exiting side. The wavelength converting sheet 6120 is disposed opposite and away from the light emitting surfaces 6117a of the LEDs 6117 on the light exiting side. The light rays emitted by the LEDs 6117 that are held in the chassis 6114 are reflected by the bottom-side reflecting portion 638a and the projected reflecting portions 638b of the reflection sheet 638. The light rays are converted to light rays with other wavelengths by the phosphors contained in the wavelength converting sheet 6120 that is disposed opposite and away from the light emitting surfaces 6117a of the LEDs 6117 on the light exiting side and exit the wavelength converting sheet 6120. According to the direct type backlight unit 6112, the light rays from the LEDs 6117 exit without passing through the light guide plate or other components used in the edge light type backlight unit. Therefore, the high light use efficiency can be achieved.

The retroreflector 631 is disposed outer than the outer edges of the projected reflecting portions 638b not to overlap the projected reflecting portions 638b. Some of the light rays that have passed through the wavelength converting sheet 6120 may not be directly included in the exiting light from the backlight unit 6112. Some of the light rays may be retroreflected and returned to the reflection sheet 638 and then included in the exiting light from the backlight unit 6112. The light rays in the peripheral portion in which the projected reflecting portions 638b are disposed tend to be retroreflected for the larger number of times in comparison to the center portion in which the bottom-side reflecting portion 638a of the reflection sheet 638 is disposed. Therefore, the light rays in the peripheral portion pass through the wavelength converting sheet 6120 for the larger number of times. Namely, the light rays in the peripheral portion are more likely to be converted to light rays with other wavelengths. The retroreflector 631 is disposed outer than the outer edges of the projected reflecting portions 638b not to overlap the projected reflecting portions 638b. Therefore, the light rays reflected by the projected reflecting portions 638b are less likely to be excessively retroreflected.

### <Twenty-seventh Embodiment>

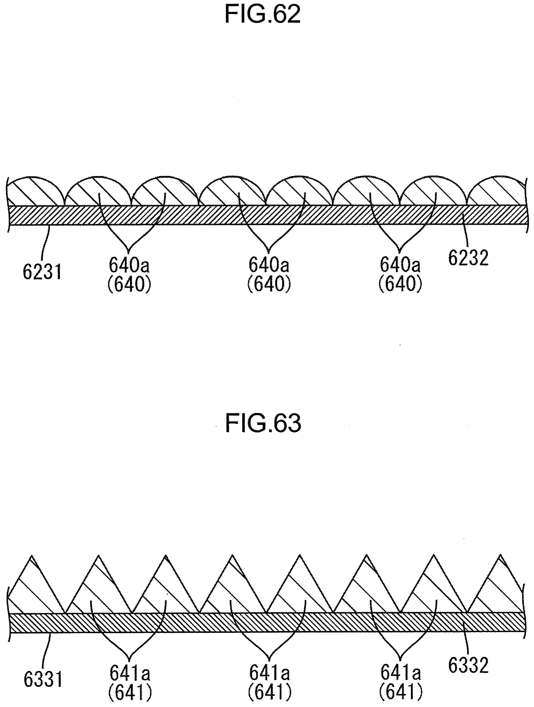

A twenty-seventh embodiment of the present invention will be described with reference to FIG. 62. The twenty-seventh embodiment includes a retroreflector having a configuration different from the twenty-fifth embodiment described above. Configurations, functions, and effects similar to those of the twenty-fifth embodiment will not be described.

As illustrated in FIG. 62, a retroreflector 6231 in this embodiment includes a micro lens portion 640 (a refractive optical component) configured to exert refractive effects on light rays. Specifically, the retroreflector 6231 includes a base portion 6232 that is a sheet (a film) and the micro lens portion 640 on the front plate surface of the base portion 6232. The micro lens portion 640 includes unit micro lenses 640a that arranged in a matrix each line along the X-axis direction and each line along the Y-axis direction include a large number of the unit micro lenses 640a. Each unit micro lens 640a has a round shape in a plan view. Each unit micro lens 640a is a convex lens having a hemisphere overall shape. The retroreflector 6231 has a configuration similar to that of a micro lens sheet, which is one kind of general optical members (e.g., the micro lens sheet 621 in the twenty-fifth embodiment). The retroreflector 6231 can be produced using such a general optical member and thus it is preferable for reducing the production cost.

The micro lens portion 640 of the retroreflector 6231 is configured to refract light rays around an peripheral portion of a wavelength converting sheet, which is not illustrated, and to retroreflect some of the light rays to the rear side. According to the configuration, color unevenness created by light rays leaking through a gap between components of the backlight unit is properly reduced. The micro lens portion 640 retroreflect some of the light rays to the rear side without absorbing the light rays. Therefore, high light use efficiency can be achieved. Because the micro lens portion 640 is less likely to absorb the light rays, chronological deterioration of performance due to the absorption of the light rays is less likely to occur. This configuration is preferable for enhancing the longevity of the product.

In this embodiment, as described above, the retroreflector 6231 includes the micro lens portion 640 (the refractive optical component) configured to refract light rays. The light rays around the peripheral portion of the wavelength converting sheet are refracted by the micro lens portion 640 of the retroreflector 6231 to retroreflect some of the light rays to the side opposite from the light exiting side. According to the configuration, the color unevenness due to the leak of light rays through the gap between the components of the backlight unit can be properly reduced. Because the micro lens portion 640 retroreflect some of the light rays that are refracted by the micro lens portion 640 to the side opposite from the light exiting side without absorbing the light rays, high light use efficiency can be achieved. Furthermore, the chronological deterioration of performance is less likely to occur.

### <Twenty-eighth Embodiment>

A twenty-eighth embodiment of the present invention will be described with reference to FIG. 63. The twenty-eighth embodiment includes a retroreflector having a configuration different from the twenty-fifth embodiment described above. Configurations, functions, and effects similar to those of the twenty-fifth embodiment will not be described.

As illustrated in FIG. 63, a retroreflector 6331 in this embodiment includes a prism portion 641 (a refractive optical component) configured to exert refractive effects on light rays. Specifically, the retroreflector 6331 includes a base 6332 that is a sheet (a film) and the prism portion 641 formed on the front surface of the base 6332. The prism portion 641 includes unit prisms 641a that extend along the X-axis direction or the Y-axis direction. A large number of the unit prisms 641a are arranged along the Y-axis direction or the X-axis direction. Each unit prism 641a has a rail shape (a linear shape) parallel to the X-axis direction or the Y-axis direction in the plan view. Each unit prims 641a has an isosceles triangular cross-section along the Y-axis direction or the X-axis direction. The retroreflector 6331 is one kind of general optical members (e.g., the prism sheet 622 in the twenty-fifth embodiment). The retroreflector 6331 can be produced using such a general optical member and thus it is preferable for reducing the production cost.

The prism portion 641 of the retroreflector 6331 is configured to refract light rays around an peripheral portion of a wavelength converting sheet, which is not illustrated, and to retroreflect some of the light rays to the rear side. According to the configuration, color unevenness created by light rays leaking through a gap between components of the backlight unit is properly reduced. The prism portion 641 retroreflect some of the light rays to the rear side without absorbing the light rays. Therefore, high light use efficiency can be achieved. Because the prism portion 641 is less likely to absorb the light rays, chronological deterioration of performance due to the absorption of the light rays is less likely to occur. This configuration is preferable for enhancing the longevity of the product.

### <Twenty-ninth Embodiment>

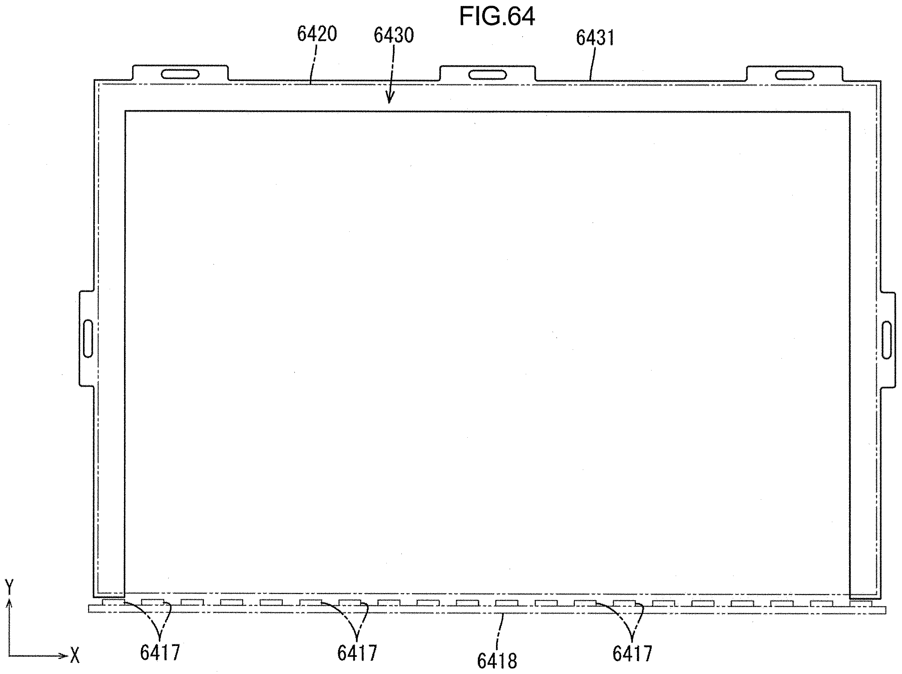

A twenty-ninth embodiment of the present invention will be described with reference to FIG. 64. The twenty-ninth embodiment includes a retroreflector having a configuration different from the twenty-fifth embodiment described above. Configurations, functions, and effects similar to those of the twenty-fifth embodiment will not be described.

As illustrated in FIG. 64, a retroreflector 6431 in this embodiment is disposed to overlap sections of an peripheral portion 6430 of a wavelength converting sheet 6420 excluding a long edge section on the LED 6417 side or a LED board 6418 side. Namely, the retroreflector 6431 is disposed to overlap a pair of short edge sections and a long edge section on a side opposite from the LED 6417 side or the LED board 6418 side. The long edge section of the peripheral portion 6430 of the wavelength converting sheet 6420 on the LED 6417 side or the LED board 6418 side is parallel to a light entering end surface of a light guide plate that is not illustrated. Other sections of the peripheral portion 6430 are parallel to non-light-entering end surfaces of the light guide plate. The retroreflector 6431 is disposed to overlap the sections of the peripheral portion 6430 of the wavelength converting sheet 6420 parallel to the non-light-entering end surfaces of the light guide plate. According to the configuration, some of the light rays around the sections of the peripheral portion 6430 of the wavelength converting sheet 6420 parallel to the non-light-entering end surfaces of the light guide plate are retroreflected to the rear side by the retroreflector 6431. Even if the light rays transmitting through the light guide plate exit the light guide plate through the non-light-entering end surfaces leak through a gap between components of the backlight unit, color unevenness is properly reduced. In FIG. 64, the LEDs 6417, an LED board 6418, and the wavelength converting sheet 6420 are depicted with two-dot chain lines.

### <Other Embodiments>

The present invention is not limited to the above embodiments described in the above sections and the drawings. For example, the following embodiments may be included in technical scopes of the technology.
(1) In each of the first, the third, and the fifth embodiments, the complementary color members 22 are bonded to the frame 16 with the fixing member such as a double-sided adhesive tape. In each of the second, the fourth, and the sixth embodiments, the complementary color members 23 are bonded to the reflection sheet 20A with the fixing member such as a double-sided adhesive tape. However, the present invention is not limited to those. For example, a paint in a predefined color (a color that makes a complementary color pair with blue that is the color of the primary light rays from the LEDs 17 (the reference color)) may be directly applied to the frame portion 161 of the frame 16 or the end of the reflection sheet 20A to form the complementary color portion 22 or 23.
(2) In each of the first to the sixth embodiments, each complementary color member has the continuous longitudinal shape. The present invention is not limited to that. For example, complementary color members may be provided only in front of the LEDs 17.
(3) In each of the first to the sixth embodiments, each complementary color member is formed by applying a paint to the surface of the base. However, a complementary color member including a base and pigments contained in the base with a predefined concentration may be used. The base may be a transparent base having light transmissivity (e.g., cellophane). The pigments may have properties for selectively absorbing light in a specific wavelength range.
(4) In each of the above embodiments, the LEDs configured to emit light rays in a single color of blue are used as the light source. However, LEDs configured to emit light in a color other than blue may be used as a light source. In such a case, the color of the complementary color members may be altered according to the color of the light from the LEDs. For example, LEDs configured to emit magenta light and complementary color portions including green surfaces may be used. In this case, green phosphors may be used for phosphors contained in a phosphor sheet (a wavelength converting member) so that a lighting unit emits white light.
(5) Other than the above (4), LEDs configured to emit violet light and complementary color members including chartreuse surfaces may be used. In this case, yellow phosphors and green phosphors with a predefined ratio may be used for phosphors contained in a phosphor sheet (a wavelength converting member) so that a lighting unit emits white light.
(6) Other than the above (4) or (5), LEDs configured to emit cyan light and complementary color members including red surfaces may be used. In this case, red phosphors may be used for phosphors contained in a phosphor sheet (a wavelength converting member) so that a lighting unit emits white light.
(7) In each of the first to the sixth embodiments, the quantum dot phosphors are contained in the phosphor sheet or the phosphor tube (a wavelength converting member). However, other type of phosphors may be contained in the phosphor sheet or the phosphor tube (the wavelength converting member). For example, sulfide phosphors may be contained in the optical sheet or the phosphor tube (the wavelength converting member). Specifically, SrGa₂S₄:Eu²⁺ may be used for the green phosphors and (Ca, Sr, Ba) S:Eu²⁺ may be used for the red phosphors.
(8) Other than the above (7), (Ca, Sr, Ba)₃SiO₄:Eu²⁺, β-SiAlON: Eu²⁺, or Ca₃Sc₂Si₃O₁₂:Ce³⁺ may be used for the green phosphors contained in the phosphor sheet or the phosphor tube (the wavelength converting member). (Ca, Sr, Ba)₂SiO₅N₈:Eu²⁺ or CaAlSiN₃: Eu²⁺ may be used for the red phosphors contained in the phosphor sheet or the phosphor tube (the wavelength converting member). (Y, Gd)₃(Al, Ga)₅O₁₂:Ce³⁺ (so-called YAG:Ce³⁺), α-SiAlON: Eu²⁺, or (Ca, Sr, Br)₃SiO₄:Eu²⁺ may be used for the yellow phosphors contained in the phosphor sheet or the phosphor tube (the wavelength converting member). Other than the above, a complex fluoride fluorescent material (e.g., manganese-activated potassium fluorosilicate (K₂TiF₆)) may be used for the phosphors contained in the phosphor sheet or the phosphor tube (the wavelength converting member).
(9) Other than the above (7) and (8), organic phosphors may be used for the phosphors contained in the phosphor sheet or the phosphor tube (the wavelength converting member). The organic phosphors may be low molecular organic phosphors including triazole or oxadiazole as a basic skeleton.
(10) Other than the above (7), (8), and (9), phosphors configured to convert wavelengths through energy transfer via dressed photons (near-field light) may be used for the phosphors contained in the phosphor sheet or the phosphor tube (the wavelength converting member). Preferable phosphors of this kind may be phosphors including zinc oxide quantum dots (ZnO-QD) with diameters from 3 nm to 5 nm (preferably about 4 nm) and DCM pigments dispersed in the zinc oxide quantum dots.
(11) In each of the seventh to the eighteenth embodiments, the end surface wavelength converting sheet (a wavelength converting member) and the end surface reflection sheet have the lengths to extend for the total length of the sections of the peripheral surfaces of the light guide plate. The end surface wavelength converting sheet (the wavelength converting member) and the end surface reflection sheet may have lengths smaller than the total length of the sections of the peripheral surfaces of the light guide plate. Namely, the end surface wavelength converting sheet (the wavelength converting member) and the end surface reflection sheet may partially overlap the sections of the peripheral surfaces of the light guide plate in the length direction. In such a case, it is preferable that the end surface wavelength converting sheet (the wavelength converting member) and the end surface reflection sheet overlap four corners of the peripheral surfaces of the light guide plate.
(12) In each of the seventh to the eighteenth embodiments, the end surface wavelength converting sheet (the wavelength converting member) and the end surface reflection sheet have the widths to cover the sections of the peripheral surfaces of the light guide plate for the entire heights of the sections. However, the end surface wavelength converting sheet (the wavelength converting member) and the end surface reflection sheet may have widths smaller than the heights of the sections of the peripheral surfaces of the light guide plate. Namely, the end surface wavelength converting sheet (the wavelength converting member) and the end surface reflection sheet may partially overlap the sections of the peripheral surfaces of the light guide plate with respect to the height direction of the sections.
(13) In each of the seventh to the eighteenth embodiments, the end surface reflection sheet is provided separately from the chassis. However, the end surface reflection sheet may be omitted and at least the sidewall of the chassis may be colored in white having high light reflectivity to reflect the light rays that have passed through the end surface wavelength converting sheet. Namely, the end surface reflection sheet can be omitted by arranging the sidewall of the chassis having the light reflectivity to overlap the outside of the end surface wavelength converting sheet (on the side opposite from the non-light-entering end surface side). In this case, it is preferable to set the sidewall having the light reflectivity in contact with the end surface wavelength converting sheet.
(14) Examples of the light guide plate-side adhesive layer and the end surface reflection sheet-side adhesive layer in each of the seventh to the eighteenth embodiments include a transparent optical adhesive film such as an OCA, a substantially transparent adhesive, a substantially transparent light curing resin (including an ultraviolet curing resin), and a substantially transparent double-sided tape. Other than the above, an appropriate method may be used.
(15) In each of the seventh to the eighteenth embodiments, the plate surface wavelength converting sheet and the end surface wavelength converting sheet are prepared from the same base material. However, the plate surface wavelength converting sheet and the end surface wavelength converting sheet may be prepared from different base materials. In such a case, contents of phosphors, ratios of the phosphors, kinds of the phosphors, colors of light rays emitted by the phosphors (peak wavelengths and half width of each peak of emission spectrum) may be different between the plate surface wavelength converting sheet and the end surface wavelength converting sheet. As long as the color of the secondary light rays from the end surface wavelength converting sheet is similar to the color of the secondary light rays from the plate surface wavelength, a small difference in color is acceptable.
(16) In each of the ninth to the eleventh embodiments, the color of the secondary light rays obtained through the wavelength conversion by the end surface wavelength converting member can be slightly different from the color of the secondary light from the plate surface wavelength converting sheet as long as they are similar.
(17) In each of the ninth to the eleventh embodiments, the end surface wavelength converting member is applied to either one of the non-light-entering end surface of the light guide plate and the end surface reflection sheet. The end surface wavelength converting member may be applied to both the non-light-entering end surface of the light guide plate and the end surface reflection sheet.
(18) In the twelfth embodiment, the plate surface wavelength converting sheet and the end surface wavelength converting sheet are provided as a single component. However, any one of the plate surface wavelength converting sheet and the end surface wavelength converting sheet may be provided as a single component.
(19) In the thirteenth embodiment, the opposite end surface wavelength converting sheet is omitted and the end surface reflection sheet is disposed similarly to the first embodiment. However, the opposite end surface reflection sheet may be omitted.
(20) The configuration of the eighth embodiment may be combined with the configuration of any one of the ninth and the twelfth to the sixteenth embodiments. The configuration of the ninth embodiment may be combined with the configuration of any one of the twelfth to the sixteenth embodiments. The configuration of the tenth embodiment may be combined with the configuration of any one of the twelfth to the sixteenth embodiments. The configuration of the eleventh embodiment may be combined with the configuration of any one of the twelfth to the sixteenth embodiments. The configuration of the twelfth embodiment may be combined with the configuration of the fifteenth embodiment. The configuration of the thirteenth embodiment may be combined with the configuration of the fifteenth embodiment. The configuration of the fourteenth embodiment may be combined with the configuration of the fifteenth embodiment.
(21) In each of the seventh to the eighteenth embodiments, the LEDs configured to emit the light rays in a single color of blue are used as the light source. However LEDs configured to emit light rays in a color other than blue may be used as a light source. In such a case, the color of the phosphors contained in the plate surface wavelength converting sheet and the end surface wavelength converting sheet (the end surface wavelength converting members) may be altered according to the color of the light rays from the LEDs. For example, if LEDs configured to emit magenta light rays, green phosphors that exhibit light rays in green that makes a complementary color pair with magenta may be used for the phosphors contained in the plate surface wavelength converting sheet and the end surface wavelength converting sheet (the end surface wavelength converting sheets). According to the configuration the backlight emits white illumination light (exiting light).
(22) In each of the above embodiments, the plate surface wavelength converting sheet and the end surface wavelength converting sheet (the end surface wavelength converting members) contain the green phosphors and the red phosphors. However, the plate surface wavelength converting sheet and the end surface wavelength converting sheet (the end surface wavelength converting members) may contain yellow phosphors or contain the red phosphors and the green phosphors in addition to the yellow phosphors. Specifically, (Y, Gd)₃(Al, Ga)₅O₁₂:Ce³⁺ (so-called YAG:Ce³⁺), α-SiAlON: Eu²⁺, or (Ca, Sr, Br)₃SiO₄:Eu²⁺ may be used for the yellow phosphors contained in the end surface wavelength converting member in each of the third to the fifth embodiments.
(23) In each of the above embodiments (except for the ninth to the eleventh embodiments), the quantum dot phosphors used for the phosphors contained the plate surface wavelength converting sheet and the end surface wavelength converting sheet are the core-shell type phosphors including CdSe and ZnS. However, core type quantum dot phosphors each having a single internal composition may be used. For example, a material (CdSe, CdS, ZnS) prepared by combining Zn, Cd, Hg, or Pb that could be a divalent cation with O, S, Se, or Te that could be a dianion may be singly used. A material (indium phosphide (InP), gallium arsenide (GaAs)) prepared by combining Ga or In that could be a tervalent cation with P, As, or Sb that could be a tervalent anion or chalcopyrite type compounds (CuInSe2) may be singly used. Other than the core-shell type quantum dot phosphors and the core type quantum dot phosphors, alloy type quantum dot phosphors may be used. Furthermore, quantum dot phosphors that do not contain cadmium may be used.
(24) In each of the above embodiments (except for the ninth to the eleventh embodiments), the quantum dot phosphors used for the phosphors contained in the plate surface wavelength converting sheet and the end surface wavelength converting sheet are the core-shell type quantum dot phosphors including CdSe and ZnS. However, core-shell type quantum dot phosphors including a combination of other materials may be used.
(25) In each of the above embodiments, the plate surface wavelength converting sheet and the end surface wavelength converting sheet contain the quantum dot phosphors. However, the plate surface wavelength converting sheet and the end surface wavelength converting sheet may contain other type of phosphors. For example, sulfide phosphors may be used for the phosphors contained in the plate surface wavelength converting sheet and the end surface wavelength converting sheet. Specifically, SrGa₂S₄:Eu²⁺ may be used for the green phosphors and (Ca, Sr, Ba) S:Eu²⁺ may be used for the red phosphors.
(26) Other than the above (25), (Ca, Sr, Ba)₃SiO₄:Eu²⁺, β-SiAlON: Eu²⁺, or Ca₃Sc₂Si₃O₁₂:Ce³⁺ may be used for the green phosphors contained in the plate surface wavelength converting sheet and the end surface wavelength converting sheet. (Ca, Sr, Ba)₂SiO₅N₈:Eu²⁺ or CaAlSiN₃: Eu²⁺ may be used for the red phosphors contained in the plate surface wavelength converting sheet and the end surface wavelength converting sheet. (Y, Gd)₃(Al, Ga)₅O₁₂:Ce³⁺ (so-called YAG:Ce³⁺), α-SiAlON: Eu²⁺, or (Ca, Sr, Br)₃SiO₄:Eu²⁺ may be used for the yellow phosphors contained in the plate surface wavelength converting sheet and the end surface wavelength converting sheet. Other than the above, a complex fluoride fluorescent material (e.g., manganese-activated potassium fluorosilicate (K₂TiF₆)) may be used for the phosphors contained in the plate surface wavelength converting sheet and the end surface wavelength converting sheet.
(27) Other than the above (25) and (26), organic phosphors may be used for the phosphors contained in the plate surface wavelength converting sheet and the end surface wavelength converting sheet. The organic phosphors may be low molecular organic phosphors including triazole or oxadiazole as a basic skeleton.
(28) Other than the above (25), (26), and (27), phosphors configured to convert wavelengths through energy transfer via dressed photons (near-field light) may be used for the phosphors contained in the plate surface wavelength converting sheet and the end surface wavelength converting sheet. Preferable phosphors of this kind may be phosphors including zinc oxide quantum dots (ZnO-QD) with diameters from 3 nm to 5 nm (preferably about 4 nm) and DCM pigments dispersed in the zinc oxide quantum dots.
(29) In each of the nineteenth to the twenty-fourth embodiments, one of the long end surfaces among the end surfaces of the light guide plate is configured as the light entering surface. However, both long end surfaces may be configured as light entering surfaces or one or both of the short end surfaces may be configured as light entering surfaces.
(30) In each of the nineteenth to the twenty-fourth embodiments, the first complementary color members 523 and the second complementary color members 524 are separately used. However, the first complementary color members 523 and the second complementary color members 524 may be used in combination.
(31) In each of the nineteenth to the twenty-fourth embodiments, the first complementary color members 523 and the second complementary color members 524 may be positioned relative to the light guide plate 19 or the reflection sheet 20 by partially fixing with the fixing members such as the double-sided adhesive tapes to reduce displacement relative to the light guide plate 19.
(32) In each of the nineteenth to the twenty-fourth embodiments, the LEDs configured to emit light rays in a single color of blue are used as a light source that emits primary light rays. However, LEDs configured to emit light rays in a color other than blue may be used as a light source. For example, LEDs configured to emit magenta light rays as primary light rays may be used. In this case, green phosphors may be used for phosphors contained in the phosphor sheet (the wavelength converting member) and the complementary color member so that the lighting unit emits white light.
(33) In each of the nineteenth to the twenty-fourth embodiments, the quantum dot phosphors used for the phosphors contained in the phosphor sheet (the wavelength converting member) and the complementary color member can be core-shell type quantum dot phosphors or core type quantum dot phosphors each having a single internal composition.
(34) In each of the nineteenth to the twenty-fourth embodiments, the quantum dot phosphors are contained in the phosphor sheet (the wavelength converting member) and the complementary color member. In other embodiments, other types of phosphors may be contained in the phosphor sheets (the wavelength converting members) and the complementary color members. For example, sulfide phosphors may be used for the phosphors contained in the phosphor sheets (the wavelength converting members) and the complementary color members. Specifically, SrGa₂S₄:Eu²⁺ may be used for the green phosphors and (Ca, Sr, Ba) S:Eu²⁺ may be used for the red phosphors.
(35) Other than the above (34), (Ca, Sr, Ba)₃SiO₄:Eu²⁺, β-SiAlON: Eu²⁺, or Ca₃Sc₂Si₃O₁₂:Ce³⁺ may be used for the green phosphors contained in the phosphor sheets (the wavelength converting members) and the complementary color members. (Ca, Sr, Ba)₂SiO₅N₈:Eu²⁺ or CaAlSiN₃: Eu²⁺ may be used for the red phosphors contained in the phosphor sheets (the wavelength converting members) and the complementary color members. (Y, Gd)₃(Al, Ga)₅O₁₂:Ce³⁺ (so-called YAG:Ce³⁺), α-SiAlON: Eu²⁺, or (Ca, Sr, Br)₃SiO₄:Eu²⁺ may be used for the yellow phosphors contained in the phosphor sheets (the wavelength converting members) and the complementary color members. Other than the above, a complex fluoride fluorescent material (e.g., manganese-activated potassium fluorosilicate (K₂TiF₆)) may be used for the phosphors contained in the phosphor sheets (the wavelength converting members) and the complementary color members.
(36) Other than the above (34) and (35), organic phosphors may be used for the phosphors contained in the phosphor sheets (the wavelength converting members) and the complementary color members. The organic phosphors may be low molecular organic phosphors including triazole or oxadiazole as a basic skeleton.
(37) Other than the above (34), (35), and (36), phosphors configured to convert wavelengths through energy transfer via dressed photons (near-field light) may be used for the phosphors contained in the phosphor sheets (the wavelength converting members) and the complementary color members. Preferable phosphors of this kind may be phosphors including zinc oxide quantum dots (ZnO-QD) with diameters from 3 nm to 5 nm (preferably about 4 nm) and DCM pigments dispersed in the zinc oxide quantum dots.
(38) In each of the twenty-fifth to the twenty-ninth embodiments, the retroreflector includes the light scattering particles and the micro lens portion or the prism portion. The retroreflector may include a reflective type polarizer (a refractive optical component) for refracting and reflecting light rays. Such a reflective type polarizer has a configuration similar to that of the reflective type polarizing sheet in the twenty-fifth embodiment. The retroreflector can be produced using the reflective type polarizing sheet. This configuration is preferable for reducing the production cost. The retroreflector may have a configuration including a refractive optical component other than the reflective type polarizer.
(39) In each of the twenty-fifth to the twenty-ninth embodiments, the retroreflector is disposed to overlap the wavelength converting sheet on the front side. However, the retroref lector may be disposed to overlap the wavelength converting sheet on the rear side.
(40) In each of the twenty-fifth to the twenty-ninth embodiments, the retroreflector is disposed to directly on the wavelength converting sheet. However, the retroreflector may be disposed over the wavelength converting sheet via other optical members (such as the micro lens sheet, the prism sheet, the reflective type polarizing sheet, and the diffuser plate).
(41) In each of the twenty-fifth to the twenty-ninth embodiments, the retroreflector is disposed in the area across the inner edges of the frame in the edge-light type backlight unit. The dimensions of the portions of the retroreflector extending from the inner edges of the frame can be altered as appropriate. The retroreflector may be disposed such that the inner edges of the retroreflector may be flush with the inner edges of the frame. The retroreflector may be disposed such that the inner edges of the retroreflector are outer than the inner edges of the frame.
(42) The number, the arrangement, and the size in the plan view of the positioning structures for positioning the optical members and the retroreflector relative to the frame (the positioning portions, the first mating positioning portions, and the second mating positioning portions) may be altered from those of the twenty-fifth embodiment as appropriate.
(43) In the twenty-ninth embodiment, the retroreflector is disposed in the sections of the peripheral portion of the wavelength converting sheet parallel to the non-light-entering end surfaces of the light guide plate in the edge-light type backlight unit. However, retroreflectors may be disposed in the sections of the peripheral portion of the wavelength converting sheet parallel to a pair of the non-light-entering end surfaces of the light guide plate. Alternatively, a retroref lector may be disposed in the section of the peripheral portion of the wavelength converting sheet parallel to the non-light-entering opposite end surface of the light guide plate.
(44) In each of the twenty-fifth to the twenty-ninth embodiments, the LEDs include the blue LED components. However, LEDs including violet LED components configured to emit violet light rays that are visible light rays or ultraviolet LED components (near-ultraviolet LED components) configured to emit ultraviolet rays (e.g., near-ultraviolet rays) may be used instead of the blue LED components. It is preferable that a wavelength converting sheet used with the LEDs including the violet LED components or the ultraviolet LED components contains red phosphors, green phosphors, and blue phosphors. The wavelength converting sheet used with the LEDs including the violet LED components or the ultraviolet LED components may contain one or two of the red phosphors, the green phosphors, and the blue phosphors and the sealing members of the LEDs may contain the phosphors that are not contained in the wavelength converting sheet. The colors of the phosphors may be altered as appropriate.
(45) In each of the twenty-fifth to the twenty-ninth embodiments, the LEDs include the blue LED components and the wavelength converting sheet includes the green phosphors and the red phosphors. However, the LEDs may include red LED components configured to emit red light rays instead of the blue LED components to emit magenta light rays. A wavelength converting sheet used with the LEDs may include green phosphors. Instead of the red LED components, the sealing member of the LEDs may contain red phosphors configured to emit red light rays when excited by blue light rays, which are exciting light rays.
(46) Other than the above (45), the LEDs may include green LED components configured to emit green light rays in addition to the blue LED component to emit cyan light rays. A wavelength converting sheet used with the LEDs may include red phosphors. Instead of the green LED components, the sealing member of the LEDs may contain green phosphors configured to emit green light rays when exited by the blue light rays, which are exciting light rays.
(47) The configuration of the twenty-sixth embodiment may be combined with any one of the configurations of the twenty-seventh to the twenty-ninth embodiments. The configuration of the twenty-seventh embodiment may be combined with the configuration of the twenty-ninth embodiment. The configuration of the twenty-eighth embodiment may be combined with the configuration of the twenty-ninth embodiment.
(48) In each of the twenty-fifth to the twenty-ninth embodiments, the wavelength converting sheet contains the green phosphors and the red phosphors. However a wavelength converting sheet containing only yellow phosphors or a wavelength converting sheet containing red phosphors and green phosphors in addition to the yellow phosphors may be used.
(49) In each of the twenty-fifth to the twenty-ninth embodiments, the quantum dot phosphors are used for the phosphors contained in the wavelength converting sheet are the core-shell type quantum dot phosphors including CdSe and ZnS. However, core type quantum dot phosphors each having a single internal composition may be used. For example, a material (CdSe, CdS, ZnS) prepared by combining Zn, Cd, Hg, or Pb that could be a divalent cation with O, S, Se, or Te that could be a dianion may be singly used. A material (indium phosphide (InP), gallium arsenide (GaAs)) prepared by combining Ga or In that could be a tervalent cation with P, As, or Sb that could be a tervalent anion or chalcopyrite type compounds (CuInSe2) may be singly used. Other than the core-shell type quantum dot phosphors and the core type quantum dot phosphors, alloy type quantum dot phosphors may be used. Furthermore, quantum dot phosphors that do not contain cadmium may be used.
(50) In each of the twenty-fifth to the twenty-ninth embodiments, the quantum dot phosphors used for the phosphors contained in the wavelength converting sheet are the core-shell type quantum dot phosphors including CdSe and ZnS. However, core-shell type quantum dot phosphors including a combination of other materials may be used. Furthermore, quantum dot phosphors that do not contain cadmium (Cd) may be used.
(51) In each of the twenty-fifth to the twenty-ninth embodiments, the quantum dot phosphors are contained in the wavelength converting sheet. Other types of phosphors may be contained in the wavelength converting sheet. For example, sulfide phosphors may be used for the phosphors contained in the wavelength converting sheet. Specifically, SrGa₂S₄:Eu²⁺ may be used for the green phosphors and (Ca, Sr, Ba) S:Eu²⁺ may be used for the red phosphors.
(52) Other than the above (51), (Ca, Sr, Ba)₃SiO₄:Eu²⁺, β-SiAlON: Eu²⁺, or Ca₃Sc₂Si₃O₁₂:Ce³⁺ may be used for the green phosphors contained in the wavelength converting sheet. (Ca, Sr, Ba)₂SiO₅N₈:Eu²⁺, CaAlSiN₃: Eu²⁺, or a complex fluoride fluorescent material (e.g., manganese-activated potassium fluorosilicate (K₂TiF₆)) may be used for the red phosphors contained in the wavelength converting sheet. (Y, Gd)₃(Al, Ga)₅O₁₂:Ce³⁺ (so-called YAG:Ce³⁺), α-SiAlON: Eu²⁺, or (Ca, Sr, Br)₃SiO₄:Eu²⁺ may be used for the yellow phosphors contained in the wavelength converting sheet.
(53) Other than the above (51) and (52), organic phosphors may be used for the phosphors contained in the wavelength converting sheet. The organic phosphors may be low molecular organic phosphors including triazole or oxadiazole as a basic skeleton.
(54) Other than the above (51), (52), and (53), phosphors configured to convert wavelengths through energy transfer via dressed photons (near-field light) may be used for the phosphors contained in the wavelength converting sheet. Preferable phosphors of this kind may be phosphors including zinc oxide quantum dots (ZnO-QD) with diameters from 3 nm to 5 nm (preferably about 4 nm) and DCM pigments dispersed in the zinc oxide quantum dots.
(55) In each of the above embodiments, the emission spectrum of the LEDs (peak wavelengths, half width of each peak) and the emission spectrum of the phosphors contained in the phosphor layer (peak wavelengths, half width of each peak) may be altered as appropriate.
(56) In each of the above embodiments, InGaN is used for the material of the LED components in the LEDs. However, GaN, AlGaN, GaF, ZnSe, ZnO, or AlGaInP may be used for the material of the LED components.
(57) In each of the above embodiments, the liquid crystal panel and the chassis are in the upright position with the short-side directions corresponding with the vertical direction. However, the liquid crystal panel and the chassis may be in the upright portion with the long-side directions corresponding with the vertical direction.
(58) In each of the above embodiments, the TFTs are used for the switching components of the liquid crystal display device. However, the present invention can be applied to a liquid crystal display device including switching components other than the TFTs (e.g., thin film diodes (TFD)). Furthermore, the present invention can be applied to a black-and-white liquid crystal display other than the color liquid crystal display.
(59) In each of the above embodiments, the transmissive type liquid crystal display device is provided. However, the present invention can be applied to a reflective type liquid crystal display device or a semitransmissive type liquid crystal display device.
(60) In each of the above embodiments, the liquid crystal display device including the liquid crystal panel as a display panel is provided. However, the present invention can be applied to display devices including other types of display panels.
(61) In each of the above embodiments, the television device including the tuner is provided is provided. However, the present invention can be applied to a display device without a tuner. Specifically, the present invention can be applied to a liquid crystal display panel used in an digital signage or an electronic blackboard.

### Explanation of Symbols

10: Liquid crystal display device (display device)
12: Lighting unit (backlight unit)
13: Bezel
14: Chassis
15: Optical member
150: Phosphor sheet (wavelength converting member)
16: Frame
17: LED (light source)
18: LED board
19: Light guide plate
19a: Light exiting surface
19b: Back surface (opposite surface)
19c: Light entering surface
19d: Opposite-side light source non-opposed surface
20: Reflection sheet
21: Elastic member
22, 122, 222, 23, 123, 223: complementary color member
50: Phosphor tube (wavelength converting member)
60: Holder
S1: Space
419a: Light exiting plate surface
419b: Light entering end surface
419d: Non-light-entering end surface
419d1: Non-light-entering opposite end surface
419d2: Non-light-entering lateral end surface
420: Plate surface wavelength converting sheet (plate surface wavelength converting member)
425: Plate surface reflection sheet (plate surface reflection member)
427: End surface wavelength converting sheet (end surface wavelength converting member)
428: End surface reflection sheet (end surface reflection member)
431: End surface wavelength converting member
522: Light reflecting and scattering pattern
523: First complementary color member
524: Second complementary color member
629: Center portion
630: Peripheral portion
631: Retroreflector
633: Light scattering particle
634: Positioning portion
635: First mating positioning portion
636: First mating positioning portion

## Claims

1. A lighting device comprising:
a light source configured to emit primary light rays in a predefined wavelength range;
a light guide plate comprising:
a light entering surface through which the primary light rays from the light source enter;
a light exiting surface through which the primary light rays emitted by the light source and entering through the light entering surface exit; and
an opposite surface on a side opposite from the light exiting surface;
a wavelength converting member containing phosphors configured to emit secondary light rays in a wavelength range different from the wavelength range of the primary light rays when excited by the primary light rays, the wavelength converting member being configured to pass some of the primary light rays; and
a complementary color member disposed to cover a space between the light source and a light entering end of the light guide plate including the light entering surface at least from a light exiting surface side or the light entering end at least from an opposite surface side, the complementary color member exhibiting a color that makes a complementary color pair with a reference color exhibited by the primary light rays.

2. The lighting device according to claim 1, further comprising a frame held against a peripheral portion of the light guide plate including the light entering end from the light exiting surface side to cover the light source and the light entering end from the light entering surface side, wherein
the complementary color portion is disposed on a surface of the frame facing the light entering surface.

3. The lighting device according to claim 1 or 2, wherein the complementary color member is formed across the space between the light source and the light entering end.

4. The lighting device according to any one of claims 1 to 3, further comprising a reflection member disposed to cover the opposite surface and configured to reflect light rays including the primary light rays, wherein
the complementary color member is disposed at least on an end of the reflection member on a light source side.

5. The lighting device according to claim 4, wherein
the reflection member comprises a reflection body and a reflection extended portion,
the reflection body overlaps the opposite surface,
the reflection extended portion extends from the reflection body to the light source side and projects outer than the opposite surface, and
the complementary color member is disposed over an entire area of the reflection extended portion and an end of the reflection body on the light source side.

6. The lighting device according to any one of claims 1 to 5, wherein
the light guide plate includes a light source non-opposed surface that is not opposed to the light source,
the lighting device further comprises an opposed member that is opposed to the light source non-opposed surface, and
the lighting device further comprises a second complementary color member disposed to cover a second space formed between the opposed member and a light source non-opposed end of the light guide plate including the light source non-opposed surface at least from the light exiting surface side or to cover the light source non-opposed end at least from the opposite surface side, and
the second complementary color member exhibits a color that makes a complementary color pair with a reference color that is exhibited by the primary light rays.

7. The lighting device according to claim 6, wherein the light source non-opposed surface includes an opposite-side light source non-opposed surface on a side opposite from the light entering surface.

8. The lighting device according to any one of claims 1 to 7, wherein
the primary light rays from the light source are blue light rays,
the wavelength converting member contains at least one of green phosphors, red phosphors, and yellow phosphors,
the green phosphors are configured to emit green light rays as the secondary light rays when excited by the blue light rays, which are the primary light rays,
the red phosphors are configured to emit red light rays as the secondary light rays when excited by the blue light rays, which are the primary light rays,
the yellow phosphors are configured to emit yellow light rays as the secondary light rays when excite by the blue light rays, which are the primary light rays, and
the complementary color member exhibits yellow.

9. A lighting device comprising:
a light source;
a light guide plate comprising:
a light entering end surface through which light rays from the light source enter, the light entering end surface being at least one of peripheral surfaces of the light guide plate;
a non-light-entering end surface through which light rays from the light source do not directly enter, the non-light-entering end surface being one of the peripheral surfaces excluding the light entering end surface; and
a light exiting plate surface through which the light rays exit, the light exiting surface being one of the plate surfaces;
a plate surface wavelength converting member overlapping the light exiting plate surface of the light guide plate and containing phosphors configured to convert the light rays from the light source to light rays with other wavelengths;
an end surface wavelength converting member overlapping at least a portion of the non-light-entering end surface of the light guide plate and containing phosphors configured to convert the light rays from the light source to light rays with other wavelengths; and
an end surface reflection member disposed on a side opposite from a non-light-entering end surface side relative to the end surface wavelength converting member to overlap the end surface wavelength converting member and configured to reflect light rays that have passed through the end surface wavelength converting member.

10. The lighting device according to claim 9, wherein
the light guide plate includes a non-light-entering lateral end surface that is one of the peripheral surfaces adjacent to the light entering end surface,
the end surface wavelength converting member overlaps at least the non-light-entering lateral end surface, and
the end surface reflection member overlaps the end surface wavelength converting member on a side opposite from a non-light-entering lateral end surface side.

11. The lighting device according to claim 9 or 10, wherein
the light guide plate includes a non-light-entering opposite end surface that is one of the peripheral surfaces on a side opposite from the light entering end surface,
the end surface wavelength converting member overlaps at least the non-light-entering opposite end surface, and
the end surface reflection member overlap the end surface wavelength converting member on the side opposite from the non-light-entering end surface side.

12. The lighting device according to any one of claims 9 to 11, wherein
the end surface wavelength converting member covers an entire area of the non-light-entering end surface of the light guide plate, and
the end surface reflection member is disposed on a side opposite from the non-light-entering end surface side relative to an entire area of the end surface wavelength converting member to cover the entire area of the end surface wavelength converting member.

13. The lighting device according to any one of claims 9 to 12, wherein the plate surface wavelength converting member and the end surface wavelength converting member contain quantum dot phosphors as the phosphors.

14. A lighting device comprising:
a light source configured to emit primary light rays in a predefined wavelength range;
a light guide plate comprising:
a light entering surface opposed to the light source and through which the primary light rays from the light source enter;
a light exiting surface through which the primary light rays from the light source and entering through the light entering surface exit; and
an opposite surface on a side opposite from the light exiting surface;
a reflection member disposed to cover the opposite surface and configured to reflect light rays;
a wavelength converting member containing phosphors configured to emit secondary light rays in a wavelength range different from the wavelength range of the primary light rays when exited by the primary light rays, the wavelength converting member being disposed to cover the light exiting surface and configured to pass some of the primary light rays and to emit planar light; and
a first complementary color member disposed between the opposite surface and the reflection member to cover an end of the light guide plate, the first complementary color member exhibiting a color that makes a complementary color pair with a reference color exhibited by the primary color rays.

15. The lighting device according to claim 14, wherein the first complementary color member is disposed on a light source non-opposed end that is one of ends of the light guide plate other than a light entering end of the light guide plate including the light entering surface.

16. The lighting device according to claim 15, wherein the light source non-opposed end includes a light source non-opposed adjacent end including an adjacent end surface that is adjacent to the light entering surface.

17. The lighting device according to any one of claims 14 to 16, wherein
the primary light rays from the light source are blue light rays,
the wavelength converting member contain at least green phosphors and red phosphors as the phosphors,
the green phosphors are configured to emit green light rays as the secondary light rays when excited by the blue light rays that are the primary light rays,
the red phosphors are configured to emit red light rays as the secondary light rays when excited by the blue light rays that are the primary light rays, and
the first complementary color member exhibits yellow.

18. A lighting device comprising:
a light source configured to emit primary light rays in a predefined wavelength range;
a light guide plate comprising:
a light entering surface opposed to the light source and through which the primary light rays from the light source enter;
a light exiting surface through which the primary light rays entering through the light entering surface exit; and
an opposite surface on a side opposite from the light exiting surface;
a wavelength converting member containing phosphors configured to emit secondary light rays in a wavelength range different from the wavelength range of the primary light rays when exited by the primary light rays, the wavelength converting member being disposed to cover the light exiting surface and configured to pass some of the primary light rays and to emit planar light; and
a second complementary color member disposed between the opposite surface and the reflection member to cover an end of the light guide plate, the second complementary color member exhibiting a color that makes a complementary color pair with a reference color exhibited by the primary color rays.

19. The lighting device according to claim 18, wherein the second complementary color member is disposed on a light source non-opposed end among ends of the light guide plate other than a light entering end of the light guide plate including the light entering surface.

20. The lighting device according to claim 19, wherein the light source non-opposed end includes a light source non-opposed adjacent end that includes an adjacent end surface adjacent to the light entering surface.

21. The lighting device according to any one of claims 18 to 20, wherein
the primary light rays from the light source are blue light rays,
the wavelength converting member contain at least green phosphors and red phosphors as the phosphors,
the green phosphors are configured to emit green light rays as the secondary light rays when excited by the blue light rays that are the primary light rays,
the red phosphors are configured to emit red light rays as the secondary light rays when excited by the blue light rays that are the primary light rays, and
the second complementary color member exhibits yellow.

22. A lighting device comprising:
a light source;
a chassis holding the light source and including a light exiting portion having an opening on a light exiting side to open toward an outside;
a wavelength converting member disposed to cover the light exiting portion and containing phosphors for converting light rays from the light source to light rays with other wavelengths; and
a retroreflector disposed to at least partially overlap a peripheral portion of the wavelength converting member but not a center portion of the wavelength converting member when the wavelength converting member is sectioned into the center portion and the peripheral portion, the retroreflector being configured to retroreflect some of the light rays to a side opposite from the light exiting side.

23. The lighting device according to claim 22, wherein the retroreflector is disposed to overlap the wavelength converting member on the light exiting side.

24. The lighting device according to claim 22 or 23, further comprising a positioning portion for positioning the wavelength converting member and the retroreflector, wherein
the wavelength converting member includes a first mating positioning portion that contacts the positioning portion, and
the retroreflector includes a second mating positioning portion disposed to correspond with the first mating portion and to contact the positioning portion.

25. The lighting device according to any one of claims 22 to 24, further comprising:
a light guide plate disposed on a side opposite from the light exiting side relative to the wavelength converting member, the light guide plate including:
a light entering end surface that is one of end surfaces through which light rays from the light source enter; and
a light exiting plate surface that is one of plate surfaces through which light rays exit; and
a frame supporting an outer edge portion of the light guide plate from the light exiting side, wherein
the retroreflector includes a portion that overlaps the frame and a portion disposed inner than an inner edge of the frame.

26. The lighting device according to claim 25, wherein
the end surfaces of the light guide plate excluding the light entering end surface are configured as non-light-entering end surfaces through which the light rays from the light source do not directly enter, and
the retroreflector is disposed to overlap at least sections of the peripheral portion of the wavelength converting member parallel to the non-light-entering end surfaces.

27. The lighting device according to any one of claims 22 to 26, wherein
the chassis includes a bottom disposed on a side opposite from a light emitting surface side of the light source,
the lighting device further comprising a reflection member configured to reflect light rays from the light source, the reflection member comprising at least:
a bottom-side reflecting portion disposed along the bottom; and
a projected reflecting portion projecting from the bottom-side reflecting portion to the light exiting side,
the wavelength converting member is disposed opposite and away from a light emitting surface of the light source on the light exiting side, and
the retroreflector is disposed outer than an outer edge of the projected reflecting portion not to overlap the projected reflecting portion.

28. The lighting device according to any one of claims 22 to 27, wherein
the light source is configured to emit blue light rays, and
the wavelength converting member contains at least either a combination of green phosphors and red phosphors or yellow phosphors as the phosphors,
the green phosphors are configured to convert the blue light rays to green light rays through wavelength conversion,
the red phosphors are configured to convert the blue light rays to red light rays through wavelength conversion, and
the yellow phosphors are configured to convert the blue light rays to yellow light rays through wavelength conversion.

29. The lighting device according to any one of claims 22 to 28, wherein the wavelength converting member contains quantum dot phosphors as the phosphors.

30. A display device comprising:
the lighting device according to any one of claims 1 to 29; and
a display panel configured to display an image using light from the lighting device.

31. The display device according to claim 30, wherein the display panel is a liquid crystal display panel.

32. A television device comprising the display device according to claim 30 or 31.
